(19) Europäisches Patentamt
European Patent Office
Office européen des brevets

(11) EP 2 400 124 B1

(12) **EUROPEAN PATENT SPECIFICATION**

(45) Date of publication and mention of the grant of the patent:
**15.05.2013 Bulletin 2013/20**

(21) Application number: **09840328.0**

(22) Date of filing: **18.02.2009**

(51) Int Cl.:
***F01N 3/08*** *(2006.01)* ***F01N 3/20*** *(2006.01)*

(86) International application number:
**PCT/JP2009/052795**

(87) International publication number:
**WO 2010/095221 (26.08.2010 Gazette 2010/34)**

(54) **EXHAUST GAS PURIFICATION SYSTEM FOR INTERNAL COMBUSTION ENGINE**

ABGASREINIGUNGSSYSTEM FÜR VERBRENNUNGSMOTOR

SYSTÈME D'ÉPURATION DE GAZ D'ÉCHAPPEMENT POUR MOTEUR À COMBUSTION INTERNE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**28.12.2011 Bulletin 2011/52**

(73) Proprietor: **Honda Motor Co., Ltd.**
**Minato-ku**
**Tokyo 107-8556 (JP)**

(72) Inventors:
- **YASUI, Yuji**
  **Wako-shi**
  **Saitama 351-0193 (JP)**
- **KAWASUMI, Ikue**
  **Wako-shi**
  **Saitama 351-0193 (JP)**
- **FISCHER, Michael**
  **OFFENBACH/AM MAIN 63073 (DE)**

(74) Representative: **Feller, Frank et al**
**Weickmann & Weickmann**
**Postfach 860 820**
**81635 München (DE)**

(56) References cited:
**WO-A2-2009/135021**
**JP-A- H08 509 795**
**JP-A- 2001 027 113**
**JP-A- 2005 127 256**
**JP-A- 2005 240 811**
**JP-A- 2008 240 716**
**JP-A- 2008 303 842**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

TECHNICAL FIELD

The present invention relates to an exhaust gas purification system for an internal combustion engine, and particularly relates to an exhaust gas purification system for an internal combustion engine that is provided with a selective reduction catalyst that reduces NOx in the exhaust under the presence of a reducing agent.

BACKGROUND ART

Conventionally, as one exhaust gas purification system to purifying NOx in exhaust, a system has been proposed in which a selective reduction catalyst selectively reducing NOx in the exhaust using a reducing agent such as ammonia is provided in an exhaust channel. For example, with an exhaust gas purification system of urea addition type, urea water is supplied from an upstream side of the selective reduction catalyst, ammonia is generated from this urea water by thermal decomposition or hydrolysis due to the heat of the exhaust, and the NOx in the exhaust is selectively reduced by this ammonia. In addition to such a system of urea addition type, a system has also be proposed that generates ammonia by heating an ammonia compound such as ammonia carbonate, and directly adds this ammonia. A system of urea addition type will be explained hereinafter.

With such a selective reduction catalyst, in a case of the injection amount of the urea water being less than an optimum amount, the NOx reduction rate declines from the ammonia being consumed in the reduction of NOx being insufficient, and in a case of being larger than this optimum amount, the ammonia that has become surplus in the reduction of NOx is discharged. As a result, appropriately controlling the injection amount of urea water has been important in an exhaust gas purification system provided with a selective reduction catalyst. Therefore, in Patent Document 1 and Patent Document 2, systems are exemplified that estimate a NOx reduction rate of a selective reduction catalyst, and control an injection amount of the urea water based on this estimation.

With the exhaust gas purification system of Patent Document 1, the NOx concentration on a downstream side of the selective reduction catalyst is detected, and the composition of the exhaust flowing into the selective reduction catalyst, more specifically, the ratio of NO and $NO_2$ is estimated from the NOx concentration thus detected and the operating state of the internal combustion engine. Furthermore, based on this composition of the exhaust, the NOx reduction rate of the selective reduction catalyst is estimated and the injection amount of urea water is controlled.

In addition, with the exhaust gas purification system of Patent Document 2, the temperature of the catalyst is detected as an amount relating to the NOx reduction rate of the selective reduction catalyst, and the injection amount of urea water is controlled based on this temperature.

However, the NOx reduction rate of the selective reduction catalyst changes not only according to the above such composition of the exhaust and temperature of the selective reduction catalyst, but also according to the degradation state of the selective reduction catalyst. In addition, there is variability in purification performance between individual units. In addition to this, in a case of ammonia having been stored in the selective reduction catalyst, the NOx reduction rate of the selective reduction catalyst changes upon appearance due to the optimum amount of urea water differing. Therefore, it is difficult to always optimally control the injection amount of urea water with exhaust gas purification systems such as those exemplified in Patent Documents 1 and 2.

Consequently, a technique is considered below that more directly detects the NOx reduction rate of the selective reduction catalyst, and controls the injection amount of urea water based on this.

FIG. 32 is a schematic diagram showing a configuration of a conventional exhaust gas purification system 80.

As shown in FIG. 32, an oxidation catalyst 83, urea injection valve 85 that injects urea water that is stored in a urea tank 84 into an exhaust channel 82, and a selective reduction catalyst 86 that reduces NOx in the exhaust under the presence of ammonia are provided in sequence from an upstream side to a downstream side in the exhaust channel 82 of an engine 81. In addition, a temperature sensor 87 that detects a temperature of the selective reduction catalyst 86 and a NOx sensor 88 that detects a NOx concentration on a downstream side of the selective reduction catalyst 86 are provided as sensors for observing the purification performance of the selective reduction catalyst.

With this exhaust gas purification system 80, for example, the NOx concentration of exhaust discharged from the engine 81 is estimated according to a map set in advance, and the injection amount of urea water by way of the urea injection valve 85 is determined based on this NOx concentration and the catalyst temperature detected by the temperature sensor 87. In particular, herein, degradation of the selective reduction catalyst 86 can be estimated based on a difference between the NOx concentration detected by the NOx sensor 88 and the NOx concentration of exhaust thus estimated. With this exhaust gas purification system, it has been possible to correct the injection amount of urea water in accordance with the degradation state of the selective reduction catalyst 86 estimated in the above way.

JP2008-240716 describes an exhaust gas purification system for an internal combustion engine including a selective reduction catalyst that is provided in an exhaust channel of the internal combustion engine and reduce NOx in exhaust flowing through the exhaust channel under the presence of $NH_3$; a reducing agent supply means for supplying urea into the exhaust channel at an upstream side of the selective reduction catalyst; a NOx sensor for detecting a NOx and $NH_3$ in exhaust flowing in the exhaust channel downstream of the selective storage amount target value; and a maximum storage capacity estimated value calculating means for calculating an estimated value of a maximum storage capacity, which changes according to a temperature of the selective reduction catalyst.

With the system of JP2008-240716, it is determined whether or not $NH_3$ is saturating the selective reduction catalyst based on the detection value of the the NOx sensor during low-speed operation, and in the case of having determined as being saturated, the storage amount target value is corrected in a decreasing direction.

WO2009/135021 describes an exhaust gas purification system for an internal combustion engine including a selective reduction catalyst that is provided in an exhaust channel of the internal combustion engine and reduce NOx in exhaust flowing through the exhaust channel under the presence of $NH_3$; a reducing supply means for supplying a $NH_3$ or urea into the exhaust channel at an upstream side of the selective reduction catalyst; a reducing agent detection means for detecting a $NH_3$ concentration in exhaust flowing in the exhaust channel downstream of the selective reduction catalyst; a storage amount estimated value calculating means for calculating an estimated value of a $NH_3$ storage amount; a first input component calculating means for calculating a first input component of a supply amount of urea by the reducing agent supply means, so that the estimated value of the $NH_3$ storage amount matches a predetermined storage amount target value; a maximum storage capacity estimated value calculating means for calculating an estimated value of a maximum storage capacity, which changes according to a temperature of the selective reduction catalyst; and a storage amount target value setting means for setting the storage amount target value in a vicinity of the estimated value of the maximum storage capacity.

Patent Document 1: Japanese Unexamined Patent Application Publication No. 2006-274986
Patent Document 2: Japanese Unexamined Patent Application Publication No. 2004-100700
Patent Document 3: Japanese Patent Application with Publication number JP2008-240716
Patent Document 4: International Application WO2009/135021

## DISCLOSURE OF THE INVENTION

### Problems to be Solved by the Invention

FIG. 33 shows relationships between a NOx concentration and ammonia concentration in exhaust downstream of the selective reduction catalyst and the output value of the NOx sensor for the aforementioned conventional exhaust gas purification system. More specifically, FIG. 33 shows, in sequence from the upper graph, relationships between the NOx concentration of exhaust downstream of the selective reduction catalyst, the ammonia concentration of exhaust downstream of the selective reduction catalyst, and the output value of the NOx sensor, with the urea injection amount.

When the injection amount of urea water increases, the NOx reduction rate of the selective reduction catalyst rises due to the ammonia generated in the selective reduction catalyst also increasing. As a result, the NOx concentration downstream of the selective reduction catalyst decreases accompanying the injection amount of urea water increasing, as shown in FIG. 33. In addition, when exceeding the urea water injection amount shown by the star, the NOx concentration is substantially constant irrespective of the urea water injection amount. In other words, the urea water of an amount exceeding the star indicates being surplus relative to reducing the NOx generated.

In addition, herein, the ammonia generated from the urea water that is surplus is not consumed in the reduction of NOx, and is either stored in the selective reduction catalyst or discharged to downstream of the selective reduction catalyst. Therefore, as shown in FIG. 33, the ammonia concentration of exhaust downstream of the selective reduction catalyst increases, when exceeding the injection amount of urea water indicated by the star. It should be noted that the ammonia generated in this way is stored in the selective reduction catalyst, and the discharging to downstream thereof is referred to hereinafter as "ammonia slip".

Since the urea water injection amount indicated by the star in FIG. 33 can both minimize the NOx concentration and ammonia concentration in the above way, it is the optimum injection amount for this exhaust gas purification system.

However, as shown in FIG. 33, the output value of the NOx sensor shows a downward convex characteristic in which the output value of this optimum injection amount is a minimum point. This is because existing NOx sensors in the detection principles thereof are sensitive not only to NOx, but also to ammonia.

Therefore, it is impossible to determine whether the injection amount of urea water is insufficient relative to the optimum injection amount or excessive, with only the output value from the NOx sensor. As a result, it is difficult to constantly supply urea water of an optimum amount and maintain the NOx reduction rate of the selective reduction catalyst to be high, while suppressing the discharge of ammonia.

The present invention was made taking into account of the aforementioned points, and has an object of providing an exhaust gas purification system of an internal combustion engine provided with a selective reduction catalyst that can suppress discharging of reducing agent to downstream of the selective reduction catalyst, while maintaining a high NOx reduction rate.

The objective is solved by an exhaust gas purification system according to claim 1. Means for Solving the Problems

An exhaust gas purification system according to the present invention includes a selective reduction catalyst (231) that is provided in an exhaust channel (11) of the internal combustion engine (1) and reduces NOx in exhaust flowing through the exhaust channel under the presence of a reducing agent. The exhaust gas purification system includes: a reducing agent supply means (25) for supplying a reducing agent or an additive serving as a source of a reducing agent into the exhaust channel at an upstream side of the selective reduction catalyst; a reducing agent detection means (26) for detecting a reducing agent concentration or reducing agent amount in exhaust flowing in the exhaust channel downstream of the selective reduction catalyst; a storage amount estimated value calculating means (3, 61) for calculating, with an amount of reducing agent stored in the selective reduction catalyst as a storage amount, an estimated value ($ST_{UREA_FB}$) of the storage amount; a first input component calculating means (3, 62, 62A, 62B) for calculating a first input component ($G_{UREA_ST}$) of a supply amount ($G_{UREA}$) of the reducing agent or additive by the reducing agent supply means, so that the estimated value ($ST_{UREA_FB}$) of the storage amount matches a predetermined storage amount target value ($ST_{UREA-TRGT}$); a maximum storage capacity estimated value calculating means (3, 9) for calculating, with an amount of reducing agent that can be stored by the selective reduction catalyst as a maximum storage capacity, an estimated value ($ST_{UREA_MAX}$) of the maximum storage capacity, which changes according to a temperature of the selective reduction catalyst; and a storage amount target value setting means (3, 5) for setting the storage amount target value ($ST_{UREA_TRGT}$) in a vicinity of the estimated value of the maximum storage capacity ($ST_{UREA-}$MAX). The maximum storage capacity estimated value calculating means calculates the estimated value ($ST_{UREA_MAX}$) of the maximum storage capacity so that a detected value ($NH3_{CONS}$) of the reducing agent detection means matches a predetermined slip target value ($NH3_{CONS_TRGT}$).

According to this configuration, the selective reduction catalyst is provided in the exhaust channel, and further, the reducing agent supply means for supplying a reducing agent or an additive serving as a source of the reducing agent from an upstream side of the selective reduction catalyst, and the reducing agent detection means for detecting a reducing agent concentration or reducing agent amount in the exhaust on a downstream side of the selective reduction catalyst are also provided therein. In addition, the storage amount target value is set in the vicinity of the estimated value of the maximum storage capacity, and the first input component of the supply amount of the reducing agent supply means is calculated so that the estimated value of the storage amount matches the storage amount target value. Herein in particular, the maximum storage capacity estimated value calculating means calculates the estimated value of the maximum storage capacity so that the detected value of the reducing agent detection means matches the slip target value.

Even in a case of the maximum storage capacity of the selective reduction catalyst changing due to degradation thereof, it is thereby possible to accurately calculate the estimated value of the maximum storage capacity in accordance with this change. Therefore, it is possible to maintain the NOx reduction rate of the selective reduction catalyst to be high, while maintaining the storage amount of the selective reduction catalyst in the vicinity of the maximum storage capacity thereof to suppress reducing agent from discharging to downstream of the selective reduction catalyst.

In addition, in a case of providing an oxidation catalyst or diesel particulate filter on an upstream side of the selective reduction catalyst, the $NO_2$ production capacity changes due to degradation of this oxidation catalyst and filter, and the reaction probability of ammonia with NOx in the f selective reduction catalyst may change. Even in such a case, the above change in reaction probability is perceived as a change in the maximum storage capacity of the selective reduction catalyst, and the estimated value of the maximum storage capacity can be calculated appropriately; therefore, the NOx reduction rate of the selective reduction catalyst can be maintained to be high, while maintaining the storage amount of the selective reduction catalyst at an appropriate value to suppress reducing agent from being discharged to downstream of the selective reduction catalyst.

The maximum storage capacity estimated value calculating means (9) includes: a reference value calculating means (91) for calculating, with at least either a parameter ($T_{SCR}$) correlated to a temperature of the selective reduction catalyst and a parameter ($V_{EX-HAT}$) correlated to an amount of exhaust flowing into the selective reduction catalyst as a reference parameter, a reference value ($ST_{UREA_BS}$) of the maximum storage capacity based on the reference parameter; a correction value calculating means (96) for defining a plurality of regions that overlap each other in a space setting the reference parameters as a domain, and for calculating a correction value ($U_{ij}$, i = 1 to 4, j = 1 to 4) for the reference value in each of the regions so that an error parameter ($ENH3_{CONS}$) related to the slip target value ($NH3_{CONS_TRGT}$) of the detected value ($NH3_{CONS}$) of the reducing agent detection means becomes "0"; and an estimated value calculating means (99) for calculating an estimated value ($ST_{UREA_MAX}$) of the maximum storage capacity based on a reference value ($ST_{UREA-BS}$) calculated by the reference value calculating means and a correction value ($U_{ij}$, i = 1 to 4, j = 1 to 4) of each of the regions calculated by the correction value calculating means.

According to this configuration, at least either of the parameter correlated to the temperature of the selective reduction catalyst and the parameter correlated to the amount of exhaust gas flowing into the selective reduction catalyst are defined as reference parameters, and the reference value of the maximum storage capacity is calculated based on this reference parameter. In addition, a plurality of regions in a space setting this reference parameter as a base is defined, and a correction value for the reference value is calculated in each of these regions so that the error parameter becomes "0". The estimated value of the maximum storage capacity is calculated based on the correction value of each of these regions.

It is thereby possible to accurately calculate the estimated value of the maximum storage capacity in the regions for all temperatures of the selective reduction catalyst and amounts of the exhaust gas flowing into the selective reduction catalyst. As a result, even in a case of the selective reduction catalyst degrading and the oxidation catalyst or diesel particulate filter on an upstream side of the selective reduction catalyst degrading, as described above, the NOx reduction rate of the selective reduction catalyst can be maintained to be high while maintaining the storage amount of the selective reduction catalyst at an appropriate value to suppress reducing agent from discharging to downstream of the selective reduction catalyst.

The maximum storage capacity estimated value calculating means (9) further includes a weighting function setting means (95) for setting in each of the regions a weighting function ($W_{ij}$) defining the reference parameters as a domain and having a value that is not "0" in each of the plurality of regions, respectively. The weighting functions (Wij) are normalized so that a sum total function thereof ($\Sigma\Sigma W_{ij}$) is a predetermined value. The correction value (Uij, i = 1 to 4, j = 1 to 4) of each of the regions is calculated based on a value ($WEVNS_{ij}$) calculated by multiplying the error parameter ($ENH3_{CONS}$) by a value of the weighting function of each of the regions.

According to this configuration, the correction value for each of the above-mentioned regions is calculated based on the value arrived at by multiplying the error parameter by the value of the weighting function set for each region. In a case of the error parameter having a value, i.e. in a case of believing that error occurs in the estimated value of the maximum storage capacity, only the correction value of a region to correct this error can be appropriately updated. Therefore, the estimated value of the maximum storage capacity can be more accurately calculated.

The estimated value calculating means (99) calculates an estimated value ($ST_{UREA_MAX}$) of a maximum storage capacity by multiplying a reference value ($ST_{UREA_BS}$) calculated by the reference value calculating means by a coefficient (KVNS) calculated based on a sum total ($\Sigma\Sigma W_{ij}U_{ij}$) over all regions of products between the correction value ($U_{ij}$) and a value of the weighting function ($W_{ij}$).

According to this configuration, the estimated value of the maximum storage capacity is calculated by multiplying the above-mentioned reference value by the coefficient calculated based on the sum total over all the regions of the products between the correction values and the values of the weighting functions. It is thereby possible to calculate the estimated value of successive maximum storage capacities in all regions defined by the reference parameters. Therefore, when the reference parameters change, the supply amount of the reducing agent supply means can also be made to continuously change, a result of which the NOx purification rate of the selective reduction catalyst can be maintained to be high while suppressing reducing agent from discharging to downstream of the selective reduction catalyst.

It is preferable for the estimated value calculating means (99) to calculate an estimated value ($ST_{UREA_MAX}$) of a maximum storage capacity by adding a reference value ($ST_{UREA_BS}$) calculated by the reference value calculating means to a coefficient (DVNS) calculated based on a sum total ($\Sigma\Sigma W_{ij}U_{ij}$) over all regions of products between the correction value ($U_{ij}$) and a value of the weighting function.

According to this configuration, the estimated value of the maximum storage capacity is calculated by adding the above-mentioned reference value to the coefficient calculated based on the sum total over all the regions of the products between the correction value and the value of the weighting functions. It is thereby possible to calculate the estimated value of successive maximum storage capacities in all regions defined by the reference parameters. Therefore, when the references parameters change, the supply amount of the reducing agent supply means can also be made to continuously change, a result of which the NOx purification rate of the selective reduction catalyst can be maintained to be high while suppressing reducing agent from discharging to downstream of the selective reduction catalyst.

It is preferable for the maximum storage capacity estimated value calculating means (9) to further include a response surface setting means (94) for setting a response surface weighting an amount of change in the maximum storage capacity due to degradation of the selective reduction catalyst, with the reference parameters as a domain. The estimated value ($ST_{UREA_MAX}$) of the maximum storage capacity is calculated based on a value (EVNS) calculated by multiplying the error parameter ($ENH3_{CONS}$) by a value ($W_{RSM}$) of the response surface.

Incidentally, in addition to error in the estimated value of the first maximum storage capacity, various causes are considered as causes of the error parameter having a value. As a result, when calculating the estimated value of the maximum storage capacity based on an error parameter that is not weighted, miscorrection may occur in the estimated value of the maximum storage capacity due to the above-mentioned other causes.

According to this configuration, the estimated value of the maximum storage capacity is calculated based on a value, which is arrived at by multiplying the error parameter by the value of the response surface weighting the amount of change in the maximum storage capacity due to degradation of the selective reduction catalyst. By weighting the amount of change in the maximum storage capacity due to degradation by the error parameter in this way, the aforementioned such miscorrection of the estimated value can be suppressed and the estimated value of the maximum storage capacity can be accurately calculated over all regions of the reference parameters.

BRIEF DESCRIPTION OF THE DRAWINGS

FIG. 1 is a schematic view showing configurations of an internal combustion engine and an exhaust gas purification system thereof according to one embodiment of the present invention;
FIG. 2 provides illustrations showing relationships between NOx concentration, ammonia concentration, and storage amount of ammonia in the selective reduction catalyst;
FIG. 3 is a graph showing a relationship between the storage capacity and temperature of the selective reduction catalyst;
FIG. 4 provides graphs showing the time courses of the temperature of the selective reduction catalyst and the storage amount thereof while driving;
FIG. 5 provides graphs showing the time courses of the temperature of the selective reduction catalyst and the storage amount thereof while driving;
FIG. 6 provides graphs showing the change in NOx reduction rate in a case of controlling the urea injection amount so that the output value of the ammonia sensor closely converges to the target ammonia concentration;
FIG. 7 provides graphs showing the change in NOx reduction rate in a case of loosely controlling the urea injection amount to an extent that the output value of the ammonia sensor stay within a target ammonia slip range centered around the target ammonia concentration;
FIG. 8 is an illustration schematically showing a relationship between a supply state of urea water and the change in the storage amount of the selective reduction catalyst;
FIG. 9 is an illustration schematically showing a state in which ammonia slip has occurred in the selective reduction catalyst;
FIG. 10 is a block diagram showing a configuration of a module that determines the urea injection amount by a urea injection valve according to the embodiment;
FIG. 11 provides graphs showing relationships of the load of the engine, NOx concentration upstream of the selective reduction catalyst, detected ammonia concentration, urea injection amount, and NOx reduction rate in a case of executing feedback control of the urea injection amount according to only the slip occurrence compensation input calculating portion and the storage compensation input calculating portion according to the embodiment;
FIG. 12 is a graph showing an example of a control map for determining an FF injection amount according to the embodiment;
FIG. 13 provides graphs showing relationships of the load of the engine, NOx concentration upstream of the selective reduction catalyst, detected ammonia concentration, urea injection amount, and NOx reduction rate in a case of executing urea injection control using the feed-forward controller according to the embodiment;
FIG. 14 is a graph showing an example of a control map for determining the exhaust gas volume according to the embodiment;
FIG. 15 is a block diagram showing the configuration of a first mode of the storage compensation input calculating portion according to the embodiment;
FIG. 16 is a graph showing the time course of the estimated value of a first storage amount calculated by the first mode of the storage compensation input calculating portion according to the embodiment;
FIG. 17 is a block diagram showing the configuration of a second mode of the storage compensation input calculating portion according to the embodiment;
FIG. 18 is a block diagram showing the configuration of a third mode of the storage compensation input calculating portion according to the embodiment;
FIG. 19 provides graphs showing the time courses of the estimated value of the first storage amount calculated by the storage compensation input calculating portion according to the embodiment;
FIG. 20 is a block diagram showing the configuration of the maximum storage capacity estimating portion according to the embodiment;
FIG. 21 is a graph showing an example of a control map for determining a reference value of a first maximum storage capacity according to the embodiment;
FIG. 22 is a graph showing an example of a response surface according to the embodiment;
FIG. 23 is a graph showing four first weighting functions with the detected value of the catalyst temperature sensor defined as the domain according to the embodiment;
FIG. 24 is a graph showing four second weighting factors with the estimated value of the exhaust gas volume defined as the domain according to the embodiment;

FIG. 25 is a graph showing 16 weighting functions with two reference parameters defined as the domain according to the embodiment;
FIG. 26 provides graphs illustrating the sequence of calculating the estimated value of the first maximum storage capacity by the maximum storage capacity estimating portion according to the embodiment;
FIG. 27 is a flowchart showing the sequence of urea injection control processing executed by the ECU according to the embodiment;
FIG. 28 shows the simulation results in a case of defining the selective reduction catalyst as a new article and forcibly setting the adaptation coefficient to "1";
FIG. 29 shows the simulation results in a case of defining the selective reduction catalyst as a new article and calculating the adaptation coefficient by an algorithm according to the embodiment;
FIG. 30 shows the simulations results in a case of defining the selective reduction catalyst as a degraded article and forcibly setting the adaptation coefficient to "1";
FIG. 31 shows the simulation results in a case of defining the selective reduction catalyst as a degraded article and calculating the adaptation coefficient by an algorithm according to the embodiment;
FIG. 32 is a schematic view showing the configuration of a conventional exhaust gas purification system; and
FIG. 33 provides graphs showing relationships of the NOx concentration and ammonia concentration of exhaust gas downstream of the selective reduction catalyst with the output value of the NOx sensor for the conventional exhaust gas purification system.

EXPLANATION OF REFERENCE NUMERALS

1 Engine (internal combustion engine)
11 Exhaust channel
2 Exhaust gas purification system
23 Urea selective reduction catalyst (selective reduction catalyst)
231 First selective reduction catalyst (selective reduction catalyst, first selective reduction catalyst)
232 Second selective reduction catalyst (second selective reduction catalyst)
25 Urea injection device (reducing agent supply means)
26 Ammonia sensor (reducing agent detection means)
3 ECU (storage amount estimated value calculating means, first input component calculating means, second input component calculating means, supply amount determination means, storage amount target value setting means, maximum storage capacity estimated value calculating means, reference value calculating means, response surface setting means, weighting function setting means, correction value calculating means, estimated value calculating means)
4 Feed-forward controller
5 Storage amount target value setting portion (storage amount target value setting means)
6 Storage compensation input calculating portion
61 Control target (storage amount estimated value calculating means)
62, 62A, 62B Controller (first input component calculating means)
7 Slip occurrence compensation input calculating portion (second input component calculating means)
8 Adder (supply amount determination means)
9 Maximum storage capacity estimating portion (maximum storage capacity estimated value calculating means)
91 Reference value calculating portion (reference value calculating means)
92 Adaptive corrector
94 Response surface setting portion (response surface setting means)
95 Weighting function setting portion (weighting factor setting means)
96 Compensation amount calculating portion (Correction value calculating means)
97 Adaptation coefficient calculating portion
99 Estimated value calculating portion (estimated value calculating means)

PREFERRED MODE FOR CARRYING OUT THE INVENTION

An embodiment of the present invention will be explained hereinafter while referring to the drawings.
FIG. 1 is a schematic diagram showing a configuration of an internal combustion engine (hereinafter referred to as "engine") 1 and an exhaust gas purification system 2 thereof according to one embodiment of the present invention. The engine 1 is a gasoline engine of lean-burn operating type or a diesel engine, and is mounted in a vehicle, which is not illustrated.

The exhaust gas purification system 2 is configured to include an oxidation catalyst 21 provided in an exhaust channel 11 of the engine 1, a urea selective reduction catalyst 23 that is provided in the exhaust channel 11 and purifies nitrogen oxides (hereinafter referred to as "NOx") in the exhaust flowing through this exhaust channel 11 under the presence of ammonia as a reducing agent, a urea injection device 25 that supplies urea water serving as the source of the reducing agent into the exhaust channel 11 on an upstream side of the urea selective reduction catalyst 23, and an electronic control unit (hereinafter referred to as "ECU") 3.

The urea injection device 25 is provided with a urea tank 251 and a urea injection valve 253.

The urea tank 251 stores the urea water, and is connected to the urea injection valve 253 via a urea supply pipe 254 and a urea pump, which is not illustrated. A urea level sensor 255 is provided to this urea tank 251. This urea level sensor 255 detects the water level of the urea water in the urea tank 251, and outputs a detection signal substantially proportional to this water level to the ECU 3.

The urea injection valve 253 is connected to the ECU 3, operates according to a control signal from the ECU 3, and injects urea water into the exhaust channel 11 in accordance with this control signal. In other words, urea injection control is executed.

The oxidation catalyst 21 is provided more on an upstream side in the exhaust channel 11 than the urea selective reduction catalyst 23 and the urea injection valve 253, converts NO in the exhaust to $NO_2$ thereby promoting reduction of NOx in the urea selective reduction catalyst 23.

The urea selective reduction catalyst 23 is configured to include a first selective reduction catalyst 231, and a second selective reduction catalyst 232 that is provided in the exhaust channel 11 more on a downstream side than the first selective reduction catalyst 231. This first selective reduction catalyst 231 and second selective reduction catalyst 232 each selectively reduce NOx in the exhaust under an atmosphere in which a reducing agent such as ammonia is present. More specifically, when urea water is injected by the urea injection device 25, this urea water is thermally decomposed or hydrolyzed due to the heat of the exhaust and ammonia is generated as the reducing agent. The ammonia thus generated is supplied to the first selective reduction catalyst 231 and the second selective reduction catalyst 232, and NOx in the exhaust is selectively reduced by this ammonia.

A detailed configuration of this urea selective reduction catalyst 23 will be explained in detail later while referring to FIGS. 2 and 3.

In addition to an ammonia sensor 26, catalyst temperature sensor 27, and NOx sensor 28, a crank angle position sensor 14, accelerator opening sensor 15, and urea remaining amount warning light 16 are connected to the ECU 3.

The ammonia sensor 26 detects a concentration of ammonia in exhaust (hereinafter referred to as "ammonia concentration") $NH3_{CONS}$ in the exhaust channel 11 between the first selective reduction catalyst 231 and the second selective reduction catalyst 232, and supplies a detection signal substantially proportional to the ammonia concentration $NH3_{CONS}$ thus detected to the ECU 3.

The catalyst temperature sensor 27 detects a temperature (hereinafter referred to as "catalyst temperature") $T_{SCR}$ of the first selective reduction catalyst 231, and supplies a detection signal substantially proportional to the catalyst temperature $T_{SCR}$ thus detected to the ECU 3.

The NOx sensor 28 detects a concentration of NOx in the exhaust (hereinafter referred to as "NOx concentration") $NOX_{CONS}$ flowing into the first selective reduction catalyst 231, and supplies a detection signal substantially proportional to the NOx concentration $NOX_{CONS}$ thus detected to the ECU 3.

The crank angle position sensor 14 detects a rotation angle of the crank shaft of the engine 1 as well as generating a pulse at every 1° of crank angle, and supplies this pulse signal to the ECU 3. A revolution speed NE of the engine 1 is calculated based on this pulse signal by the ECU 3. The crank angle position sensor 14 further generates a cylinder discriminating pulse at a predetermined crank angle position of a specific cylinder, and supplies this to the ECU 3.

The accelerator opening sensor 15 detects a depression amount (hereinafter referred to as "accelerator opening") AP of the accelerator pedal, which is not illustrated, of the vehicle, and supplies a detection signal substantially proportional to the accelerator opening AP thus detected to the ECU 3. A demanded torque TRQ of the engine 1 is calculated in accordance with this accelerator opening AP and revolution speed NE by the ECU 3. Hereinafter, this demanded torque TRQ is set as a load parameter representing the load of the engine 1.

The urea remaining amount warning light 16 is provided in the instrument panel of the vehicle, for example, and illuminates in response to the remaining amount of urea water in the urea tank 251 having decreased past a predetermined remaining amount. With this, the fact that the remaining amount of urea water in the urea tank 251 has decreased is warned to the driver.

The ECU 3 is provided with an input circuit having functions such as of shaping input signal waveforms from every kind of sensor, correcting the voltage levels to predetermined levels, and converting analog signal values to digital signal values, and a central processing unit (hereinafter referred to as "CPU"). In addition to this, the ECU 3 is provided with a storage circuit that stores every kind of calculation program executed by the CPU, calculation results, and the like, and an output circuit that outputs control signals to the engine 1, urea injection valve 253, and the like.

Detailed Configuration of Urea Selective Reduction Catalyst

Incidentally, the first selective reduction catalyst 231 and the second selective reduction catalyst 232 of the aforementioned urea selective reduction catalyst 23 each have a function of reducing NOx in the exhaust with ammonia generated from urea, as well as having a function of storing only a predetermined amount of the ammonia thus generated.

Hereinafter, the ammonia amount stored in the first selective reduction catalyst 231 is set as a first storage amount, and the ammonia amount that can be stored in the first selective reduction catalyst 231 is set as a first maximum storage capacity. In addition, an ammonia amount stored in the second selective reduction catalyst 232 is set as a second storage amount, and an ammonia amount that can be stored in the second selective reduction catalyst 232 is set as a second maximum storage capacity.

The ammonia stored in this way is also consumed as appropriate in the reduction of NOx in the exhaust. As a result, the NOx reduction rates of the selective reduction catalysts 231 and 232 increase in accordance with the first and second storage amounts increasing. In addition, in a case such as the supply amount of the urea water being small relative to the amount of NOx generated, the ammonia stored will be consumed in the reduction of NOx by serving to compensate for an insufficiency of this urea water.

Herein, in a case of the ammonia generated exceeding the maximum storage capacities of each of the selective reduction catalysts 231 and 232, the ammonia generated is discharged to a downstream side of each of the selective reduction catalysts 231 and 232. In this way, the ammonia is not stored in each of the selective reduction catalysts 231 and 232, and the discharging to the downstream sides of each is hereinafter referred to as "ammonia slip".

In order to continuously maintain the NOx reduction rate to be high in such selective reduction catalysts 231 and 232, it is preferable to continuously maintain a state in which ammonia of amounts close to the maximum storage capacities of each is stored in these selective reduction catalysts 231 and 232.

However, in such a state in which ammonia of an amount close to the maximum storage capacity is stored, it is easy for ammonia slip to occur, and there is concern that ammonia may be discharged out of the vehicle. In particular, it is preferred that ammonia slip of the second selective reduction catalyst 232 is prevented as much as possible.

Taking account of these points, optimal forms of the first selective reduction catalyst 231 and the second selective reduction catalyst 232 for maintaining a high NOx reduction rate and preventing ammonia from discharging out of the vehicle will be explained while referring to FIGS. 2 to 5 and comparing with other layouts.

FIG. 2 shows relationships between the NOx concentration, ammonia concentration, and storage amount of ammonia in the selective reduction catalyst. More specifically, FIG. 2(a) shows the above relationships of a comparative example in which a NOx sensor is provided on a downstream side of one selective reduction catalyst (1 BED + NOx sensor layout). FIG. 2(b) shows the above relationships of a comparative example in which an ammonia sensor is provided on a downstream side of one selective reduction catalyst (1 BED + $NH_3$ sensor layout). FIG. 2(c) shows the above relationships of the present embodiment in which an ammonia sensor is provided between two selective reduction catalysts (the first selective reduction catalyst and the second selective reduction catalyst)(2 BED + MID-$NH_3$ sensor layout).

In the layout shown in FIG. 2(a), for example, the NOx reduction rate in the selective reduction catalyst can be maintained to be high by controlling the supply amount of urea water based on the output from the NOx sensor. In a case of performing such control, the amount of NOx discharged from the engine and the supply amount of urea water necessary in the reduction of this NOx are in a roughly balanced state. Due to this, the ammonia generated from the urea water is consumed in the reduction of NOx, and the ammonia stored in the selective reduction catalyst and the ammonia slip of the selective reduction catalyst are both small. As a result, the storage amount of ammonia in the selective reduction catalyst has little change, and there is a tendency to be small relative to the maximum storage capacity thereof.

In other words, in a case of having appropriately performed the aforementioned such control of the supply amount of urea water, the storage amount of the selective reduction catalyst will be kept approximately constant. However, in a case of the operating state of the engine suddenly changing, in a case of the selective reduction catalyst degrading over time, in a case of the temperature suddenly changing, or the like, the supply amount of urea water may shift from the appropriate amount, and there is concern that the storage amount will become "0" and the NOx reduction rate will declines, or the storage amount will saturate and excessive ammonia slip will occur. Therefore, with the layout shown in FIG. 2(a), control of the storage amount of ammonia is difficult, and it is difficult to both continuously improve the reduction rate of NOx and prevent ammonia slip.

In the layout shown in FIG. 2(b), in a case of performing control of the supply amount of urea water so as to maintain the NOx reduction rate to be high based on the output from the ammonia sensor, it is necessary to maintain a state in which slight ammonia slip occurs in order to obtain an output from the ammonia sensor, As a result, the storage amount of ammonia in the selective reduction catalyst normally enters a saturated state, as shown in FIG. 2(b).

In a case of having maintained a state in which the storage amount is saturated in this way, for example, the NOx reduction rate during transition until the generation of ammonia ends can be continuously maintained to be high due to ammonia stored, even if in a state in which NOx of a great amount is temporarily generated by sudden acceleration of the vehicle such that the generation of ammonia for reducing this NOx cannot keep pace.

With the layout of the present embodiment shown in FIG. 2(c), the ammonia sensor 26 is provided between the first selective reduction catalyst 231 and the second selective reduction catalyst 232.

With this layout, it is possible to maintain a state in which ammonia from the first selective reduction catalyst 231 is saturated, similarly to the aforementioned layout shown in FIG. 2(b), by performing control of the supply amount of urea water so that the value of the ammonia concentration detected by the ammonia sensor 26 is a value larger than "O". With this, a high NOx reduction rate can be maintained in the first selective reduction catalyst 231.

In addition, even if the reduction of NOx is insufficient in the first selective reduction catalyst 231, it is possible to maintain the NOx reduction rate to be high with the first selective reduction catalyst 231 and the second selective reduction catalyst 232 overall, similarly to the layout shown in FIG. 2(a), by causing this residual NOx and ammonia slipped to the second selective reduction catalyst 232 to react in the second selective reduction catalyst 232.

In addition, it is possible to continuously maintain the NOx reduction rate to be high during transition, such as during the aforementioned sudden acceleration of the vehicle until the generation of ammonia ends, similarly to the layout shown in FIG. 2(b), by making a state in which the ammonia is saturated in the first selective reduction catalyst 231.

In addition, although ammonia slip occurs with the first selective reduction catalyst 231 in this way, the ammonia discharged from this first selective reduction catalyst 231 is either stored in the second selective reduction catalyst 232 or consumed in the reduction of NOx in the second selective reduction catalyst 232. With this, it is possible to maintain a high NOx reduction rate for the first selective reduction catalyst 231 and the second selective reduction catalyst 232 overall, as well as suppressing ammonia from being discharged downstream of the second selective reduction catalyst 232.

With the present embodiment, a state in which ammonia slip occurs in the first selective reduction catalyst 231 is intentionally realized in order to maintain the NOx reduction rate of the overall system to be high in this way. As a result, a catalyst having ammonia storage capacity and NOx purification ability of an extent that can reduce NOx in the exhaust gas using this ammonia slipped from the first selective reduction catalyst 231 is used as the second selective reduction catalyst 232.

FIG. 3 is a graph showing a relationship between the maximum storage capacity and the temperature of the selective reduction catalyst. In FIG. 3, the solid line 3a shows a relationship between the maximum storage capacity and catalyst temperature of the catalyst before degradation, and the dotted line 3b shows a relationship between the maximum storage capacity and catalyst temperature of the catalyst after degradation.

As shown in FIG. 3, the maximum storage capacity of the selective reduction catalyst varies depending on the catalyst temperature. More specifically, the maximum storage capacity decreases following a rise in catalyst temperature. Therefore, in a case of the vehicle transitioning from a low load operating state to a high load operating state and the catalyst temperature transitioning from a low temperature (e.g., 200°C) state to a high temperature (e.g., 500°C) state, if a state in which ammonia saturates the first selective reduction catalyst is maintained as described above, for example, ammonia slip will occur in the first selective reduction catalyst depending on this temperature differential. In this case, in order to prevent the ammonia from discharging to downstream of the second selective reduction catalyst, the second maximum storage capacity is preferably designed to be larger than the difference between during the maximum and minimum in the first maximum storage capacity. By designing in this way, ammonia released from the first selective reduction catalyst is stored in the second selective reduction catalyst, whereby ammonia can be suppressed from discharging to downstream thereof.

In addition, as shown in FIG. 3, the maximum storage capacity decreases with degradation of the catalyst. As a result, the amount of ammonia that is released in response to a sudden change in operating state and catalyst temperature is larger before degradation than after degradation. Therefore, the second maximum storage capacity is preferably designed to be larger than the difference between the maximum and minimum (maximum capacity difference) of the first maximum storage capacity of the first selective reduction catalyst before degradation. With this, it is possible to prevent ammonia slip of the second selective reduction catalyst more reliably.

FIGS. 4 and 5 are graphs showing the time courses of the temperature of the selective reduction catalyst and the storage amount thereof during driving. More specifically, FIG. 4 shows the above-mentioned time courses for an exhaust gas purification system adopting the layout of FIG. 2(a). FIG. 5 shows the above-mentioned time courses for an exhaust gas purification system of the present embodiment adopting the layout of FIG. 2(c).

As shown in FIG. 4, in the case of adopting the layout of FIG. 2(a), since it is difficult to control the storage amount of ammonia in the selective reduction catalyst, it is considered that variability in the actual storage amount occurs depending on the history of the operating conditions.

Herein, a case is assumed of the engine being restarted after having been stopped for a long time (on the order of 4 hours). In such a case, until the selective reduction catalyst reaches the activation temperature thereof (160°C to 180°C), NOx in the exhaust can be purified by consuming ammonia stored in the selective reduction catalyst during the previous time driving.

However, if variability occurs in the storage amount of ammonia as described above, variability will also occur in the storage amount immediately after engine startup. As a result, the ammonia required in order to purify NOx immediately after engine startup may be lacking, as shown in FIG. 4. Therefore, in the case of adopting the layout of FIG. 2(a), variability may occur in the purification of NOx immediately after engine startup.

In contrast, with the exhaust gas purification system of the present embodiment adopting the layout of FIG. 2(c), the first storage amount can be stably maintained at the first maximum storage capacity irrespective of the history of operating conditions, and the second storage amount can also be maintained near the second storage capacity, as shown in FIG. 5. As a result, during engine startup, ammonia of the amount required in the purification of NOx can be stored in the selective reduction catalyst. Therefore, according to the exhaust gas purification system of the present embodiment adopting the layout of FIG. 2(c), the discharge of NOx can always be stably suppressed.

Configuration of Module Determining Urea Injection Amount

Next, the detailed configuration of the module that determines the urea injection amount $G_{UREA}$ (supply amount of urea water) by the urea injection valve will be explained while referring to FIGS. 6 to 10.

Before explaining the configuration of the module of the present embodiment in detail, first, two problems observed by the inventors of the present application upon performing urea injection control based on the output value $NH3_{CONS}$ of the ammonia sensor will be considered, and the control algorithm for solving these problems will be explained.

(1) Detection Resolution of Ammonia Sensor

As described above, existing NOx sensors in the detection principles thereof are sensitive not only to NOx, but also to ammonia. On the other hand, it is known that an ammonia sensor sensitive to only ammonia is developable without being sensitive to NOx. However, there is a limit in detection resolution for such an ammonia sensor, and further, there is individual variability in this detection resolution, which changes with degradation over time. As a result, it is difficult to closely control the output value $NH3_{CONS}$ from the ammonia sensor to the target ammonia concentration $NH3_{CONS_TRGT}$.

(2) Responsiveness Contrast between NOx Reduction Rate and Ammonia Slip

In addition to the problems related to the detection resolution of the above such ammonia sensor, there is the problem of the responsiveness contrast between the NOx reduction rate and ammonia slip to the urea injection amount $G_{UREA}$ in the selective reduction catalyst. More specifically, the NOx reduction rate of the selective reduction catalyst has a smaller response lag and larger sensitivity to the urea injection amount $G_{UREA}$, than the ammonia slip of this selective reduction catalyst.

FIG. 6 shows the change of NOx reduction rate in a case of the urea injection amount $G_{UREA}$ having been controlled so that an output value $NH3_{CONS}$ of the ammonia sensor closely converges with a target ammonia concentration $NH3_{CONS_TRGT}$. In FIG. 6, the top shows the time course of the detected ammonia concentration $NH3_{CONS}$, the middle shows the time course of the urea injection amount $G_{UREA}$, and the bottom shows the time course of the NOx reduction rate.

As shown in FIG. 6, when the output value $NH3_{CONS}$ of the ammonia sensor suddenly increases, and, in response to the occurrence of ammonia slip having been detected, the urea injection amount $G_{UREA}$ for suppressing this ammonia slip decreases, the NOx reduction rate declines considerable before the ammonia slip is suppressed. At this time, when the urea injection amount $G_{UREA}$ is made to continuously decrease so that the detected ammonia concentration $NH3_{CONS}$ closely converges with the target ammonia concentration $NH3_{CONS_TRGT}$, the NOx reduction rate further declines.

Due to the responsiveness contrast existing between the NOx reduction rate and ammonia slip, it is difficult to achieve both an improvement in NOx reduction rate and suppression of ammonia slip in this way, even if applying a highly responsive feedback algorithm.

FIG. 7 provides graphs showing the change in NOx reduction rate in a case of loosely controlling the urea injection amount $G_{UREA}$ to an extent that the output value $NH3_{CONS}$ of the ammonia sensor stays within a target ammonia slip range $RNH3_{CONS_TRGT}$ centered around the target ammonia concentration $NH3_{CONS_TRGT}$.

As shown in FIG. 7, the change in the urea injection amount $G_{UREA}$ can be decreased in a case of loosely controlling the urea injection amount $G_{UREA}$ to an extent that the output value $NH3_{CONS}$ of the ammonia sensor stays within the target ammonia slip range $RNH3_{CONS_TRGT}$.

In particular, in a case of control having been performed such that the detected ammonia concentration closely converges with the target ammonia concentration as shown by the dotted line, if excessive ammonia slip occurs, the urea injection amount will decrease drastically in order to suppress this ammonia slip, and the NOx reduction rate may decline drastically due to this. According to the present embodiment, during the occurrence of such excessive ammonia slip, the amount of decrease in the urea injection amount $G_{UREA}$ is decreased, and the NOx reduction rate can be maintained to be high due to this.

In order to maintain the NOx reduction rate to be high in this way, it is preferable to perform urea injection amount that is loose to the extent that the output value $NH3_{CONS}$ of the ammonia sensor stays within the target ammonia slip range $RNH3_{CONS_TRGT}$. Therefore, the control algorithm for performing such urea injection control will be considered in further detail.

FIG. 8 is an illustration schematically showing a relationship between a supply state of urea water and the change in the storage amount of the selective reduction catalyst. As shown in FIG. 8, the supply state of urea water is classified into the three states of optimum state (FIG. 8(a)), supply excess (over-dosing) state (FIG. 8(b)), and supply deficit (under-dosing) state (FIG. 8(c)), according to the size of the urea injection amount in relation to the NOx concentration in the exhaust flowing into the selective reduction catalyst.

The optimum state shown in FIG. 8(a) refers to a state in which the urea injection amount relative to the NOx flowing into the selective reduction catalyst is ideal, i.e. a state in which the amount of ammonia that can most efficiently reduce the NOx in the exhaust and the amount of ammonia generated from the urea water supplied match substantially. In this case, the storage amount does not change.

The supply excessive state shown in FIG. 8(b) refers to a state in which the urea injection amount relative to the NOx flowing into the selective reduction catalyst is excessive, i.e. a state in which the amount of ammonia generated from the urea water supplied is greater than the amount that can most efficiently reduce NOx in the exhaust. In this case, the surplus ammonia is stored in the selective reduction catalyst. Therefore, in such a supply excess state, the storage amount increases.

The supply deficit state shown in FIG. 8(c) refers to a state in which the urea injection amount relative to the NOx flowing into the selective reduction catalyst is insufficient, i.e. a state in which the amount of ammonia generated from the urea water supplied is less than the amount that can most efficiently reduce NOx in the exhaust. In this case, the deficit is compensated from the ammonia stored. Therefore, in such a supply deficit state, the storage amount decreases.

FIG. 9 is an illustration schematically showing a state in which ammonia slip has occurred in the selective reduction catalyst.

As shown in FIG. 9, when urea water is excessively supplied in a state in which the storage amount of the selective reduction catalyst has reached the maximum storage amount, the ammonia that has become surplus not contributing to the reduction of NOx discharges to downstream without being stored in the selective reduction catalyst.

With a system such as that shown in aforementioned FIG. 2(a), the state in which such ammonia slip occurs is not preferable since the ammonia would be discharged outside the vehicle. However, with the present embodiment providing two selective reduction catalysts such as that shown in FIG. 2(c), a state such as that shown in FIG. 9 is considered to be a preferred state in order to improve the NOx reduction rate in the first selective reduction catalyst. Furthermore, in addition thereto, the NOx reduction rate in the second selective reduction catalyst can be improved by causing ammonia slip to occur in the first selective reduction catalyst. Specifically, to raise the NOx reduction rate overall, combining the first selective reduction catalyst and the second selective reduction catalyst, it is preferable to maintain a state such as that shown in FIG. 9.

Hereinafter, the configuration of the module that determines the urea injection amount so as to realize the state shown in FIG. 9 in the first selective reduction catalyst, i.e. so as to maintain a state in which the storage amount of the first selective reduction catalyst is saturated and ammonia slip occurs, will be explained.

FIG. 10 is a block diagram showing the configuration of the module that determines the urea injection amount $G_{UREA}$ (supply amount of urea water). The functions of this module are realized by the ECU 3 provided with the aforementioned such hardware configuration.

The module shown in FIG. 10 is configured to include the feed-forward controller 4, slip occurrence compensation input calculating portion 7, storage compensation input calculating portion 6, and adder 8.

Depending on the amount of NOx in the exhaust, which changes according to the operating state of the engine, the feed-forward controller 4 calculates the feed-forward injection amount (hereinfter referred to as "FF injection amount") $G_{UREA_FF}$ for the urea injection amount $G_{UREA}$, as the control input for controlling so that the NOx reduction rate of the selective reduction catalyst maintains the maximum value. In other words, this FF injection amount $G_{UREA_FF}$ intuitively corresponds to the amount of the overall urea injection amount $G_{UREA}$ generating the ammonia of the amount required in order to reduce the NOx in the exhaust flowing into the first selective reduction catalyst (refer to FIG. 9). The detailed configuration of this feed-forward controller 4 will be described while referring to FIGS. 11 to 13 later.

The slip occurrence compensation input calculating portion 7 calculates the compensation input (hereinafter referred to as slip occurrence compensation input") $G_{UREA_SLP}$ for the urea injection amount $G_{UREA}$ as a control input for controlling so as to maintain a state in which ammonia slip occurs in the first selective reduction catalyst. In other words, this slip occurrence compensation input $G_{UREA_SLP}$ intuitively corresponds to the amount of the overall urea injection amount $G_{UREA}$ generating ammonia that causes slip from the first selective reduction catalyst (refer to FIG. 9). The detailed configuration of this slip occurrence compensation input calculating portion 7 will be described while referring to FIG. 14 later.

The maximum storage capacity estimating portion 9 calculates the estimated value $ST_{UREA_MAX}$ of the first maximum storage capacity.

The storage amount target value setting portion 5 sets the target value $ST_{UREA_TRGT}$ of the first storage amount based on the estimated value $ST_{UREA_MAX}$ of the first maximum storage capacity calculated by the maximum storage capacity estimating portion 9.

The storage compensation input calculating portion 6 calculates the compensation input (hereinafter referred to as "storage compensation input") $G_{UREA_ST}$ for the urea injection amount $G_{UREA}$ as a control input for controlling so as to maintain a state in which the storage amount of the first selective reduction catalyst is saturated. In other words, this storage compensation input $G_{UREA_ST}$ intuitively corresponds to the amount of the overall urea injection amount $G_{UREA}$ generating the ammonia of the amount required in order to cause the first storage amount to match the first maximum storage capacity (refer to FIG. 9). The detailed configuration of this storage compensation input calculating portion 6 will be described while referring to FIGS. 15 to 26 later.

The adder 8 determines the urea injection amount $G_{UREA}$ by adding the FF injection amount $G_{UREA_FF}$ calculated by the feed-forward controller 4, the slip occurrence compensation input $G_{UREA_SLP}$ calculated by the slip occurrence compensation input calculating portion 7, and the storage compensation input $G_{UREA_ST}$ calculated by the storage compensation input calculating portion 6.

$$G_{UREA}(k) = G_{UREA_FF}(k) + G_{UREA_ST}(k) + G_{UREA_SLP}(k) \qquad (1)$$

Herein, the notation (k) is a notation expressing discretized time, and indicates being data detected or calculated every predetermined control cycle. In other words, in a case of the symbol (k) being data detected or calculated in a current control timing, the notation (k-1) indicates being data detected or calculated in a previous control timing. It should be noted that the notation (k) is omitted as appropriate in the following explanation. Configuration of Feed-forward Controller

Next, a detailed configuration of the feed-forward control will be explained while referring to FIGS. 10, and 11 to 13.

As exemplified by the aforementioned problem (2), the responsiveness to the urea injection amount $G_{UREA}$ of the NOx reduction rate and ammonia slip of the selective reduction catalyst are different. More specifically, the ammonia slip of the selective reduction catalyst has a response lag to the urea injection amount $G_{UREA}$ that is larger than the NOx reduction rate of this selective reduction catalyst. The problem observed by the inventors of the present application when performing urea injection control in such a selective reduction catalyst will be explained.

(3) Decline in NOx Reduction Rate due to Change in Operating State of Engine

FIG. 11 provides graphs showing relationships of the load of the engine, NOx concentration upstream of the selective reduction catalyst, detected ammonia concentration $NH3_{CONS}$, urea injection amount $G_{UREA}$, and NOx reduction rate in a case of executing feedback control of the urea injection amount according to only the aforementioned slip occurrence compensation input calculating portion 6 and the storage compensation input calculating portion 6 according to the embodiment.

As shown in FIG. 11, when the load of the engine rises from time $t_1$ to $t_2$, the NOx concentration on an upstream side of the selective reduction catalyst rises accompanying this rise in load. In this case, in order to prevent the NOx reduction rate from declining, it is necessary to increase the urea injection amount $G_{UREA}$ in accordance with the rise in NOx concentration. However, in a case of performing feed-back control based on the output value $NH3_{CONS}$ of the ammonia sensor, which has a larger response lag than the NOx reduction rate, the increased amount of urea injection amount $G_{UREA}$ will be delayed more than in the ideal case. As a result, the NOx reduction rate may decline.

Taking the above such problems into account, the FF injection amount $G_{UREA_FF}$ is calculated by the feed-forward controller based on the operating state of the engine in the present embodiment. More specifically, with this feed-forward controller, the FF injection amount $G_{UREA_FF}$ is determined by way of a map search based on the revolution speed NE of the engine, and the load parameter TRQ representing the load of the engine, for example, as the operating state of the engine.

FIG. 12 is a graph showing an example of a control map for determining the FF injection amount $G_{UREA_FF}$.

As shown in FIG. 12, with this control map, the FF injection amount $G_{UREA_FF}$ is determined to be a higher value with the revolution speed NE or the load parameter TRQ of the engine becoming larger.

This is because, with a larger load parameter TRQ of the engine, the NOx emission amount increases from the combustion temperature of the air-fuel mixture rising, and with a higher revolution speed NE of the engine, the NOx emission amount per unit time increases.

FIG. 13 shows relationships between an engine load, NOx concentration upstream of the selective reduction catalyst, detected ammonia concentration $NH3_{CONS}$, urea injection amount $G_{UREA}$, and NOx reduction rate in a case of urea injection control having been executed using the above such feed-forward controller of the present embodiment.

It should be noted that, in FIG. 13, the solid lines show control results of the present embodiment, and the dotted lines show control results in a case of feed back control having been performed as explained above.

As shown in FIG. 13, when the load of the engine rises from time $t_1$ to $t_2$, the NOx concentration on an upstream side of the selective reduction catalyst rises accompanying this rise in load. Herein, when the load of the engine rises, the FF injection amount $G_{UREA-FF}$, which was appropriately set in accordance with the increase in NOx, is calculated by the feed-forward controller, whereby the urea injection amount $G_{UREA}$ can be maintained at an ideal injection amount without lag occurring. With this, the NOx reduction rate can be maintained at a maximum value.

In addition, by maintaining the NOx reduction rate to be high in this way, it is possible to prevent large fluctuation in the urea injection amount $G_{UREA}$, as well as to protect against the occurrence of ammonia slip and a decline in the NOx reduction rate accompanying such a fluctuation.

Configuration of Slip Occurrence Compensation input Calculating Portion

Next, the detailed configuration of the slip occurrence compensation input calculating portion 7 will be explained while referring to FIGS. 10 and 14.

As explained above, with the present embodiment, a state in which ammonia slip occurs in the first selective reduction catalyst is intentionally realized in order to maintain the NOx reduction rate to be high. However, when the FF injection amount $G_{UREA_FF}$ and storage compensation input $G_{UREA_ST}$ are attempted to be accurately calculated, ammonia slip does not occur in the first selective reduction catalyst, and thus the detected value $NH3_{CONS}$ of the ammonia sensor becomes approximately "0".

Therefore, the slip occurrence compensation input calculating portion 7 calculates the slip occurrence compensation input $G_{UREA_SLP}$ so that the detected value $NH3_{CONS}$ of the ammonia sensor matches a predetermined slip target value $NH3_{CONS_TRGT}$ set to a predetermined value of at least "0". More specifically, this slip occurrence compensation input calculating portion 7 calculates the slip occurrence compensation input $G_{UREA_SLP}$ according to the following procedure.

First, the ammonia amount $GNH3_{SLIP}$ required in order to realize the slip target value $NH3_{CONS_TRGT}$ is calculated using the following formulas (2) and (3). In the following formulas (2) and (3), $V_{EX_HAT}(k)$ represents the exhaust volume of the engine, and a value estimated based on the control map shown in FIG. 14 described later is used thereas, for example. In addition, $K_{VG}$ is a coefficient having units of density of ammonia in the exhaust.

$$V_{NH3_SLIP}(k) = \frac{NH3_{CONS_TRGT}}{10000} V_{EX_HAT}(k) \qquad (2)$$

$$GNH3_{SLIP}(k) = K_{VG}\ V_{NH3_SLIP}(k) \qquad (3)$$

The slip occurrence compensation input $G_{UREA_SLP}$ is calculated by multiplying a conversion factor $KNH3_{UREA}$ by the ammonia mass $GNH3_{SLIP}$, as shown in the following formula (4). Herein, the conversion factor $KNH3_{UREA}$ is a factor for converting between the supply amount of urea water and the amount of ammonia that can be generated from this supply amount. A different value is used for this conversion factor $KNH3_{UREA}$ according to the injection amount characteristic of the urea injection valve, the probability of the hydrolysis reaction, and the like.

$$G_{UREA_SLP}(k) = K_{NH3_UREA}\ GNH3_{SLP}(k) \qquad (4)$$

In addition, for the aforementioned exhaust gas volume $V_{EX_HAT}(k)$, a value estimated according to a map search based on the load parameter TRQ and the engine revolution speed NE is used, for example.

FIG. 14 is a graph showing an example of a control map for determining the exhaust gas volume $V_{EX_HAT}$. As shown in FIG. 14, the exhaust gas volume $V_{EX_HAT}$ is determined with this control map to be a larger value accompanying the engine revolution speed NE or load parameter TRQ increasing.

It should be noted that, although the slip occurrence compensation input $G_{UREA_SLP}$ is calculated based on the above formulas (2) to (4) in the present embodiment, it is not limited thereto. For example, the control map that determines the slip occurrence compensation input $G_{UREA_SLP}$ such that the detected value $NH3_{CONS}$ of the ammonia sensor is made to match the slip target value $NH3_{CONS_TRGT}$ may be set based on a predetermined experiment, and the slip occurrence compensation input $G_{UREA_SLIP}$ may be calculated according to this control map.

In addition, although the slip occurrence compensation input $G_{UREA_SLP}$ is calculated based on the exhaust gas volume $V_{EX_HAT}$ in the present embodiment, it is not limited thereto. For example, not only the exhaust gas volume $V_{EX_HAT}$, but a parameter correlated to the amount of exhaust flowing into the first selective reduction catalyst can be used. Configuration of Slip Compensation input Calculating Portion 6

Next, the detailed configuration of the storage compensation input calculating portion 6 will be explained while referring to FIGS. 8, 10 and 15 to 19.

The storage compensation input calculating portion 6 calculates an estimated value of the first storage amount based on an ammonia storage model of the first selective reduction catalyst such as that shown in the aforementioned FIG. 8, and calculates the storage compensation input $G_{UREA_ST}$ so that this estimated value matches the target value $ST_{UREA_TRGT}$ of the first storage amount set by the storage amount target value setting portion 5. Three forms will be explained as specific configurations of such a storage compensation input calculating portion 6.

FIG. 15 is a block diagram showing a first form of the storage compensation input calculating portion.

This storage compensation input calculating portion is configured to include a control object 61 that is configured based on the aforementioned such ammonia storage model, and a controller 62 of this control object 61.

The control object 61 sets a surplus urea injection amount $D_{UREA}$ representing the supply amount of urea water that becomes surplus when reducing NOx in the exhaust as a control input, and sets an estimated value $ST_{UREA_FB}$ of a first storage amount of the first selective reduction catalyst as a control output. More specifically, this control object 61 is configured by an integrator 611 that estimates the estimated value $ST_{UREA_FB}$ of the first storage amount of the first selective reduction catalyst by successively adding the ammonia amount stored or successively subtracting the ammonia amount consumed, based on the surplus urea injection amount $D_{UREA}$.

First, a surplus urea injection amount $D_{UREA}(k)$ is calculated by way of an adder 63 by subtracting an ideal urea injection amount $G_{UREA_IDEAL}(k\text{-}1)$, which is a urea injection amount necessary to reduce NOx in the exhaust flowing into the first selective reduction catalyst, from the urea injection amount $G_{UREA}(k)$, as shown in the following formula (5). Herein, in a case of the detected value $NH3_{CONS}(k\text{-}1)$ of the ammonia sensor being at least "0", i.e. in a case of ammonia slip occurring in the first selective reduction catalyst, in addition to the ideal urea injection amount $G_{UREA_IDEAL}(k\text{-}1)$, the slip occurrence compensation input $G_{UREA_SLP}(k\text{-}1)$ representing the supply amount of urea water required in order to generate the ammonia slipped from the first selective reduction catalyst is also subtracted from the urea injection amount $G_{UREA}(k)$.

It should be noted that this urea injection amount $G_{UREA}(k)$ is calculated by way of an adder 64 adding the slip occurrence compensation input $G_{UREA_SLP}(k)$ and FF injection amount $G_{UREA_FF}(k)$ to the storage compensation input $G_{UREA_ST}(k)$ calculated by the controller 62.

$$D_{UREA}(k)=\begin{cases} G_{UREA}(k-1)-G_{UREA_IDEAL}(k-1) & (NH3_{CONS}(k-1)<0) \\ G_{UREA}(k-1)-G_{UREA_SLP}(k-1)-G_{UREA_IDEAL}(k-1) & (NH3_{CONS}(k-1)\geq 0) \end{cases} \quad (5)$$

It should be noted that, in place of the above formula (5), the surplus urea injection amount $D_{UREA}(k)$ may be calculated using the following formula (6), which is rewritten based on the above formulas (2) to (4).

$$D_{UREA}(k)=G_{UREA}(k-1)-G_{UREA_IDEAL}(k-1)-K_{VG}\,\frac{NH3_{CONS}(k-1)}{10000}\,V_{EX_HAT}(k-1) \quad (6)$$

Herein, the ideal urea injection amount $G_{UREA_IDEAL}(k)$ is calculated by multiplying the NOx concentration $NOX_{CONS}$ of exhaust flowing into the first selective reduction catalyst detected by the NOx sensor with a conversion factor $K_{CONV_NOX_UREA}$ that switches the injection amount necessary to reduce NOx, as shown in the following formula (7).

$$G_{UREA_IDEAL}(k) = \begin{cases} K_{CONV_NOX_UREA}\ NOX_{CONS}(k) \\ G_{UREA_FF}(k) \qquad \text{(Case without NOx sensor)} \end{cases} \qquad (7)$$

In addition, herein, in a case of there being no NOx sensor to detect the NOx concentration of exhaust flowing into the first selective reduction catalyst, the FF injection amount $G_{UREA_FF}(k)$ may be set as the ideal urea injection amount $G_{UREA_IDEAL}(k)$.

With the integrator 611, the estimated value $ST_{UREA_FB}(k)$ of the first storage amount is calculated based on the surplus urea injection amount $D_{UREA}(k)$ fluctuating the first storage amount, by combining the integration operator relating to the time k of such a surplus urea injection amount $D_{UREA}$ (k) as shown in the following formula (8), with limit processing on such a first storage amount as shown in the following formula (9).

$$ST_{UREA_FB_TMP}(k) = ST_{UREA_FB_TMP}(k-1) + D_{UREA}(k) \qquad (8)$$

$$ST_{UREA_FB}(k) = \begin{cases} ST_{UREA_MAX}(k) & (ST_{UREA_MAX}(k) < ST_{UREA_FB_TMP}(k)) \\ ST_{UREA_FB_TMP}(k) & (ST_{UREA_FB_TMP}(k) > 0) \\ 0 & (ST_{UREA_FB_TMP}(k) \leqq 0) \end{cases} \qquad (9)$$

The limit processing of the lower limit relative to the estimated value $ST_{UREA_FB}$ (k) of the first storage amount, i.e. processing such that $ST_{UREA_FB}$ (k) becomes "0" at the minimum, is conducted with the above formula (9).

In addition, the limit processing of the upper limit relative to the estimated value $ST_{UREA_FB}$ (k) of the first storage amount, i.e. processing such that $ST_{UREA_FB}$ (k) becomes an estimated value $ST_{UREA_MAX}$ (k) of the first maximum storage capacity, is conducted with the above formula (9).

The controller 62 calculates the storage compensation input $G_{UREA-ST}$ (k) such that the estimated value $ST_{UREA-FB}$ (k) of the first storage amount converges with the target value $ST_{UREA_TRGT}$ (k) of the first storage amount by PI control.

With the controller 62, the target value $ST_{UREA_TRGT}$ (k) of the first storage amount is subtracted by way of an adder 621 from the estimated value $ST_{UREA-FB}$ (k) of the first storage amount, as shown in the following formula (10), and this is defined as the first storage deviation $E_{ST}$ (k).

$$E_{ST}(k) = ST_{UREA_FB}(k) - ST_{UREA_TRGT}(k) \qquad (10)$$

Next, a proportional term $G_{UREA_ST\text{-}P}$ (k) is calculated by way of a multiplier 622 by multiplying the proportional gain $KP_{ST}$ by the first storage amount deviation $E_{ST}$ (k), as shown in the following formula (11).

$$G_{UREA_ST_P}(k) = KP_{ST}\ E_{ST}(k) \qquad (11)$$

In addition, an integral term $G_{UREA-ST-I}$ (k) is calculated by way of an integrator 623 and multiplier 624 by multiplying the integral gain $KI_{ST}$ by the time integration value of the first storage amount deviation $E_{ST}$ (k), as shown in the following formula (12).

$$G_{UREA_ST_I}(k) = KI_{ST} \sum_{i=0}^{k} E_{ST}(i) \quad (12)$$

Next, the sum of the proportional term $G_{UREA-ST-P}$ (k) and the integral term $G_{UREA_ST-I}$ (k) is calculated by an adder 625 as shown in the following formula (13), and this is defined as the storage compensation input $G_{UREA-ST}$ (k).

$$G_{UREA_ST}(k) = G_{UREA_ST_P}(k) + G_{UREA_ST_I}(k) \quad (13)$$

FIG. 16 is a graph showing the time course of the estimated value $ST_{UREA_FB}$ of the first storage amount calculated by the first form of the above storage compensation input calculating portion. In FIG. 16, the solid line represents the estimated value $ST_{UREA_FB}$ of the first storage amount, and the dotted line represents the estimated value $ST_{UREA_FB}$ of the first storage amount in a case of assuming that the first selective reduction catalyst is not saturated.

As explained above, the control object 61 of the storage model is a structure including the integrator 611; therefore, the proportional term $G_{UREA_ST_P}$ of the controller 62 becomes the integral term, and the integral term $G_{UREA_ST_I}$ becomes an integral term for an integral value. As a result, the integral term $G_{UREA_ST_I}$ represents overshoot behavior, and in a case of the estimated value $ST_{UREA_FB}$ converging from below the target value $ST_{UREA_TRGT}$, large ammonia slip occurs, as shown by the dotted line in FIG. 16.

Therefore, the second form and third form of the storage compensation input calculating portion that solve such problems will be explained hereinafter.

FIG. 17 is a block diagram showing a configuration of the second form of the storage compensation input calculating portion. This storage compensation input calculating portion of the second form has a configuration of a controller 62A that is different from the first form shown in FIG. 15 described above.

This controller 62A is a controller using expanded PI control in which the integrator 611 of the control object 61 is treated as a part of the controller, as explained in detail later.

With the controller 62A, the target value $ST_{UREA-TRGT}$ (k) of the first storage amount is subtracted by the adder 621 from the estimated value $ST_{UREA_FB}$ (k) of the first storage amount, and this is defined as the first storage amount deviation $E_{ST}$ (k), as shown in the following formula (14).

$$E_{ST}(k) = ST_{UREA_FB}(k) - ST_{UREA_TRGT}(k) \quad (14)$$

In addition, with this controller 62A, the integrator 611 of the control object 61 is treated as a part of the controller, and the proportional term $G_{UREA_ST_P}$ (k) and the integral term $G_{UREA_ST_I}$ (k) are calculated taking into account that each is integrated later, as shown in the following formulas (15) and (16).

More specifically, the derivative value $E_{ST}$ (k) - $E_{ST}$ (k-1) of the first storage amount deviation is calculated by a delay computing unit 626 and an adder 627, and the product of the proportional gain $KP_{ST}$ multiplied by this derivative value by way of the multiplier 622 is defined as the proportional term $G_{UREA-ST-P}$ (k), as shown in the following formula (15).

In addition, the product of the integral gain $KI_{ST}$ being multiplied by the multiplier 624 by the first storage amount deviation $E_{ST}$ (k) is defined as the integral term $G_{UREA_ST_I}$ (k), as shown in the following formula (16).

$$G_{UREA_ST_P}(k) = KP_{ST}\,(E_{ST}(k) - E_{ST}(k-1)) \quad (15)$$

$$G_{UREA_ST_I}(k) = KI_{ST}\,E_{ST}(k) \quad (16)$$

Next, the sum of the proportional term $G_{UREA_ST_P}$ (k) and the integral term $G_{UREA_ST_I}$ (k) is calculated by the adder 625 as shown in the following formula (17), and this is defined as the storage compensation input $G_{UREA_ST}$ (k).

$$G_{UREA_ST}(k) = G_{UREA_ST_P}(k) + G_{UREA_ST_I}(k) \quad (17)$$

FIG. 18 is a block diagram showing a configuration of the third form of the storage compensation input calculating portion. This storage compensation input calculating portion of the third form has a configuration of a controller 62B that is different from the second form shown in the aforementioned FIG. 17.

This controller 62B is a controller in which the integrator 611 of the control object 61 is treated as a part of the controller similarly to the aforementioned controller 62A, and uses expanded I-P control giving the first storage value deviation $E_{ST}$ (k) only to the integral term.

With the controller 62B, the target value $ST_{UREA_TRGT}$ (k) of the first storage amount is subtracted by the adder 621 from the estimated value $ST_{UREA_FB}$ (k) of the first storage amount, as shown in the following formula (18), and this is defined as the first storage amount deviation $E_{ST}$(k).

$$E_{ST}(k) = ST_{UREA_FB}(k) - ST_{UREA_TRGT}(k) \quad (18)$$

Next, the product of multiplying the integral gain $KI_{ST}$ by the first storage amount deviation $E_{ST}$ (k) by way of the multiplier 624 is defined as the integral term $G_{UREA_ST_I}$ (k), as shown in the following formula (19).

$$G_{UREA_ST_I}(k) = KI_{ST}\ E_{ST}(k) \quad (19)$$

On the other hand, the derivative value of the estimated value of the first storage amount $ST_{UREA_FB}$ (k) - $ST_{UREA_FB}$ (k-1) is calculated by a delay computing unit 268 and an adder 629, and the product of multiplying the proportional gain $KP_{ST}$ by this derivative value by way of the multiplier 622 is defined as the proportional term $G_{UREA_ST_P}$ (k), as shown in the following formula (20).

$$G_{UREA_ST_P}(k) = KP_{ST}\ (ST_{UREA_FB}(k) - ST_{UREA_FB}(k-1)) \quad (20)$$

Next, as shown in the following formula (21), the sum of the proportional term $G_{UREA_ST_P}$ (k) and the integral term $G_{UREA_ST_I}$ (k) is calculated by the adder 625, and this is defined as the storage compensation input $G_{UREA_ST}$ (k).

$$G_{UREA_ST}(k) = G_{UREA_ST_P}(k) + G_{UREA_ST_I}(k) \quad (21)$$

FIG. 19 shows the time course of the estimated value $ST_{UREA_FB}$ of the first storage amount calculated by the above such storage compensation input calculating portion. In FIG. 19, the solid line represents the estimated value $ST_{UREA_FB}$ of the first storage amount, and the dotted line represents the estimated value $ST_{UREA_FB}$ of the first storage amount in a case of assuming that the first selective reduction catalyst is not saturated. In addition, FIG. 19(a) shows the control result according to the first form using PI control, FIG. 19(b) shows the control result according to the second form using expanded PI control, and FIG. 19(c) shows the control result according to the third form using expanded I-P control.

As shown in FIG. 19(b), in the case of using expanded PI control, the overshoot behavior of the estimated value $ST_{UREA_FB}$ relative to the target value $ST_{UREA_TRGT}$ which occurs in the case of using PI control is reduced.

As shown in FIG. 19(c), in the case of using expanded I-P control, the overshoot behavior of the estimated value $ST_{UREA_FB}$ relative to the target value $ST_{UREA_TRGT}$ is further reduced compared to the aforementioned case of using expanded PI control.

This is because, as shown in the above formula (20), the proportional term $G_{UREA_ST_P}$ is calculated based on the estimated value $ST_{UREA_FB}$ of the first storage amount and not the first storage amount deviation $E_{ST}$. In this case, the proportional term $G_{UREA_ST_P}$ does not operate so that the first storage amount deviation $E_{ST}$ becomes "0", but operates so that $ST_{UREA_FB}$ becomes "0", whereby overshoot of $ST_{UREA_FB}$ is suppressed. Configuration of Storage Amount Target Value Setting Portion 5

Next, the detailed configuration of the storage amount target value setting portion 5 will be explained while referring to FIG. 10.

The storage amount target value setting portion 5 sets the target value $ST_{UREA_TRGT}$ of the first storage amount to near the estimated value $ST_{UREA_MAX}$ of the first maximum storage capacity calculated by the maximum storage capacity estimating portion 9. By using the estimated value $ST_{UREA_MAX}$ of the first maximum storage capacity calculated by the aforementioned such maximum storage capacity estimating portion 9, it is possible to set the target value $ST_{UREA_TRGT}$ of the first storage amount to near the first maximum storage capacity, which varies depending on the temperature, degradation, variability in solids, and the like.

Herein, the frequency of ammonia slip occurrence in the first selective reduction catalyst can be increased by setting the target value $ST_{UREA_TRGT}$ of the first storage amount to a value somewhat larger than the estimated value $ST_{UREA_MAX}$ of the first maximum storage capacity, for example. In addition, the frequency of ammonia slip occurrence in the first selective reduction catalyst can be decreased by setting the target value $ST_{UREA_TRGT}$ of the first storage amount to a value somewhat smaller than the estimated value $ST_{UREA_MAX}$ of the first maximum storage capacity, for example.

Configuration of Maximum Storage Capacity Estimating Portion 9

Next, the detailed configuration of the maximum storage capacity estimating portion 9 will be explained while referring to FIGS. 10 and 20 to 26.

As shown in the aforementioned FIG. 3, the first maximum storage capacity varies depending on the temperature of the first selective reduction catalyst. In addition, such a temperature characteristic of the first maximum storage capacity changes depending on the degradation of the first selective reduction catalyst. The maximum storage capacity estimating portion 9 of the present embodiment appropriately calculates the estimated value $ST_{UREA_MAX}$ of the first maximum storage capacity according to the temperature and degradation state of the first selective reduction catalyst. The detailed configuration thereof will be explained hereinafter.

FIG. 20 is a block diagram showing the configuration of the maximum storage capacity estimating portion 9.

The maximum storage capacity estimating portion 9 is configured to include a reference value calculating portion 91 that calculates a reference value $ST_{UREA_BS}$ of the first maximum storage capacity, an adaptive corrector 92 that calculates an adaptation coefficient KVNS, and an estimated value calculating portion 99 that calculates an estimated value $ST_{UREA_MAX}$ of the first maximum storage capacity based on the reference value $ST_{UREA_BS}$ of the first maximum storage capacity and the adaptation coefficient KVNS. In other words, the maximum storage capacity estimating portion 9 calculates the first maximum storage capacity $ST_{UREA_BS}$ for a reference state of the first selective reduction catalyst and calculates the coefficient KVNS indicating shift from the above-mentioned reference state. Then, based on this reference value $ST_{UREA_BS}$ of the first maximum storage capacity and the adaptation coefficient KVNS, it calculates the estimated value $ST_{UREA_MAX}$ of the first maximum storage capacity considering the degradation state of the first selective reduction catalyst. Configuration of Estimated Value Calculating Portion 99

The estimated value calculating portion 99 calculates the estimated value $ST_{UREA_MAX}$ (k) of the first maximum storage capacity by multiplying the adaptation coefficient KVNS(k) calculated by the adaptive corrector 92 by the reference value $ST_{UREA_BS}$ (k) of the first maximum storage capacity calculated by the reference value calculating portion 91.

$$ST_{UREA_MAX}(k) = KVNS(k)\ ST_{UREA_BS}(k) \qquad (22)$$

Configuration of Reference Value Calculating Portion 91

The reference value calculating portion 91 calculates the reference value $ST_{UREA_BS}$ (k) of the first maximum storage capacity according to a map search, based on the two parameters of detected value $T_{SCR}$ of the catalyst temperature sensor and the estimated value $V_{EX_HAT}$ of the exhaust gas volume, for example. In the present embodiment, the two parameters of the detected value $T_{SCR}$ of the catalyst temperature sensor and the estimated value $V_{EX_HAT}$ of the exhaust gas volume are defined as reference parameters.

Herein, the reference value of the first maximum storage capacity indicates the first maximum storage capacity of the first selective reduction catalyst in the reference state. In addition, in the present embodiment, the reference state indicates the state of a new article prior to the first selective reduction catalyst degrading.

FIG. 21 is a graph showing an example of a control map for determining the reference value $ST_{UREA_BS}$ of the first maximum storage capacity.

As shown in FIG. 21, in this control map, the reference value $ST_{UREA_BS}$ of the first maximum storage capacity is set to a smaller value accompanying the temperature of the first selective reduction catalyst rising. In addition, the reference value $ST_{UREA_BS}$ of the first maximum storage capacity is set to a smaller value accompanying the exhaust gas volume increasing.

Configuration of Adaptive Corrector 92

Referring back to FIG. 20, the configuration of the adaptive corrector 92 will be explained in detail.

For example, the detected value $NH3_{CONS}$ of the ammonia sensor is maintained at the slip target value $NH3_{CONS_TRGT}$ in a case of the estimated value $ST_{UREA_MAX}$ of the first maximum storage capacity being able to accurately follow the actual change in the first maximum storage capacity due to degradation of the first selective reduction catalyst.

However, in a case of the estimated value $ST_{UREA_MAX}$ of the first maximum storage capacity being larger than the actual first maximum storage capacity, for example, excessive ammonia slip will occur in the first selective reduction catalyst, and the detected value $NH3_{CONS}$ of the ammonia sensor will greatly exceed the slip target value $NH3_{CONS_TRGT}$.

On the other hand, in a case of the estimated value $ST_{UREA_MAX}$ of the first maximum storage capacity being smaller than the actual first maximum storage capacity, the detected value $NH3_{CONS}$ of the ammonia sensor will not reach the slip target value $NH3_{CONS_TRGT}$. As a result, the NOx reduction rate of the overall system may decline.

Based on the above matters, the error between the detected value $NH3_{CONS}$ of the ammonia sensor and the slip target value $NH3_{CONS_TRGT}$ can be one criterion indicating the degradation state of the first selective reduction catalyst. Therefore, this adaptive corrector 92 calculates the error $ENH3_{CONS}$ (k) between the detected value $NH3_{CONS}$ (k) of the ammonia sensor and the slip target value $NH3_{CONS_TRGT}$ (k) using an adder 93, as shown in the following formula (23).

$$ENH3_{CONS}(k) = NH3_{CONS}(k) - NH3_{CONS_TRGT}(k) \qquad (23)$$

The adaptive corrector 92 calculates the adaptation coefficient KVNS so that this error $ENH3_{CONS}$ becomes "0", i.e. so that the detected value $NH3_{CONS}$ (k) of the ammonia sensor matches the slip target value $NH3_{CONS_TRGT}$ (k). More specifically, the adaptive corrector 92 includes the response surface setting portion 94, the multiplier 98, the weighting function setting portion 95, the correction value calculating portion 96, and the adaptation coefficient calculating portion 97 as the configuration calculating such an adaptation coefficient KVNS.

Configuration of Response Surface Setting Portion 94

Incidentally, the aforementioned error $ENH3_{CONS}$ is considered to occur in response to the estimated value $ST_{UREA_MAX}$ of the first maximum storage capacity shifting from the actual first maximum storage capacity as described above; however, besides this, various causes are considered such as error in the control map that determines the FF injection amount $G_{UREA_FF}$ and detection error of the NOx sensor.

However, the amount of change in the first maximum storage capacity due to degradation of the first selective reduction catalyst differs depending on the temperature of the first selective reduction catalyst, as shown in the aforementioned FIG. 3. In other words, in the example shown in FIG. 3, the amount of change in the first selective reduction catalyst due to degradation also becomes larger accompanying the temperature of the first selective reduction catalyst decreasing.

This shows that the possibility for the occurrence of the error $ENH3_{CONS}$ to be caused by error in the estimated value $ST_{UREA_MAX}$ of the first maximum storage capacity is high under conditions in which the amount of change in the first maximum storage capacity due to degradation is large. In addition, contrary to this, the possibility for the occurrence of the error $ENH3_{CONS}$ to be caused by error in the estimated value $ST_{UREA_MAX}$ of the first maximum storage capacity is consider to be low under conditions in which the amount of change in the first maximum storage capacity due to degradation is small.

The response surface setting portion 94 calculates a response surface weight $W_{RSM}$ for weighting the error $ENH3_{CONS}$, based on a response surface such as that shown in FIG. 22, with the object of suppressing miscorrection of the estimated value $ST_{UREA_MAX}$ of the first maximum storage capacity due to other such causes.

FIG. 22 is a graph showing an example of a response surface, which is set with two reference parameters ($T_{SCR}$, $V_{EX_HAT}$) as the domain.

According to this response surface, a large response surface weight $W_{RSM}$ is set under conditions in which the amount of change in the first maximum storage capacity caused by degradation is large. More specifically, the response surface weight $W_{RSM}$ is set to a larger value accompanying the detected value $T_{SCR}$ of the temperature sensor becoming smaller. In addition, the response surface weight $W_{RSM}$ is set to a smaller value accompanying the estimated value $V_{EX_HAT}$ of the exhaust gas volume becoming larger.

It should be noted that, among all the assumable combinations of the two reference parameters ($V_{EX_HAT}$, $T_{SCR}$), this response curve is normalized by setting the value for the combination for which the amount of change in the first maximum storage capacity due to degradation is largest as "1", for example.

Referring back to FIG. 20, the response surface setting portion 94 calculates the response surface weight $W_{RSM}$ with the amount of change in the maximum storage capacity due to degradation of the first selective reduction catalyst as a function weighting the error $ENH3_{CONS}$, based on the above such response curve.

The multiplier 98 calculates a weighted error signal EVNS(k) by multiplying the error $ENH3_{CONS}$ (k) by the response surface weight $W_{RSM}$ (k) calculated by the response surface setting portion 94, as shown in the following formula (24).

$$EVNS(k) = W_{RSM}(k)\ ENH3_{CONS}(k) \qquad (24)$$

By multiplying such a response surface weight $W_{RSM}$, the error signal EVNS is set to a small value under conditions such that the amount of change in the first storage capacity due to degradation becomes small, and thus miscorrection of the estimated value $ST_{UREA_MAX}$ of the first maximum storage capacity is suppressed.

Configuration of Weighting Function Setting Portion 95

As described above, the amount of change in the first maximum storage capacity due to degradation of the first selective reduction catalyst differs depending on the two reference parameters ($T_{SCR}$, $V_{EX_HAT}$). As a result, an estimated value $ST_{UREA_MAX}$ near the actual first maximum storage capacity cannot be calculated with a uniform correction coefficient not related to the reference parameters ($T_{SCR}$, $V_{EX_RAT}$). In other words, in a case of using a uniform correction coefficient, even if the estimated value $ST_{UREA_MAX}$ of the first maximum storage capacity can be made to approach the actual value in a certain region of the reference parameters ($T_{SCR}$, $V_{EX_HAT}$), it will diverge from the actual value in other regions.

Therefore, in the present embodiment, the space with the two reference parameters ($T_{SCR}$, $V_{EX_HAT}$) as the base is divided into a plurality of regions, and a compensation amount $U_{ij}$ (refer to FIG. 25 described later) for making the estimated value $ST_{UREA_MAX}$ of the first maximum storage capacity approach the actual value is calculated for each of these regions. In addition, in order to calculate such compensation amounts $U_{ij}$, a plurality of weighting functions $W_{ij}$ having values for each region is defined.

FIG. 23 is a graph showing four first weighting functions $WT_j$ (j = 1 to 4) with the detected value of the catalyst temperature sensor defined as the domain.

As shown in FIG. 23, the four first weighting functions $WT_j$ are set so as to define four regions overlapping each other in the domain, and to have values that are not "0" in these regions, respectively.

More specifically, the domain is divided into a first region ($T_0$, $T_2$) a second region ($T_1$, $T_3$), a third region ($T_2$, $T_4$), and a fourth region ($T_3$, $T_5$). Herein, the relationship is defined $T_0 < T_1 < T_2 < T_3 < T_4 < T_5$, as shown in FIG. 23. Therefore, the first region and the second region overlap in the segment ($T_1$, $T_2$), the second region and the third region overlap in the segment ($T_2$, $T_3$), and the third region and the fourth region overlap in the segment ($T_3$, $T_4$).

The function $WT_1$ is set so as to have a value that is not "0" in the first region ($T_0$, $T_2$). More specifically, the function $WT_1$ is set to "1" in the segment ($T_0$, $T_1$), and is set to decrease from "1" to "0" in segment ($T_1$, $T_2$).

The function $WT_2$ is set so as to have a value that is not "0" in the second region ($T_1$, $T_3$). More specifically, the function $WT_2$ is set so as to increase from "1" to "0" in the segment ($T_1$, $T_2$), and is set so as to decrease from "1" to "0" in the segment ($T_2$, $T_3$). Therefore, the function $WT_1$ and the function $WT_2$ intersect in the center of the segment ($T_1$, $T_2$).

The function $WT_3$ is set so as to have a value that is not "0" in the third region ($T_2$, $T_4$). More specifically, the function $WT_3$ is set so as to increase from "1" to "0" in the segment ($T_2$, $T_3$), and is set so as to decrease from "1" to "0" in the segment ($T_3$, $T_4$). Therefore, the function $WT_2$ and the function $WT_3$ intersect in the center of the segment ($T_2$, $T_3$).

The function $WT_4$ is set so as to have a value that is not "0" in the fourth region ($T_3$, $T_5$). More specifically, the function $WT_4$ is set so as to increase from "1" to "0" in the segment ($T_3$, $T_4$) , and is set to "1" in the segment ($T_4$, $T_5$). Therefore, the function $WT_3$ and the function $WT_4$ intersect in the center of the segment ($T_3$, $T_4$).

Herein, the amount of change in the first maximum storage capacity relative to temperature change is larger for a state in which the temperature is high than for a state in which the temperature is low, as shown in FIG. 23. In order to reproduce the first maximum storage capacity having such a non-linear characteristic, it is preferable to set so that the distribution of weighting functions is dense in a region in which the amount of change is large. Therefore, in the present embodiment, the segment ($T_3$, $T_4$) is set to be narrower than the segment ($T_1$, $T_2$).

In addition, for the weighting functions $WT_j$ configured in the above way, the sum total function thereof is normalized so as to become "1" irrespective of the catalyst temperature $T_{SCR}$, as shown in the following formula (25).

$$\sum_{j=1}^{4} WT_j = 1 \qquad (25)$$

FIG. 24 is a graph showing four second weighting functions $WV_i$ (i = 1 to 4) with the estimated value $V_{EX_HAT}$ of the exhaust gas volume defined as the domain.

As shown in FIG. 24, the four second weighting functions $WV_i$ are set so as to define four regions overlapping each other in the domain, and have values that are not "0" in these domains, respectively.

More specifically, the domain is divided into a first region ($V_0$, $V_2$), a second region ($V_1$, $V_3$), a third region ($V_2$, $V_4$), and a fourth region ($V_3$, $V_5$). Herein, the relationship is defined $V_0 < V_1 < V_2 < V_3 < V_4 < V_5$, as shown in FIG. 24. Therefore, the first region and the second region overlap in the segment ($V_1$, $V_2$), the second region and the third region overlap in the segment ($V_2$, $V_3$), and the third region and the fourth region overlap in the segment ($V_3$, $V_4$).

The function $WV_1$ is set so as to have a value that is not "0" in the first region ($V_0$, $V_2$). More specifically, the function $WV_1$ is set to "1" in the segment ($V_0$, $V_1$), and is set so as to decrease from "1" to "0" in the segment ($V_1$, $V_2$).

The function $WV_2$ is set so as to have a value that is not "0" in the second region ($V_1$, $V_3$). More specifically, the function $WV_2$ is set so as to increase from "1" to "0" in the segment ($V_1$, $V_2$), and is set so as to decrease from "1" to "0" in the segment ($V_2$, $V_3$). Therefore, the function $WV_1$ and the function $WV_2$ intersect in the center of the segment ($V_1$, $V_2$).

The function $WV_3$ is set so as to have a value that is not "0" in the third region ($V_2$, $V_4$). More specifically, the function $WV_3$ is set so as to increase from "1" to "0" in the segment ($V_2$, $V_3$), and is set so as to decrease from "1" to "0" in the segment ($V_3$, $V_4$). Therefore, the function $WV_2$ and the function $WV_3$ intersect in the center of the segment ($V_2$, $V_3$).

The function $WV_4$ is set so as to have a value that is not "0" in the fourth region ($V_3$, $V_5$). More specifically, the function $WV_4$ is set so as to increase from "1" to "0" in the segment ($V_3$, $V_4$), and is set to "1" in the segment ($V_4$, $V_5$). Therefore, the function $WV_3$ and the function $WV_4$ intersect in the center of the segment ($V_3$, $V_4$).

In addition, for the second weighting functions $WV_i$ configured in the above way, the sum total function is normalized so as to be "1" irrespective of the exhaust gas volume $V_{EX_HAT}$, as shown in the following formula (26).

$$\sum_{i=1}^{4} WV_i = 1 \qquad (26)$$

FIG. 25 is a graph showing 16 weighting functions $W_{ij}$ (i = 1 to 4, j = 1 to 4) with two reference parameters ($T_{SCR}$, $V_{EX_HAT}$) defined as the domain. In FIG. 25, the horizontal axis represents the catalyst temperature $T_{SCR}$, and the vertical axis represents the exhaust gas volume $V_{EX_HAT}$. As shown in FIG. 25, 16 regions overlapping each other are defined in the domain of the two reference parameters ($T_{SCR}$, $V_{EX_HAT}$).

The 16 weighting functions $W_{ij}$ are defined by the product of respective components of the first weighting functions $WT_j$ and respective components of the second weighting functions $WV_i$, as shown in the following formula (27). The weighting functions $W_{ij}$ having values that are not "0" in the 16 regions are thereby defined. It should be noted that only the four weighting functions $W_{11}$, $W_{22}$, $W_{33}$ and $W_{44}$ are illustrated in FIG. 25.

$$W_{ij} = WV_i \ WT_j \qquad (27)$$

In addition, similarly to the above formulas (25) and (26), the sum total function of the weighting functions $W_{ij}$ is normalized so as to be "1" irrespective of the two reference parameters ($T_{SCR}$, $V_{EX_HAT}$), as shown in the following formula (28).

$$\sum_{j=1}^{4} \sum_{i=1}^{4} W_{ij} = 1 \quad (28)$$

Referring back to FIG. 20, the weighting function setting portion 95 is configured to include a first weighting function calculating portion 951 in which the plurality of first weighting functions $WT_j$ is set, a second weighting function calculating portion 952 in which the plurality of second weighting functions $WV_j$ is set, a multiplier 953 that calculates the weighting functions $W_{ij}$ based on these first weighting functions $WT_j$ and second weighting functions $WV_j$, and a multiplier 954 that weights the error signal EVNS in every region.

The first weighting function calculating portion 951 calculates the value $WT_j(k)$ of a first weighting function according to the detected value $T_{SCR}$ (k) of the catalyst temperature sensor, by searching a control map such as that shown in FIG. 23.

The second weighting function calculating portion 952 calculates the value $WT_i(k)$ of a second weighting function according to the estimated value $V_{EX_HAT}$ (k) of the exhaust gas volume, by searching a control map such as that shown in FIG. 24.

The multiplier 953 calculates the value $W_{ij}$ (k) of a weighting function by multiplying the respective components of the value $WT_j(k)$ of the first weighting functions calculated by the first weighting function calculating portion 951 and the value $WT_i(k)$ of the second weighting functions, as shown in the following formula (29).

$$W_{ij}(k) = WV_i(k)\ \ WT_j(k) \quad (29)$$

The multiplier 954 calculates the error signals $WEVNS_{ij}$ (k) weighted in every region, by multiplying the respective components of the value $W_{ij}$ (k) of the weighting functions calculated with the error signal EVNS(k), as shown in the following formula (30).

$$WEVNS_{ij}(k) = W_{ij}(k)\ \ EVNS(k) \quad (30)$$

Configuration of Compensation amount Calculating Portion 96

The compensation amount calculating portion 96 calculates compensation amounts $U_{ij}$ (i = 1 to 4, j = 1 to 4) for the reference value $ST_{UREA_BS}$ of the first maximum storage capacity, so that the error signals $WEVNS_{ij}$ weighted in every region become "0".

In the present embodiment, the compensation amounts $U_{ij}$ are calculated according to a response specific control algorithm that can set the convergence rate of the error signals $WEVNS_{ij}$. This response specific control algorithm refers to the matter of a control algorithm that can specify both the convergence rate and the convergence behavior of deviation, based on a function specifying the convergence behavior of deviation.

The compensation amount calculating portion 96 includes a plurality of sliding mode controllers configured to allow this response specific control algorithm to be executed. Hereinafter, operations of these sliding mode controllers will be explained.

First, the sum of $WEVNS_{ij}$ (k) and the product of a conversion function setting parameter $POLE_v$ and the error signal $WEVNS_{ij}$ (k-1) of a previous control time is calculated, and this is defined as a conversion function $_{\sigma v_ij}$ (k), as shown in the following formula (31). It should be noted that, for the conversion function setting parameter $POLE_v$, a value set between -1 and 0 is used based on a predetermined setting table.

$$\sigma_{v_ij}(k) = WEVNS_{ij}(k) + POLE_v\ \ WEVNS_{ij}(k) \quad (31)$$

Next, based on the conversion function $\sigma_{v_ij}$ (k), a reaching-law input $U_{RCH_v_ij}$ (k) and an adaptive-law input $U_{ADP_v_ij}$ (k) are calculated, the sum of this $U_{RCH}$ (k) and $U_{ADP}$ (k) is calculated as shown in the following formula (32), and this is defined as the compensation amount $U_{ij}$ (k).

$$U_{V_ij}(k) = U_{RCH_V_ij}(k) + U_{ADP_V_ij}(k) \quad (32)$$

The reaching-law input $U_{RCH_v_ij}$ (k) is an input for placing the deviation condition amount on the conversion line, and is calculated by multiplying a predetermined reaching-law control gain $K_{RCH_V}$ by the conversion function $\sigma_{v_ij}$ (k), as shown in the following formula (33).

$$U_{RCH_V_ij}(k) = K_{RCH_V} \quad \sigma_{V_ij}(k) \quad (33)$$

The adaptive-law input $U_{ADP_v_ij}$ (k) suppresses the influences of modeling error and noise, is an input for placing the deviation condition amount on the conversion line, and is calculated as the sum of the adaptive-law input during a previous control $U_{ADP_v_ij}$ (k-1.) and the product of the conversion function $\sigma_{v_ij}$ (k) and a predetermined adaptive-law gain $K_{ADP_v}$, as shown in the following formula (34).

$$U_{ADP_V_ij}(k) = U_{ADP_V_ij}(k-1) + K_{ADP_V} \quad \sigma_{V_ij}(k) \quad (34)$$

Configuration of Adaptation Coefficient Calculating Portion 97

The adaptation coefficient calculating portion 97 calculates the adaptation coefficient KVNS by adding "1" to the sum total over the entire region (i = 1 to 4, j = 1 to 4) of the products of the compensation amounts $U_{ij}$(k) and the values $W_{ij}$ of the weighting functions, as shown in the following formula (35).

$$KVNS(k) = 1 + \sum_{i=1}^{4}\sum_{j=1}^{4} W_{ij}(k)\, U_{ij}(k) \quad (35)$$

Herein, the estimated value $ST_{UREA_MAX}$ (k=0) of the first maximum storage capacity during control initiation can be made to equal the reference value $ST_{UREA_BS}$ (k=0), by adding "1" when calculating KVNS(k), as shown in the above formula (35). It should be noted that, in a case of setting $U_{ADP_v_ij}$ (k=0) during control initiation to "1", it is unnecessary to add "1" in the above formula (35).

Next, the sequence of calculating the estimated value $ST_{UREA_MAX}$ of the first maximum storage capacity by the maximum storage capacity estimating portion will be explained while referring to FIG. 26. In order from top to bottom, FIG. 26 shows the first maximum storage capacity, adaptation coefficient KVNS, $W_{ij}U_{ij}$, compensation amount $U_{ij}$, and first weighting function $WT_j$.

Herein, a situation is assumed in which the actual first maximum storage capacity has shifted greatly from the reference value $ST_{UREA_BS}$, as shown in FIG. 26. In addition, among the plurality of regions in which the weighting functions $W_{ij}$ and compensation amounts $U_{ij}$ are defined, only a component related to the detected value $T_{SCR}$ of the catalyst temperature sensor will be explained hereinafter.

First, for the 4 regions in which the first weighting functions $WT_{i1}$, $WT_{i2}$, $WT_{i3}$ and $WT_{i4}$ are defined, the compensation amounts $U_{i1}$, $U_{i2}$, $U_{i3}$ and $Ui_4$ for each region are calculated so that the error signals $WEVNS_{i1}$, $WEVNS_{i2}$, $WEVNS_{i3}$ and $WEVNS_{i4}$ become "0".

Furthermore, the sum total function of the products of the first weighting functions and the compensation amounts over the entire region becomes a function that almost continuously changes depending on the temperature of the first selective reduction catalyst, as shown in the third graph.

An adaptation coefficient KVNS close to the actual amount of change can be calculated by calculating the adaptation coefficient KVNS based on such a sum total function $U_{i1}W_{i1} + U_{i2}W_{i2} + U_{i3}W_{i3} + U_{i4}W_{i4}$. which changes almost continuously. Furthermore, an estimated value $ST_{UREA_MAX}$ close to the actual first maximum storage capacity can be calculated by calculating the estimated value $ST_{UREA_MAX}$ of the first maximum storage capacity based on such an adaptation coefficient KVNS.

Sequence of Urea Injection Control Processing

Next, the specific sequence of urea injection control processing will be explained while referring to FIG. 27.

FIG. 27 is a flowchart showing a sequence of urea injection control processing executed by the ECU.

This urea injection control processing is processing to calculate the urea injection amount $G_{UREA}$ by way of the aforementioned technique, and is executed every predetermined control cycle (e.g., 50 msec).

In Step S1, it is determined whether a urea fault flag $F_{UREANG}$ is "1". This urea fault flag $F_{UREANG}$ is set to "1" when it is determined that the urea injection device has failed in determination processing, which is not illustrated, and is otherwise set to "0". In a case of this determination being YES, Step S9 is advanced to, and after the urea injection amount $G_{UREA}$ has been set to "0", this processing ends. In a case of this determination being NO, Step S2 is advanced to.

In Step S2, it is determined whether a catalyst degradation flag $F_{SCRNG}$ is "1". This catalyst degradation flag $F_{SCRNG}$ is set to "1" when it has been determined that either of the first selective reduction catalyst and the second selective reduction catalyst have failed in determination processing, which is not illustrated, and is otherwise set to "0". In a case of this determination being YES, Step S9 is advanced to, and after the urea injection amount $G_{UREA}$ has been set to "0", this processing ends. In a case of this determination being NO, Step S3 is advanced to.

In Step S3, it is determined whether a urea remaining amount $Q_{UREA}$ is less than a predetermined value $Q_{REF}$. This urea remaining amount $Q_{UREA}$ indicates a remaining amount of urea water in the urea tank, and is calculated based on the output of a urea-level sensor. In a case of this determination being YES, Step S4 is advanced to, and in a case of being NO, Step S5 is advanced to.

In Step S4, a urea remaining amount warning lamp illuminates, Step S9 is advanced to, and after the urea injection amount $G_{UREA}$ has been set to "0", this processing ends.

In Step S5, it is determined whether a catalyst warm-up timer value $T_{MAST}$ is larger than a predetermined value $T_{MLMT}$. This catalyst warm-up timer value $T_{MAST}$ measures a warm-up time of the urea selective reduction catalyst after engine startup. In a case of this determination being YES, Step S6 is advanced to. In a case of this determination being NO, Step S9 is advanced to, and after the urea injection amount $G_{UREA}$ has been set to "0", this processing ends.

In Step S6, it is determined whether a sensor fault flag $F_{SENNG}$ is "0". This sensor fault flat $F_{SENNG}$ is set to "1" when it has been determined that the ammonia sensor or the catalyst temperature sensor has failed in determination processing, which is not illustrated, and is otherwise set to "0". In a case of this determination being YES, Step S7 is advanced to. In a case of this determination being NO, Step S9 is advanced to, and after the urea injection amount $G_{UREA}$ has been set to "0", this processing ends.

In Step S7, it is determined whether an ammonia sensor activity flag $F_{NH3ACT}$ is 1. This ammonia sensor activity flag $F_{NH3ACT}$ is set to "1" when it has been determined that the ammonia sensor has reached an active state in determination processing, which is not illustrated, and is otherwise set to "0". In a case of this determination being YES, Step S8 is advanced to. In a case of this determination being NO, Step S9 is advanced to, and after the urea injection amount $G_{UREA}$ has been set to "0", this processing ends.

In Step S8, it is determined whether the temperature $T_{SCR}$ of the first selective reduction catalyst is higher than a predetermined value $T_{SCR_ACT}$. In a case of this determination being YES, it is determined that the first selective reduction catalyst has been activated, and Step S10 is advanced to. In a case of this determination being NO, it is determined that the first selective reduction catalyst has not yet been activated and urea injection should be stopped, Step S9 is advanced to, and after the urea injection amount $G_{UREA}$ has been set to "0", this processing ends.

In Step S10, the target value $ST_{UREA_TRGT}$ of the first storage amount is calculated based on the formulas (22) to (35) by the aforementioned storage amount target value setting portion and maximum storage capacity estimating portion, and then Step S11 is advanced to.

In Step S11, the FF injection amount $G_{UREA_FF}$ is calculated by the aforementioned feed-forward controller, and Step S12 is advanced to.

In Step S12, the storage compensation input $G_{UREA_ST}$ is calculated based on the formulas (5) to (21) by the aforementioned storage compensation input calculating portion, and then Step S13 is advanced to.

In Step S13, the slip occurrence compensation input $G_{UREA_SLP}$ is calculated based on the formulas (2) to (4) by the aforementioned slip occurrence compensation input calculating portion, and then Step S14 is advanced to.

In Step S14, the urea injection amount $G_{UREA}$ is calculated by the aforementioned adder based on formula (1), and this processing ends.

Simulation Results

Next, the simulation result, of urea injection control according to the present embodiment will be described in detail while referring to FIGS. 28 to 31. It should be noted that the present simulation represents a case of setting the slip target value $NH3_{CONS_TRGT}$ to substantially "0".

FIG. 28 shows the simulation results in a case of defining the selective reduction catalyst as a new article and forcibly setting the adaptation coefficient KVNS to "1".

In this case, since the selective reduction catalyst is defined as a new product, the estimated value $ST_{UREA_MAX}$ of the first maximum storage capacity matches the actual first maximum storage capacity, even if forcibly setting the adaptation coefficient KVNS to "1". As a result, the first storage capacity is controlled to the actual first maximum storage capacity.

In addition, depending on the operating state of the engine, the detected value $NH3_{CONS}$ of the ammonia sensor may exceed the slip target value $NH3_{CONS_TRGT}$, a result of which ammonia slip will occur in the first selective reduction catalyst, and ammonia will be discharged to a downstream side of the first selective reduction catalyst. However, this ammonia is stored in the second selective reduction catalyst and is used in NOx purification; therefore, ammonia slip does not occur in the second selective reduction catalyst.

FIG. 29 shows the simulation results in a case of defining the selective reduction catalyst as a new article and calculating the adaptation coefficient KVNS by the above-mentioned algorithm.

As shown in FIG. 29, the detected value $NH3_{CONS}$ of the ammonia sensor may exceed the slip target value $NH3_{CONS_TRGT}$, depending on the operating state of the engine. However, they differ from the results shown in FIG. 28, and this shift gradually decreases. This is because the estimated value $ST_{UREA_MAX}$ of the first maximum storage capacity is corrected to be less by decreasing the adaptation coefficient KVNS to less than "1".

In this way, according to the exhaust gas purification system of the present embodiment, it is possible to make the detected value $NH3_{CONS}$ of the ammonia sensor match the slip target value $NH3_{CONS_TRGT}$ with high precision by causing the adaptation coefficient KVNS to change.

FIG. 30 shows the simulations results in a case of defining the selective reduction catalyst as a degraded article and forcibly setting the adaptation coefficient KVNS to "1".

In a case of defining the selective reduction catalyst as a degraded article, the reference value $ST_{UREA_BS}$ of the first maximum storage capacity is shifted from the actual first maximum storage capacity. As a result, when the adaptation coefficient KVNS is forcibly set to "1", the estimated value $ST_{UREA_MAX}$ of the first maximum storage capacity increases relative to the actual first maximum storage capacity, as shown in FIG. 30. Therefore, the size of the shift of the detected value $NH3_{CONS}$ of the ammonia sensor relative to the target value $NH3_{CONS_TRGT}$ for a change in the operating state of the engine is larger than the results shown in the aforementioned FIGS. 28 and 29. As a result, it becomes difficult for the ammonia slipped from the first selective reduction catalyst to be stored by the second selective reduction catalyst, and ammonia slip occurs also in the second selective reduction catalyst.

FIG. 31 shows the simulation results in a case of defining the selective reduction catalyst as a degraded article and calculating the adaptation coefficient KVNS by the above-mentioned algorithm.

In the case of defining the selective reduction catalyst as a degraded article, immediately following the start of the simulation, a larger value is calculated for the estimated value $ST_{UREA_MAX}$ of the first maximum storage capacity than the actual first maximum storage capacity. As a result, immediately following the start of the simulation, excessive ammonia slip occurs in the first selective reduction catalyst, and ammonia slip also occurs in the second selective reduction catalyst.

However, the adaptation coefficient KNVS changes to a smaller value in proportion to the time elapsed, a result of which the estimated value $ST_{UREA_MAX}$ of the first maximum storage capacity is corrected to a smaller value close to the actual first maximum storage capacity. As a result, the size of the shift of the detected value $NH3_{CONS}$ of the ammonia sensor relative to the target value $NH3_{CONS_TRGT}$ for a change in the operating state of the engine becomes smaller with the elapse of time. Consequently, ammonia slip is suppressed in both the first selective reduction catalyst and the second selective reduction catalyst. It should be noted that, although omitted from the illustrations, it has been confirmed that, when further time elapses, the estimated value $ST_{UREA_MAX}$ of the first maximum storage capacity converges to the actual first maximum storage capacity.

In this way, according to the exhaust gas purification system of the present embodiment, even in a case of the selective reduction catalyst having degraded, it is possible to make the detected value $NH3_{CONS}$ of the ammonia sensor match the slip target value $NH3_{CONS_TRGT}$ with high precision by causing the adaptation coefficient KVNS to change.

In the present embodiment, for example, a reducing agent detection means is configured by the ammonia sensor 26; and a storage amount estimated value calculating means, first input component calculating means, second input component calculating means, supply amount determination means, storage amount target value setting means, maximum storage capacity estimated value calculating means, reference value calculating means, response surface setting means, weighting function setting means, correction value calculating means and estimated value calculating means are configured by the ECU 3.

More specifically, the storage amount target value setting means is configured by the storage amount target value setting portion 5, the storage amount estimated value calculating means is configured by the control object 61 of the storage compensation input calculating portion 6, and the first input component calculating means is configured by the controllers 62, 62A and 62B, for example. In addition, the second input component calculating means is configured by the slip occurrence compensation input calculating portion 7, the supply amount determination means is configured by the adder 8, the maximum storage capacity estimated value calculating means is configured by the maximum storage capacity estimating portion 9, the reference value calculating means is configured by the reference value calculating portion 91, the response surface setting means is configured by the response surface setting portion 94, the weighting function setting means is configured by the weighting function setting portion 95, the correction value calculating means is configured by the compensation amount calculating portion 96, and the estimated value calculating means is configured by the estimated value calculating portion 99, for example.

As described in detail in the foregoing, according to the present embodiment, the first selective reduction catalyst 231 and the second selective reduction catalyst 232 are provided in the exhaust channel 11 in order towards the downstream side, and further provided therein are the urea injection device 25 that supplies urea water from an upstream side of the first selective reduction catalyst 231 and the second selective reduction catalyst 232, and the ammonia sensor 26 that detects the ammonia concentration or ammonia amount in the exhaust gas between the first selective reduction catalyst 231 and the second selective reduction catalyst 232. The urea injection amount $G_{UREA}$ is determined based on the storage compensation input $G_{UREA_ST}$ calculated so that the estimated value $ST_{UREA_FB}$ of the first storage amount matches the storage amount target value $ST_{UREA_TRGT}$, and the slip occurrence compensation input $G_{UREA_SLP}$ calculated so that the detected value $NH3_{CONS}$ of the ammonia sensor 26 matches the slip target value $NH3_{CONS_TRGT}$.

It is thereby possible to maintain the first storage amount of the first selective reduction catalyst 231 at the maximum. Therefore, a state in which the NOx reduction rate of the first selective reduction catalyst 231 is the highest can be maintained under all operating conditions from steady-state to transient. In addition, by intentionally causing ammonia to slip from the first selective reduction catalyst 231 to the second selective reduction catalyst 232, NOx can be reduced also in the second selective reduction catalyst 232 using this slipped ammonia. Furthermore, by reducing NOx with the ammonia slipped to the second selective reduction catalyst 232, it is possible to prevent ammonia from discharging to downstream of the second selective reduction catalyst 232. Therefore, a high NOx purification rate can be maintained as the exhaust gas purification system 2 overall, while suppressing ammonia from being discharged to downstream of the selective reduction catalyst 23.

According to the present embodiment, the storage amount target value $ST_{UREA_TRGT}$ is set in the vicinity of the maximum storage capacity, which varies depending on the temperature of the first selective reduction catalyst 231. It is thereby possible to make the first storage amount to quickly return to the maximum storage capacity, and prevent a state in which the NOx reduction rate declines from continuing, even in a state of the first storage amount of the first selective reduction catalyst 231 being small relative to the maximum storage capacity, for example. In addition, even in a case of the temperature of the first selective reduction catalyst 231 rising during transition, and the first maximum storage capacity decreasing, unnecessary ammonia slip can be suppressed by setting the storage amount target value $ST_{UREA_TRGT}$ in the vicinity of the maximum storage capacity to match this, for example.

According to the present embodiment, the estimated value $ST_{UREA_FB}$ of the first storage amount is calculated based on an amount arrived at by subtracting the supply amount $G_{UREA_SLP}$ of urea water required in order to generate ammonia slipping from the first selective reduction catalyst 231 from the urea injection amount $G_{UREA}$, and a parameter $G_{UREA_IDEAL}$ correlated to the amount of NOx flowing into the first selective reduction catalyst. It is thereby possible to calculate the estimated value $ST_{UREA_FB}$ of the first storage amount that is accurate by considering the causes for the first storage amount fluctuating. In addition, the NOx reduction rate of the exhaust gas purification system 2 overall can be maintained to be high by calculating an accurate first storage amount $ST_{UREA_FB}$.

According to the present embodiment, NOx in the exhaust can be reduced in the second selective reduction catalyst 232 using the ammonia slipped from the first selective reduction catalyst 231. It is thereby possible for the NOx to be reduced with the ammonia slipped from the first selective reduction catalyst 231, while ammonia is further suppressed from discharging to downstream of the second selective reduction catalyst 232.

According to the present invention, the first selective reduction catalyst 231 is provided in the exhaust channel 11, and further, the urea injection device 25 that supplies urea water from an upstream side of the first selective reduction catalyst 231, and the ammonia sensor 26 that detects an ammonia concentration or ammonia amount in the exhaust on a downstream side of the first selective reduction catalyst 231 are also provided therein. In addition, the target value $ST_{UREA_TRGT}$ of the first storage amount is set in the vicinity of the estimated value $ST_{UREA_MAX}$ of the first maximum storage capacity, and the storage compensation input $G_{UREA_ST}$ of the urea injection amount $G_{UREA}$ is calculated so that the estimated value $ST_{UREA_FB}$ of the first storage amount matches the target value $ST_{UREA_TRGT}$ of the first storage amount. Herein in particular, the maximum storage capacity estimating portion 9 calculates the estimated value $ST_{UREA_MAX}$ of the first maximum storage capacity so that the detected value $NH3_{CONS}$ of the ammonia sensor 26 matches the slip target value $NH3_{CONS_TRGT}$.

Even in a case of the maximum storage capacity of the first selective reduction catalyst 231 changing due to degradation thereof, it is thereby possible to accurately calculate the estimated value $ST_{UREA_MAX}$ of the first maximum storage capacity in accordance with this change. Therefore, it is possible to maintain the NOx reduction rate of the first selective reduction catalyst 231 to be high, while maintaining the first storage amount in the vicinity of the first maximum storage capacity to suppress ammonia from discharging to downstream of the first selective reduction catalyst 231.

In addition, in a case of providing an oxidation catalyst or diesel particulate filter on an upstream side of the first selective reduction catalyst 231, the $NO_2$ production capacity changes due to degradation of this oxidation catalyst and filter, and the reaction probability of ammonia with NOx in the first selective reduction catalyst 231 may change. Even in such a case, the above change in reaction probability is perceived as a change in the first maximum storage capacity, and the estimated value $ST_{UREA_MAX}$ of the first maximum storage capacity can be calculated appropriately; therefore, the NOx reduction rate of the first selective reduction catalyst 231 can be maintained to be high, while maintaining the first storage amount at an appropriate value to suppress ammonia from being discharged to downstream of the first selective reduction catalyst 231.

According to the present embodiment, the detected value $T_{SCR}$ of the catalyst temperature sensor 27 and the estimated value $V_{EX_HAT}$ of the exhaust gas volume are defined as reference parameters, and the reference value $ST_{UREA_BS}$ of the first maximum storage capacity is calculated based on these reference parameters. In addition, a plurality of regions in a space setting these reference parameters as a base is defined, and a compensation amount $U_{ij}$ for the reference value $ST_{UREA_BS}$ is calculated in each of these regions so that the error parameter $ENH3_{CONS}$ becomes "0". The estimated value $ST_{UREA_MAX}$ of the first maximum storage capacity is calculated based on the compensation amount $U_{ij}$ of each of these regions.

It is thereby possible to accurately calculate the estimated value $ST_{UREA_MAX}$ of the first maximum storage capacity in the regions for all amounts of the detected value $T_{SCR}$ of the catalyst temperature sensor 27 and the estimated value $V_{EX_HAT}$ of the exhaust gas volume. As a result, even in a case of the first selective reduction catalyst 231 degrading and the oxidation catalyst or diesel particulate filter on an upstream side of the first selective reduction catalyst 231 degrading, as described above, the NOx reduction rate of the first selective reduction catalyst 231 can be maintained to be high while maintaining the first storage amount at an appropriate value to suppress ammonia from discharging to downstream of the first selective reduction catalyst 231.

According to the present embodiment, the compensation amounts $U_{ij}$ for each of the above-mentioned regions are calculated based on the value $WEVNS_{ij}$ arrived at by multiplying the error signal EVNS by the value $W_{ij}$ of the weighting function set for each region. In a case of the error signal EVNS having a value, i.e. in a case of believing that error occurs in the estimated value $ST_{UREA_MAX}$ of the first maximum storage capacity, only the compensation amount $U_{ij}$ of a region to correct this error can be appropriately updated. Therefore, the estimated value $ST_{UREA_MAX}$ of the first maximum storage capacity can be more accurately calculated.

According to the present embodiment, the estimated value $ST_{UREA_MAX}$ of the first maximum storage capacity is calculated by multiplying the above-mentioned reference value $ST_{UREA_BS}$ by the adaptation coefficient KVNS calculated based on the sum total over all the regions of the products between the compensation amounts $U_{ij}$ and the values $W_{ij}$ of the weighting functions. It is thereby possible to calculate the estimated value $ST_{UREA_MAX}$ of successive first maximum storage capacities in all regions defined by the reference parameters. Therefore, when the references parameters change, the urea injection amount $G_{UREA}$ can also be made to continuously change, a result of which the NOx purification rate of the first selective reduction catalyst 231 can be maintained to be high while suppressing ammonia from discharging to downstream of the first selective reduction catalyst 231.

Incidentally, in addition to error in the estimated value $ST_{UREA_MAX}$ of the first maximum storage capacity, various causes are considered as causes of the error parameter $ENH3_{CONS}$ having a value. As a result, when calculating the estimated value $ST_{UREA_MAX}$ of the first maximum storage capacity based on an error parameter $ENH3_{CONS}$ that is not weighted, miscorrection may occur in the estimated value $ST_{UREA_MAX}$ of the first maximum storage capacity due to the above-mentioned other causes.

According to the present embodiment, the estimated value $ST_{UREA_MAX}$ of the first maximum storage capacity is calculated based on the error signal EVNS, which is arrived at by multiplying the error parameter $ENH3_{CONS}$ by the value $W_{RSM}$ of the response surface weighting the amount of change in the first maximum storage capacity due to degradation of the first selective reduction catalyst 231. By weighting the amount of change in the first maximum storage capacity due to degradation by the error parameter $ENH3_{CONS}$ in this way, the aforementioned such miscorrection of the estimated value $ST_{UREA_MAX}$ of the first maximum storage capacity can be suppressed and the estimated value $ST_{UREA_MAX}$ can be accurately calculated over all regions of the reference parameters.

It should be noted that the present invention is not to be limited to the aforementioned embodiment, and various modifications thereto are possible.

Although the compensation amount $U_{ij}$ has been calculated by a response specific control algorithm in the above-mentioned embodiment, it is not limited thereto. For example, the compensation amount $U_{ij}$ may be calculated by a PID control algorithm, optimal control algorithm, back-stepping control algorithm or the like, or another known feedback algorithm.

Although the estimated value $ST_{UREA_MAX}$ (k) of the first maximum storage capacity has been calculated by multiplying the adaptation coefficient KVNS(k) calculated according to formula (35) by the reference value $ST_{UREA_BS}$ (k) of the first maximum storage capacity in the above-mentioned embodiment as shown in formula (22), it is not limited thereto. For example, the estimated value $ST_{UREA_MAX}$ (k) of the first maximum storage capacity may be calculated by adding an adaptive added compensation amount DVNS(k) calculated by the following formula (36) to the reference value $ST_{UREA_BS}$ (k) of the first maximum storage capacity, as shown in the following formula (37).

$$DVNS(k) = \sum_{i=1}^{4}\sum_{j=1}^{4} W_{ij}(k)\,U_{ij}(k) \qquad (36)$$

$$ST_{UREA_MAX}(k) = DVNS(k) + ST_{UREA_BS}(k) \qquad (37)$$

In addition, although an example applying the present invention to an exhaust gas purification system of urea addition type defining ammonia as the reducing agent and supplying urea water as an additive serving as the source of this reducing agent has been illustrated in the above-mentioned embodiment, it is not limited thereto.

For example, ammonia may be supplied directly, without supplying urea water and generating ammonia from this urea water. In addition, the additive serving as the source of ammonia is not limited to urea water, and another additive may be used. Furthermore, the reducing agent for reducing NOx is not limited to ammonia. The present invention can be applied to an exhaust gas purification system using hydrocarbons in place of ammonia as the reducing agent for reducing NOx, for example.

## Claims

1. An exhaust gas purification system (2) for an internal combustion engine (1) including a selective reduction catalyst (231) that is provided in an exhaust channel (11) of the internal combustion engine (1) and reduces NOx in exhaust flowing through the exhaust channel (11) under the presence of a reducing agent, the exhaust gas purification system (2) comprising:

    a reducing agent supply means (25) for supplying a reducing agent or an additive serving as a source of a reducing agent into the exhaust channel (11) at an upstream side of the selective reduction catalyst (231);
    a reducing agent detection means (26) for detecting a reducing agent concentration or reducing agent amount in exhaust flowing in the exhaust channel (11) downstream of the selective reduction catalyst (231);
    a storage amount estimated value calculating means (3, 61) for calculating, with an amount of reducing agent stored in the selective reduction catalyst (231) as a storage amount, an estimated value ($ST_{UREA}$_FB) of the storage amount;
    a first input component calculating means (3, 62, 62A, 62B) for calculating a first input component ($G_{UREA_ST}$) of a supply amount ($G_{UREA}$) of the reducing agent or additive by the reducing agent supply means (25), so that the estimated value ($ST_{UREA_FB}$) of the storage amount matches a predetermined storage amount target value ($ST_{UREA_TRGT}$) ;
    a maximum storage capacity estimated value calculating means (3, 9) for calculating, with an amount of reducing agent that can be stored by the selective reduction catalyst (231) as a maximum storage capacity, an estimated value ($ST_{UREA_MAX}$) of the maximum storage capacity, which changes according to a temperature of the selective reduction catalyst (231); and
    a storage amount target value setting means (3, 5) for setting the storage amount target value ($ST_{UREA_TRGT}$) in a vicinity of the estimated value ($ST_{UREA_MAX}$) of the maximum storage capacity,
    wherein the maximum storage capacity estimated value calculating means (3, 9) calculates the estimated value ($ST_{UREA_MAX}$) of the maximum storage capacity so that a detected value ($NH3_{CONS}$) of the reducing agent detection means (26) matches a predetermined slip target value ($NH3_{CONS_TRGT}$), and further includes:

        a reference value calculating means (91) for calculating, with at least either of a parameter ($T_{SCR}$) correlated to a temperature of the selective reduction catalyst (231) and a parameter ($V_{EX_HAT}$) correlated to an amount of exhaust flowing into the selective reduction catalyst (231) as a reference parameter, a reference value ($ST_{UREA_BS}$) of the maximum storage capacity based on the reference parameter;
        a correction value calculating means (96) for defining a plurality of regions that overlap each other in a space setting the reference parameters as a domain, and for calculating a correction value ($U_{ij}$) for the

reference value ($ST_{UREA_BS}$) in each of the regions so that an error parameter ($ENH3_{CONS}$) related to the slip target value ($NH3_{CONS_TRGT}$) of the detected value ($NH3_{CONS}$) of the reducing agent detection means (26) becomes "0";
an estimated value calculating means (99) for calculating an estimated value ($ST_{UREA_MAX}$) of the maximum storage capacity based on a reference value ($ST_{UREA_BS}$) calculated by the reference value calculating means (91) and a correction value ($U_{ij}$) of each of the regions calculated by the correction value calculating means (96); and
a weighting function setting means (95) for setting in each of the regions a weighting function ($W_{ij}$) defining the reference parameter as a domain and having a value that is not "0" in each of the plurality of regions, respectively,
wherein the weighting functions ($W_{ij}$) are normalized so that a sum total function thereof ($\Sigma\Sigma W_{ij}$) is a predetermined value, and
wherein the correction value ($U_{ij}$) of each of the regions is calculated based on a value ($WEVNS_{ij}$) calculated by multiplying the error parameter ($ENH3_{CONS}$) by a value of the weighting function ($W_{ij}$) of each of the regions, and
wherein the estimated value calculating means (99) calculates an estimated value ($ST_{UREA_MAX}$) of a maximum storage capacity based on a reference value ($ST_{UREA_BS}$) calculated by the reference value calculating means (91) and a coefficient (KVNS, DVNS) calculated based on a sum total ($\Sigma\Sigma W_{ij}U_{ij}$) over all regions of products between the correction value ($U_{ij}$) and a value of the weighting function ($W_{ij}$).

2. An exhaust gas purification system (2) for an internal combustion engine (1) according to claim 1, wherein the estimated value calculating means (99) calculates an estimated value ($ST_{UREA\ MAX}$) of a maximum storage capacity by multiplying a reference value ($ST_{UREA\ BS}$) calculated by the reference value calculating means (91) by a coefficient (KVNS) calculated based on a sum total ($\Sigma\Sigma W_{ij}U_{ij}$) over all regions of products between the correction value ($U_{ij}$) and a value of the weighting function.

3. An exhaust gas purification system (2) for an internal combustion engine (1) according to claim 1, wherein the estimated value calculating means (99) calculates an estimated value ($ST_{UREA_MAX}$) of a maximum storage capacity by adding a reference value ($ST_{UREA_BS}$) calculated by the reference value calculating means (91) to a coefficient (DVNS) calculated based on a sum total ($\Sigma\Sigma W_{ij}U_{ij}$) over all regions of products between the correction value ($U_{ij}$) and a value of the weighting function.

4. An exhaust gas purification system (2) for an internal combustion engine (1) according to claim 1 or 2, wherein the maximum storage capacity estimated value calculating means (9) further includes a response surface setting means (94) for setting a response surface weighting an amount of change in the maximum storage capacity due to degradation of the selective reduction catalyst (231), with the reference parameters as a domain, wherein the estimated value ($ST_{UREA\ MAX}$) of the maximum storage capacity is calculated based on a value (EVNS) calculated by multiplying the error parameter ($ENH3_{CONS}$) by a value ($W_{RSM}$) of the response surface.

**Patentansprüche**

1. Abgasreinigungssystem (2) für einen internen Verbrennungsmotor (1), umfassend einen Katalysator zur selektiven Reduktion (231), der in einem Abgaskanal (11) des internen Verbrennungsmotors (1) vorgesehen ist und $NO_x$ in durch den Abgaskanal (11) fließendem Abgas in Anwesenheit eines Reduktionsmittels reduziert, wobei das Abgasreinigungssystem (2) umfasst:

ein Reduktionsmittel-Zuführmittel (25) zum Zuführen eines Reduktionsmittels oder eines einem Reduktionsmittel als Quelle dienenden Zusatzes in den Abgaskanal (11) an einer stromaufwärtigen Seite des Katalysators zur selektiven Reduktion (231);
ein Erkennungsmittel (26) für das Reduktionsmittel zum Erkennen einer Reduktionsmittelkonzentration oder einer Reduktionsmittelmenge in dem Abgas, welches in dem Abgaskanal (11) fließt, stromabwärts des selektiven Reduktionskatalysators (231);
ein Schätzwert-Berechnungsmittel (3, 61) für die Speichermenge zum Berechnen eines Schätzwertes ($ST_{UREA\ FB}$) der Speichermenge, wenn eine Menge des Reduktionsmittels in dem Katalysator zur selektiven Reduktion (231) als Speichermenge gespeichert ist;
ein Berechnungsmittel (3, 62, 62A, 62B) für die erste Eingangskomponente zum Berechnen einer ersten Eingangskomponente ($G_{UREA\ ST}$) einer Zuführmenge ($G_{UREA}$) des Reduktionsmittels oder Zusatzes durch das Reduktionsmittel-Zuführmittel (25), so dass der Schätzwert ($ST_{UREA\ FB}$) für die Speichermenge einem zuvor festgelegten Speichermengensollwert ($ST_{UREA\ TRGT}$) entspricht;
ein Schätzwert-Berechnungsmittel (3, 9) für eine maximale Speicherkapazität zum Berechnen, mit einer Reduktionsmittelmenge, die durch den Katalysator zur selektiven Reduktion (231) als maximale Speicherkapazität gespeichert werden kann, eines Schätzwertes ($ST_{UREA\ MAX}$) für die maximale Speicherkapazität, welcher sich entsprechend einer Temperatur des Katalysators zur selektiven Reduktion (231) verändert; und
ein Speichermengensollwert-Einstellmittel (3, 5) zum Einstellen des Speichermengensollwertes ($ST_{UREA\ TRGT}$) in der Nähe des Schätzwertes ($ST_{UREA\ MAX}$) für die maximale Speicherkapazität,
wobei das Schätzwert-Berechnungsmittel (3, 9) für eine maximale Speicherkapazität den Schätzwert ($ST_{UREA\ MAX}$) für die maximale Speicherkapazität so berechnet, dass ein erkannter Wert ($NH3_{CONS}$) des Reduktionsmittel-Erkennungsmittels (26) einem zuvor festgelegten Schlupfsollwert ($NH3_{CONS\ TRGT}$) entspricht, und ferner umfasst:

ein Referenzwert-Berechnungsmittel (91) zum Berechnen eines Referenzwertes ($ST_{UREA\ BS}$) der maximalen Speicherkapazität, basierend auf dem Referenzparameter, mit wenigstens einem der Parameter ($T_{SCR}$) in Zusammenhang mit einer Temperatur des Katalysator zur selektiven Reduktion (231) und Parameter ($V_{EX\ HAT}$) in Zusammenhang mit einer Menge Abgas, die in den Katalysator zur selektiven Reduktion (231) fließt, als Referenzparameter;
ein Korrekturwert-Berechnungsmittel (96) zum Definieren einer Mehrzahl von Bereichen, die einander in einem Raum überlappen, wobei die Referenzparameter als Definitionsbereich festgelegt sind, und zum Berechnen eines Korrekturwertes ($U_{ij}$) für den Referenzwert ($ST_{UREA\ BS}$) in jedem der Bereiche, so dass ein Fehlerparameter ($ENH3_{CONS}$) im Zusammenhang mit dem Schlupfsollwert ($NH3_{CONS\ TRGT}$) des erkannten Wertes ($NH3_{CONS}$) für das Reduktionsmittel-Erkennungsmittel (26) "0" wird;
ein Schätzwert-Berechnungsmittel (99) zum Berechnen eines Schätzwertes ($ST_{UREA\ MAX}$) für die maximale Speicherkapazität, basierend auf einem von dem Referenzwert-Berechnungsmittel (91) berechneten Referenzwert ($ST_{UREA\ BS}$) und einem Korrekturwert ($U_{ij}$) jedes von dem Korrekturwert-Berechnungsmittel (96) berechneten Bereichs; und
ein Gewichtungsfunktions-Einstellmittel (95) zum Einstellen, in jedem der Bereiche, einer Gewichtungsfunktion ($W_{ij}$), die die Referenzparameter als Definitionsbereich festlegt und in jedem der Bereiche jeweils einen Wert hat, der nicht "0" ist,
wobei die Gewichtungsfunktionen ($W_{ij}$) normiert sind, so dass eine zugehörige Gesamtsummenfunktion ($\Sigma\Sigma W_{ij}$) einen zuvor festgelegten Wert hat, und
wobei der Korrekturwert ($U_{ij}$) jedes Bereichs basierend auf einem Wert ($WEVNS_{ij}$) berechnet ist, der durch Multiplizieren des Fehlerparameters ($ENH3_{CONS}$) mit einem Wert der Gewichtungsfunktion ($W_{ij}$) jedes Bereichs berechnet ist, und
wobei das Schätzwert-Berechnungsmittel (99) einen Schätzwert ($ST_{UREA\ MAX}$) für eine maximale Speicherkapazität berechnet, basierend auf einem von dem Referenzwert-Berechnungsmittel (91) berechneten Referenzwert ($ST_{UREABS}$) und einem Koeffizienten (KVNS, DVNS), der basierend auf einer Gesamtsumme ($\Sigma\ \Sigma W_{ij}U_{ij}$) über alle Bereiche von Produkten zwischen dem Korrekturwert ($U_{ij}$) und einem Wert der Gewichtungsfunktion ($W_{ij}$) berechnet ist.

**2.** Abgasreinigungssystem (2) für einen internen Verbrennungsmotor (1), nach Anspruch 1,
wobei das Schätzwert-Berechnungsmittel (99) einen Schätzwert ($ST_{UREA\ MAX}$) für eine maximale Speicherkapazität berechnet, und zwar durch Multiplizieren eines von dem Referenzwert-Berechnungsmittel (91) berechneten Referenzwertes ($ST_{UREA\ BS}$) mit einem Koeffizienten (KVNS), der basierend auf einer Gesamtsumme ($\Sigma\Sigma W_{ij}U_{ij}$) über alle Bereiche von Produkten zwischen dem Korrekturwert ($U_{ij}$) und einem Wert der Gewichtungsfunktion ($W_{ij}$) berechnet ist.

**3.** Abgasreinigungssystem (2) für einen internen Verbrennungsmotor (1) nach Anspruch 1,
wobei das Schätzwert-Berechnungsmittel (99) einen Schätzwert ($ST_{UREA\ MAX}$) für eine maximale Speicherkapazität berechnet, durch Addieren eines von dem Referenzwert-Berechnungsmittel (91) berechneten Referenzwertes ($ST_{UREA\ BS}$) zu einem basierend auf einer Gesamtsumme ($\Sigma\Sigma\text{-}W_{ij}U_{ij}$) über alle Bereiche von Produkten zwischen dem Korrekturwert ($U_{ij}$) und einem Wert der Gewichtungsfunktion ($W_{ij}$) berechneten Koeffizienten (DVNS).

**4.** Abgasreinigungssystem (2) für einen internen Verbrennungsmotor (1) nach Anspruch 1 oder 2,
wobei das Schätzwert-Berechnungsmittel (9) für eine maximale Speicherkapazität ferner ein Antwortflächen-Einstellmittel (94) zum Einstellen einer Antwortfläche umfasst, zum Gewichten eines Änderungsumfangs der maximalen Speicherkapazität aufgrund der Degeneration des Katalysators zur selektiven Reduktion (231), mit den Referenzparametern als Definitionsbereich,
wobei der Schätzwert ($ST_{UREA\ MAX}$) der maximalen Speicherkapazität basierend auf einem Wert (EVNS) berechnet ist, der durch Multiplizieren des Fehlerparameters ($ENH3_{CONS}$) mit einem Wert ($W_{RSM}$) der Antwortfläche berechnet ist.

## Revendications

**1.** Système d'épuration de gaz d'échappement (2) pour un moteur à combustion interne (1) comprenant un catalyseur de réduction sélectif (231) qui est prévu dans un canal d'échappement (11) du moteur à combustion interne (1) et qui réduit les NOx dans les gaz d'échappement circulant à travers le canal d'échappement (11) en présence d'un agent réducteur, le système d'épuration de gaz d'échappement (2) comprenant:

un moyen de fourniture d'agent réducteur (25) pour fournir un agent réducteur ou un additif servant de source d'un agent réducteur dans le canal d'échappement (11) à un côté amont du catalyseur de réduction sélectif (231);
un moyen de détection d'agent réducteur (26) pour détecter une concentration d'agent réducteur ou une quantité d'agent réducteur dans les gaz d'échappement circulant dans le canal d'échappement (11) en aval du catalyseur de réduction sélectif (231);
un moyen de calcul de valeur estimée de quantité de stockage (3, 61) pour calculer, avec une quantité d'agent réducteur stockée dans le catalyseur de réduction sélectif (231) comme quantité de stockage, une valeur estimée ($ST_{UREA\ FB}$) de la quantité de stockage;
un premier moyen de calcul de composant d'entrée (3, 62, 62A, 62B) pour calculer un premier composant d'entrée ($G_{UREA\ ST}$) d'une quantité de fourniture ($G_{UREA}$) de l'agent réducteur ou d'un additif par le moyen de fourniture d'agent réducteur (25), de telle manière que la valeur estimée ($ST_{UREA\ FB}$) de la quantité de stockage coïncide avec une valeur cible de quantité de stockage prédéterminée ($ST_{UREA\ TRGT}$) ;
un moyen de calcul de valeur estimée de capacité de stockage maximum (3, 9) pour calculer, avec une quantité d'agent réducteur qui a été stockée par le catalyseur de réduction sélectif (231) comme une capacité de stockage maximum, une valeur estimée ($ST_{UREA\ MAX}$) de la capacité de stockage maximum, qui change selon la température du catalyseur de réduction sélectif (231); et
un moyen de réglage de valeur cible de quantité de stockage (3, 5) pour régler la valeur cible de la quantité de stockage ($ST_{UREA\ TRGT}$) au voisinage de la valeur estimée ($ST_{UREA\ MAX}$) de la capacité de stockage maximum, dans lequel le moyen de calcul de valeur estimée de capacité de stockage maximum (3, 9) calcule la valeur estimée ($ST_{UREA\ MAX}$) de la capacité de stockage maximum de telle manière qu'une valeur détectée ($NH3_{CONS}$) du moyen de détection d'agent réducteur (26) coïncide avec une valeur cible glissante prédéterminée ($NH3_{CONS\ TRGT}$), et comprend en outre:

un moyen de calcul de valeur de référence (91) pour calculer, avec au moins d'un ou l'autre d'un paramètre ($T_{SCR}$) corrélé à une température du catalyseur de réduction sélectif (231) et un paramètre ($V_{EX\ HAT}$) corrélé à une quantité de gaz d'échappement entrant dans le catalyseur de réduction sélectif (231) à titre de paramètre de référence, une valeur de référence ($ST_{UREA\ BS}$) de la capacité de stockage maximum sur la base du paramètre de référence;
un moyen de calcul de valeur de correction (96) pour définir une pluralité de régions qui se recouvrent mutuellement dans un espace fixant les paramètres de référence comme un domaine, et à calculer une valeur de correction ($U_{ij}$) pour la valeur de référence ($ST_{UREA\ BS}$) dans chacune des régions, de telle manière qu'un paramètre d'erreur ($ENH3_{CONS}$) relié à la valeur cible glissante ($NH3_{CONS\ TRGT}$) de la valeur détectée ($NH3_{CONS}$) du moyen de détection d'agent réducteur (26) devienne "0";
un moyen de calcul de valeur estimée (99) pour calculer une valeur estimée ($ST_{UREA\ MAX}$) de la capacité de stockage maximum sur la base d'une valeur de référence ($ST_{UREA\ BS}$) calculée par le moyen de calcul de valeur de référence (91) et d'une valeur de correction ($U_{ij}$) de chacune des régions calculée par le moyen de calcul de valeur de correction (96); et
un moyen de réglage de fonction de pondération (95) pour régler dans chacune des régions une fonction de pondération ($W_{ij}$) définissant le paramètre de référence comme un domaine et ayant une valeur qui n'est pas "0" dans chacune de la pluralité de régions, respectivement,
dans lequel les fonctions de pondération ($W_{ij}$) sont normalisées de telle manière qu'une fonction totale de somme de celles-ci ($\Sigma\Sigma$-$W_{ij}$) soit une valeur prédéterminée, et
dans lequel la valeur de correction ($U_{ij}$) de chacune des régions est calculée sur la base d'une valeur ($WEVNS_{ij}$) calculée en multipliant le paramètre d'erreur ($ENH3_{CONS}$) par une valeur de la fonction de pondération ($W_{ij}$) de chacune des régions, et

dans lequel le moyen de calcul de valeur estimée (99) calcule une valeur estimée ($ST_{UREA\ MAX}$) d'une capacité de stockage maximum sur la base d'une valeur de référence ($ST_{UREA\ BS}$) calculée par le moyen de calcul de valeur de référence (91) et d'un coefficient (KVNS, DVNS) calculé sur la base d'un total de somme ($\Sigma\Sigma W_{ij}U_{ij}$) sur toutes les régions de produits entre la valeur de correction ($U_{ij}$) et une valeur de la fonction de pondération ($W_{ij}$).

**2.** Système d'épuration de gaz d'échappement (2) pour un moteur à combustion interne (1) selon la revendication 1, dans lequel le moyen de calcul de valeur estimée (99) calcule une valeur estimée ($ST_{UREA\ MAX}$) d'une capacité de stockage maximum en multipliant une valeur de référence ($ST_{UREA\ BS}$) calculée par le moyen de calcul de valeur de référence (91) par un coefficient (KVNS) calculé sur la base d'un total de somme ($\Sigma\Sigma W_{ij}U_{ij}$) sur toutes les régions de produits entre la valeur de correction ($U_{ij}$) et une valeur de la fonction de pondération.

**3.** Système d'épuration de gaz d'échappement (2) pour un moteur à combustion interne (1) selon la revendication 1, dans lequel le moyen de calcul de valeur estimée (99) calcule une valeur estimée ($ST_{UREA\ MAX}$) d'une capacité de stockage maximum en ajoutant une valeur de référence ($ST_{UREA\ BS}$) calculée par le moyen de calcul de valeur de référence (91) à un coefficient (DVNS) calculé sur la base d'un total de somme ($\Sigma\Sigma W_{ij}U_{ij}$) sur toutes les régions de produits entre la valeur de correction ($U_{ij}$) et une valeur de la fonction de pondération.

**4.** Système d'épuration de gaz d'échappement (2) pour un moteur à combustion interne (1) selon la revendication 1 ou 2, dans lequel le moyen de calcul de valeur estimée de capacité de stockage maximum (9) comprend en outre un moyen de réglage de surface de réponse (94) pour régler une surface de réponse pondérant une quantité de changement dans la capacité de stockage maximum due à une dégradation du catalyseur de réduction sélectif (231), avec les paramètres de référence comme domaine, et
dans lequel la valeur estimée ($ST_{UREA\ MAX}$) de la capacité de stockage maximum est calculée sur la base d'une valeur (EVNS) calculée en multipliant le paramètre d'erreur ($ENH3_{CONS}$) par une valeur ($W_{RSM}$) de la surface de réponse.

FIG. 1

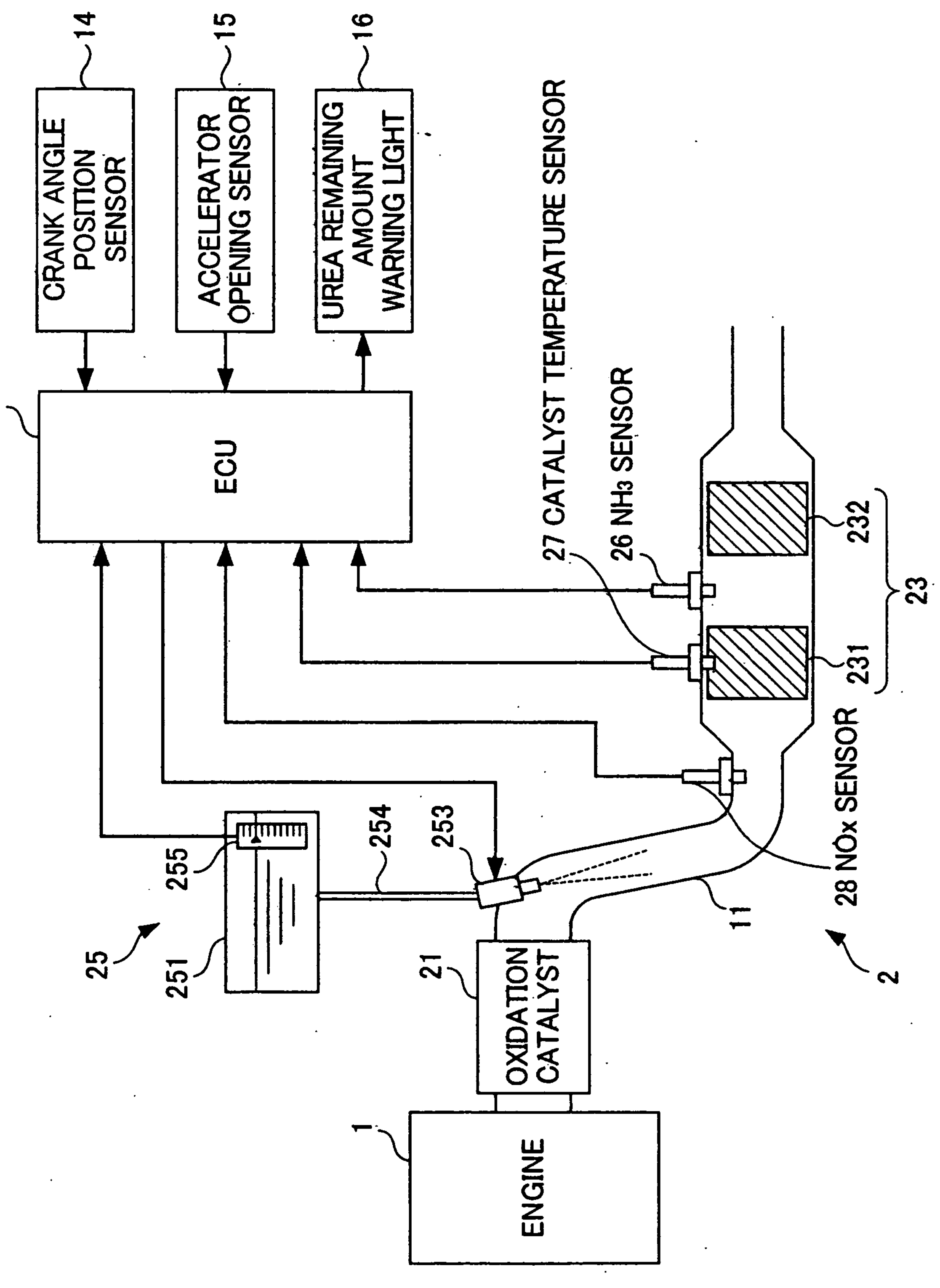
CRANK ANGLE POSITION SENSOR
14
ACCELERATOR OPENING SENSOR
15
UREA REMAINING AMOUNT WARNING LIGHT
16
3
ECU
27 CATALYST TEMPERATURE SENSOR
26 NH3 SENSOR
232
231
23
28 NOx SENSOR
255
254
253
25
251
21
OXIDATION CATALYST
11
2
1
ENGINE

FIG. 2

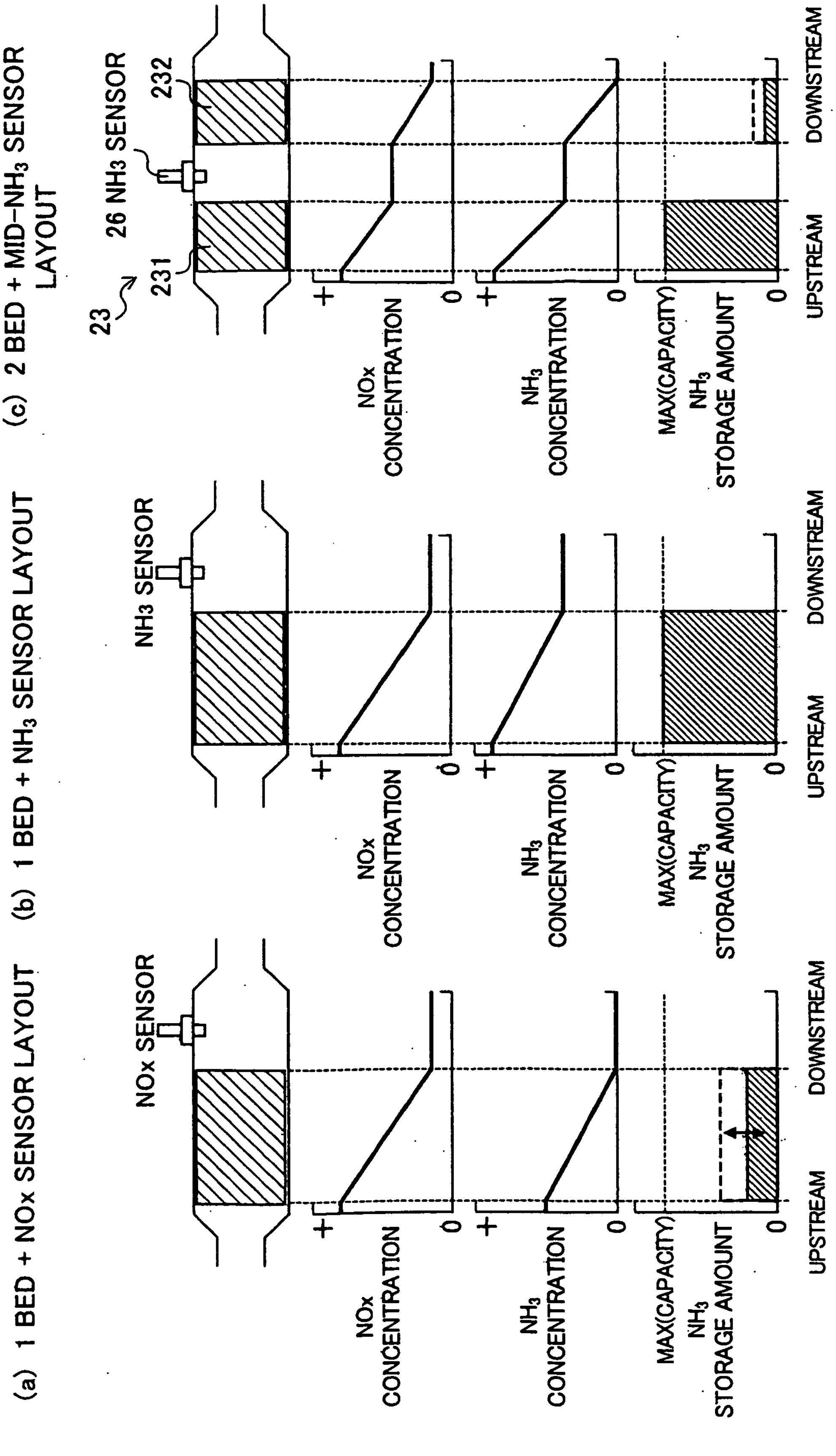
(a) 1 BED + NOx SENSOR LAYOUT
NOx SENSOR
NOx CONCENTRATION
$NH_3$ CONCENTRATION
MAX(CAPACITY)
$NH_3$ STORAGE AMOUNT
+
0
UPSTREAM
DOWNSTREAM
(b) 1 BED + $NH_3$ SENSOR LAYOUT
$NH_3$ SENSOR
NOx CONCENTRATION
$NH_3$ CONCENTRATION
MAX(CAPACITY)
$NH_3$ STORAGE AMOUNT
UPSTREAM
DOWNSTREAM
(c) 2 BED + MID-$NH_3$ SENSOR LAYOUT
23
231
26 $NH_3$ SENSOR
232
NOx CONCENTRATION
$NH_3$ CONCENTRATION
MAX(CAPACITY)
$NH_3$ STORAGE AMOUNT
UPSTREAM
DOWNSTREAM

FIG. 3

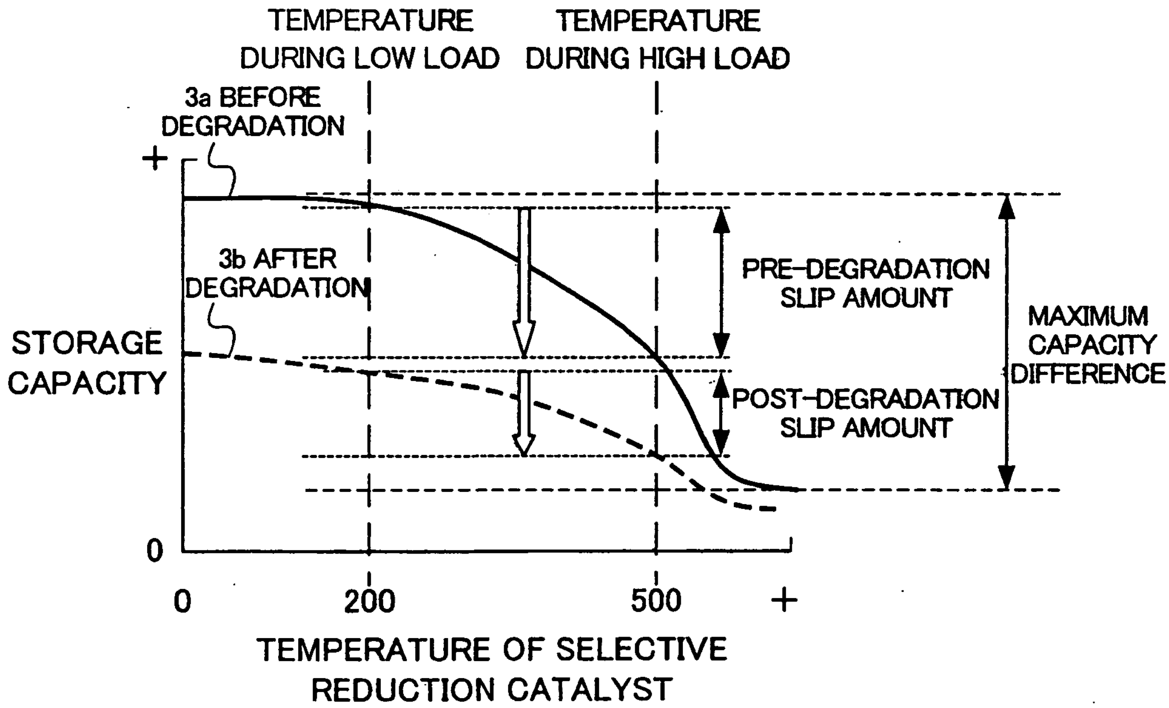
TEMPERATURE DURING LOW LOAD
TEMPERATURE DURING HIGH LOAD
3a BEFORE DEGRADATION
3b AFTER DEGRADATION
+
STORAGE CAPACITY
0
PRE-DEGRADATION SLIP AMOUNT
POST-DEGRADATION SLIP AMOUNT
MAXIMUM CAPACITY DIFFERENCE
0
200
500
+
TEMPERATURE OF SELECTIVE REDUCTION CATALYST

FIG. 4

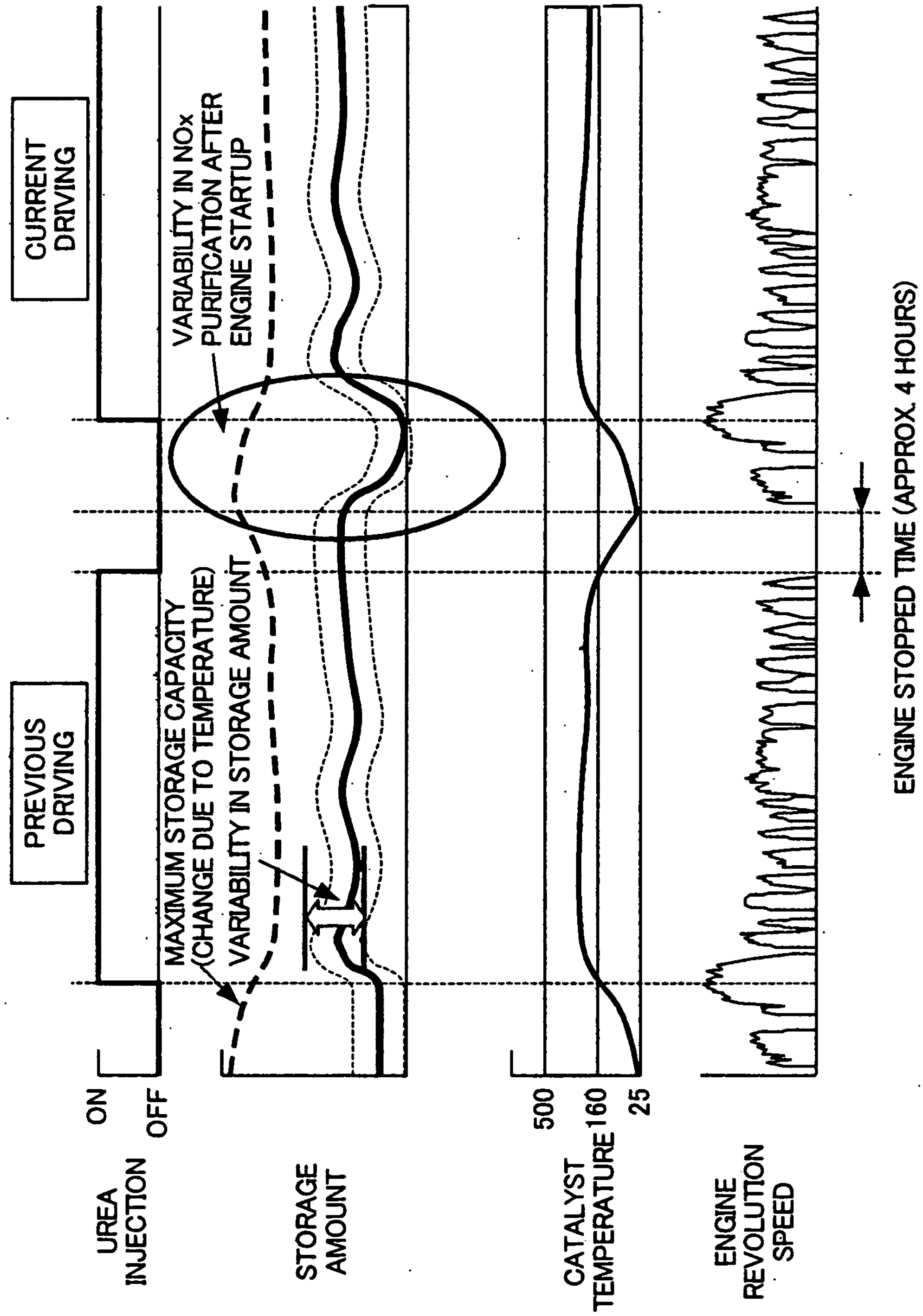
PREVIOUS DRIVING
CURRENT DRIVING
UREA INJECTION
ON
OFF
STORAGE AMOUNT
MAXIMUM STORAGE CAPACITY (CHANGE DUE TO TEMPERATURE)
VARIABILITY IN STORAGE AMOUNT
VARIABILITY IN NOx PURIFICATION AFTER ENGINE STARTUP
CATALYST TEMPERATURE
500
160
25
ENGINE REVOLUTION SPEED
ENGINE STOPPED TIME (APPROX. 4 HOURS)

FIG. 5

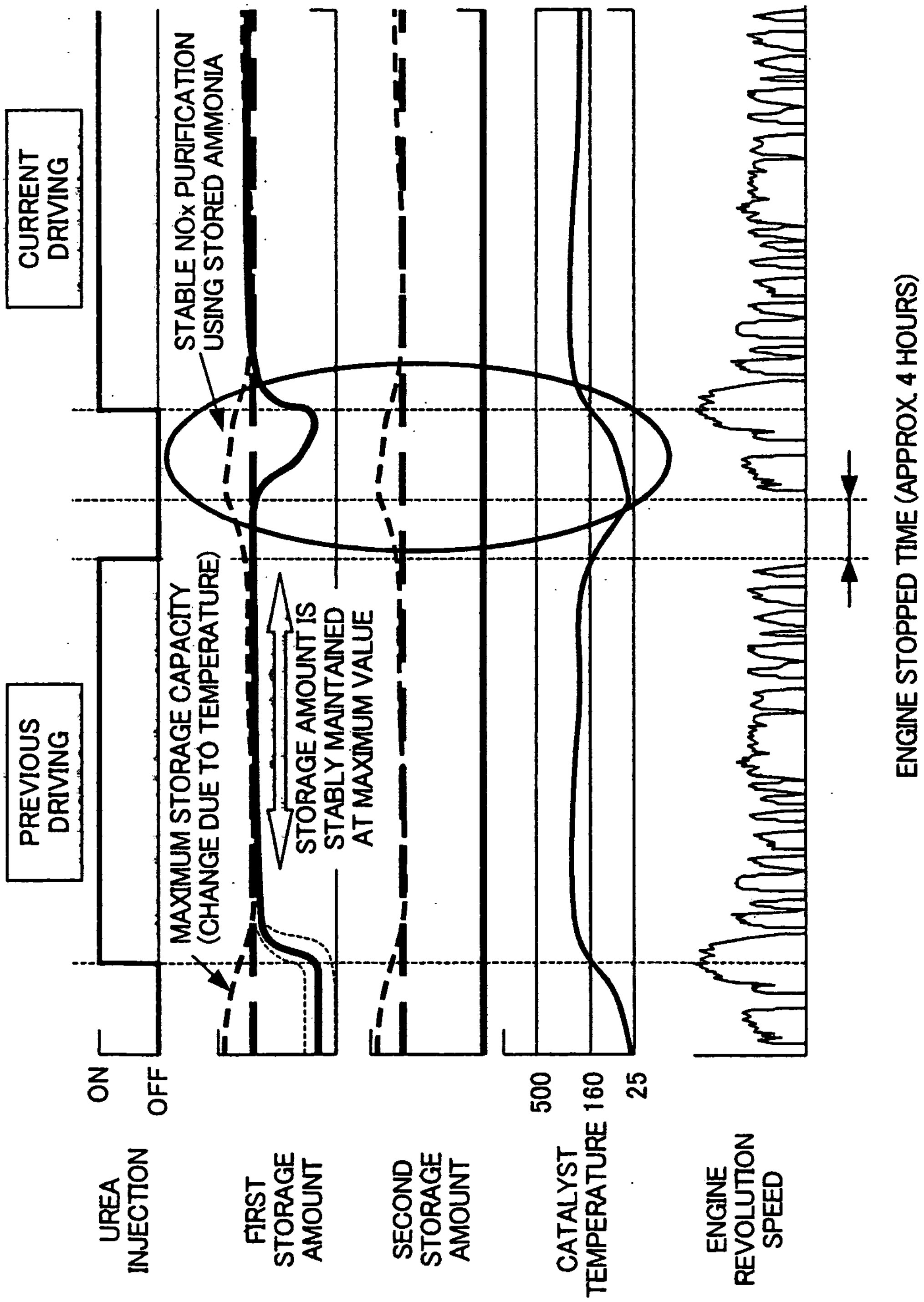
PREVIOUS DRIVING
CURRENT DRIVING
MAXIMUM STORAGE CAPACITY (CHANGE DUE TO TEMPERATURE)
STORAGE AMOUNT IS STABLY MAINTAINED AT MAXIMUM VALUE
STABLE NOx PURIFICATION USING STORED AMMONIA
UREA INJECTION
ON
OFF
FIRST STORAGE AMOUNT
SECOND STORAGE AMOUNT
CATALYST TEMPERATURE
500
160
25
ENGINE REVOLUTION SPEED
ENGINE STOPPED TIME (APPROX. 4 HOURS)

FIG. 6

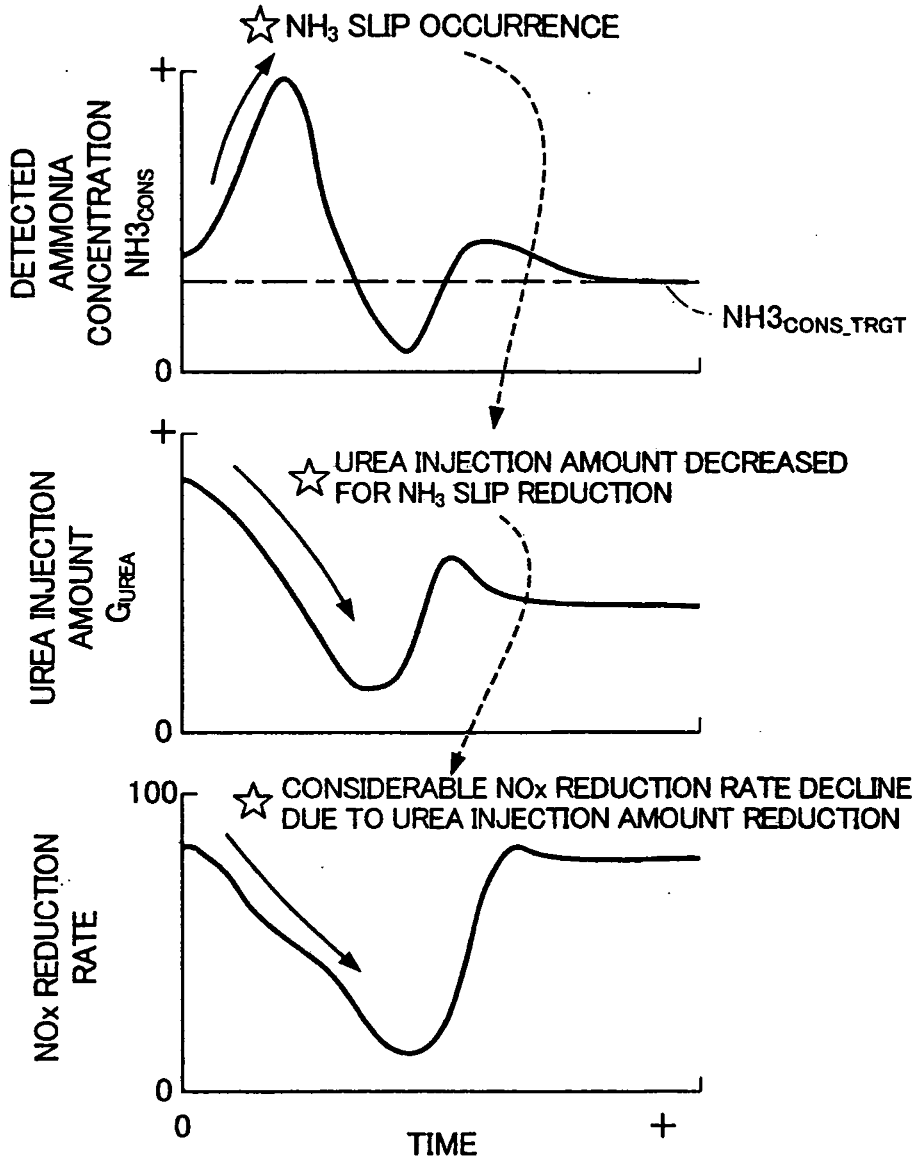
NH3 SLIP OCCURRENCE
DETECTED AMMONIA CONCENTRATION NH3CONS
+
0
NH3CONS_TRGT
UREA INJECTION AMOUNT DECREASED FOR NH3 SLIP REDUCTION
UREA INJECTION AMOUNT GUREA
CONSIDERABLE NOx REDUCTION RATE DECLINE DUE TO UREA INJECTION AMOUNT REDUCTION
NOx REDUCTION RATE
100
TIME

# FIG. 7

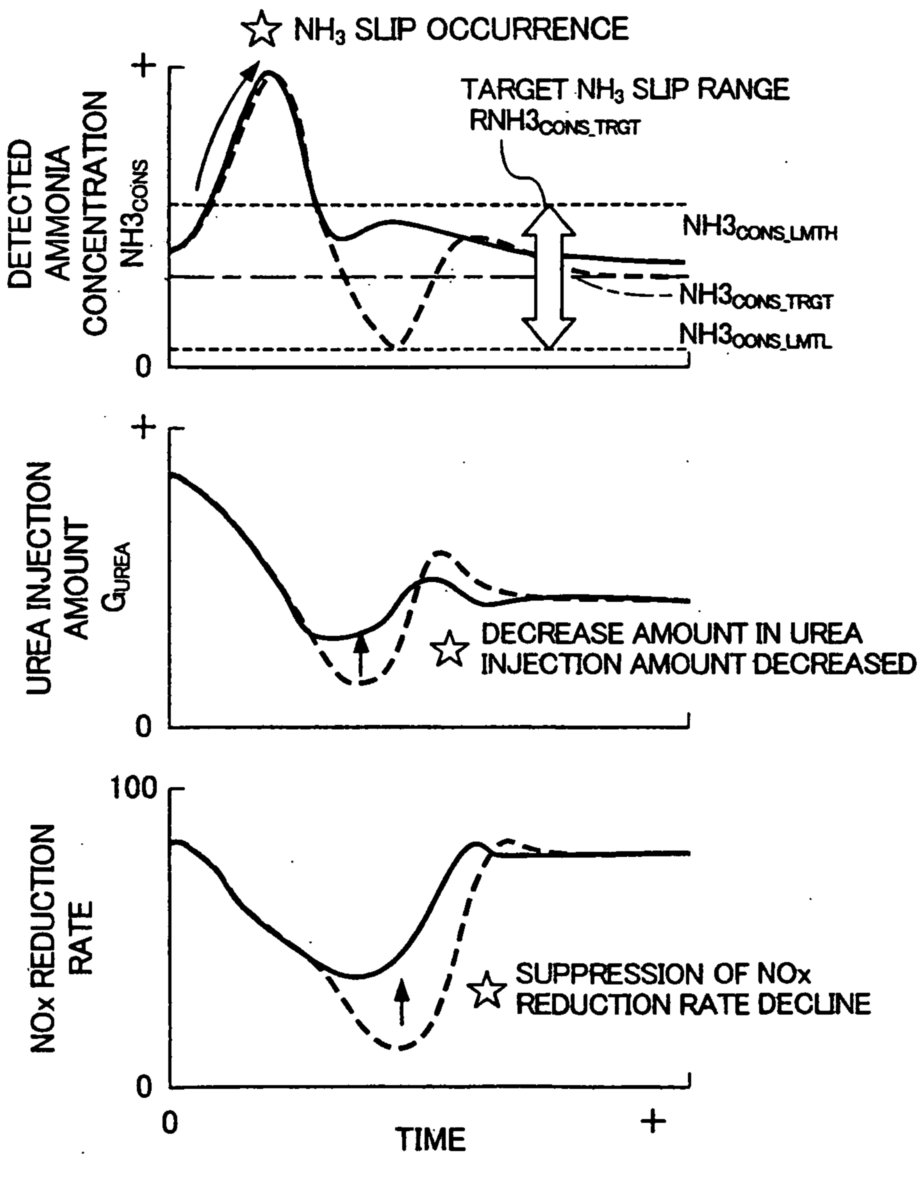
NH₃ SLIP OCCURRENCE
DETECTED AMMONIA CONCENTRATION NH3CONS
TARGET NH₃ SLIP RANGE RNH3CONS_TRGT
NH3CONS_LMTH
NH3CONS_TRGT
NH3CONS_LMTL
UREA INJECTION AMOUNT GUREA
DECREASE AMOUNT IN UREA INJECTION AMOUNT DECREASED
NOx REDUCTION RATE
SUPPRESSION OF NOx REDUCTION RATE DECLINE
100
0
+
TIME

FIG. 8

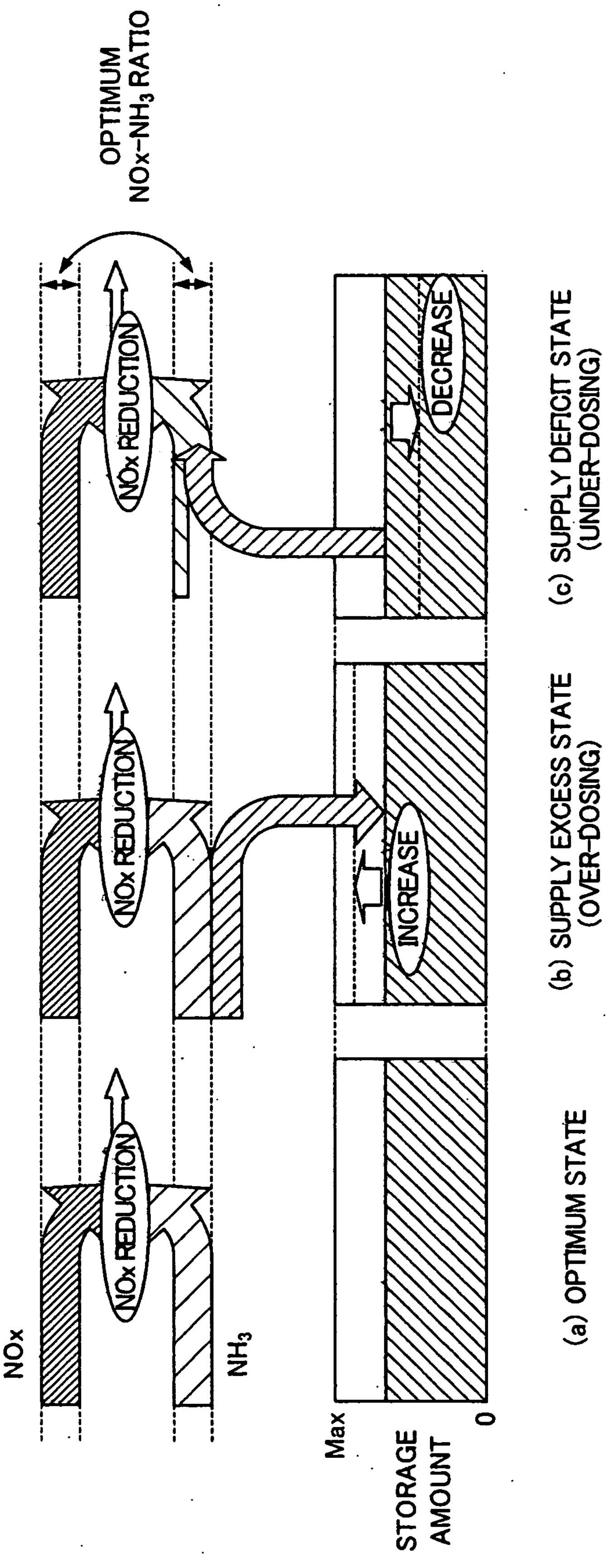
OPTIMUM
$NO_x$-$NH_3$ RATIO
NOx
NH3
NOx REDUCTION
NOx REDUCTION
NOx REDUCTION
Max
STORAGE
AMOUNT
0
INCREASE
DECREASE
(a) OPTIMUM STATE
(b) SUPPLY EXCESS STATE
(OVER-DOSING)
(c) SUPPLY DEFICIT STATE
(UNDER-DOSING)

FIG. 9

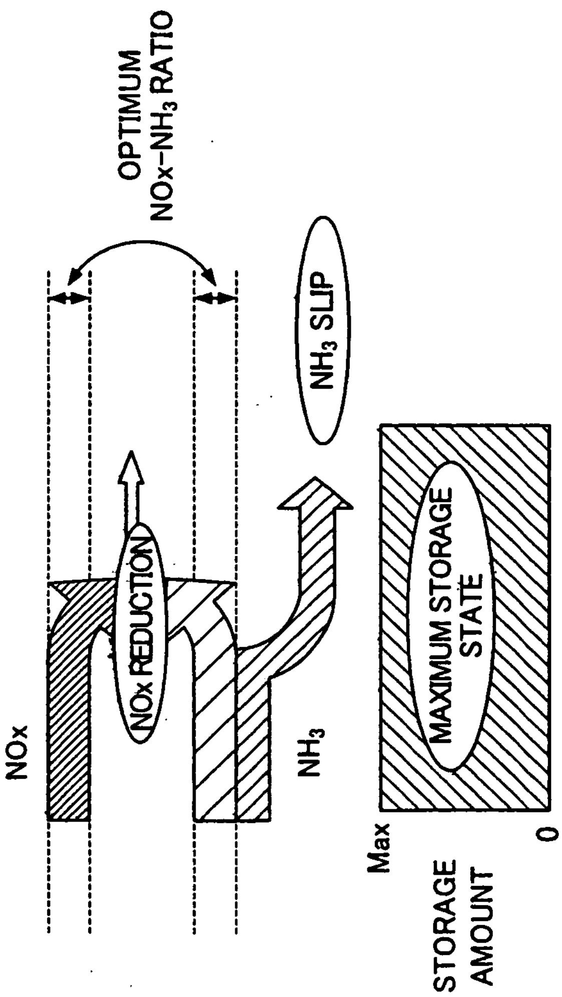
OPTIMUM
NOx-$NH_3$ RATIO
NOx
$NH_3$
NOx REDUCTION
$NH_3$ SLIP
MAXIMUM STORAGE
STATE
Max
0
STORAGE
AMOUNT

FIG. 10

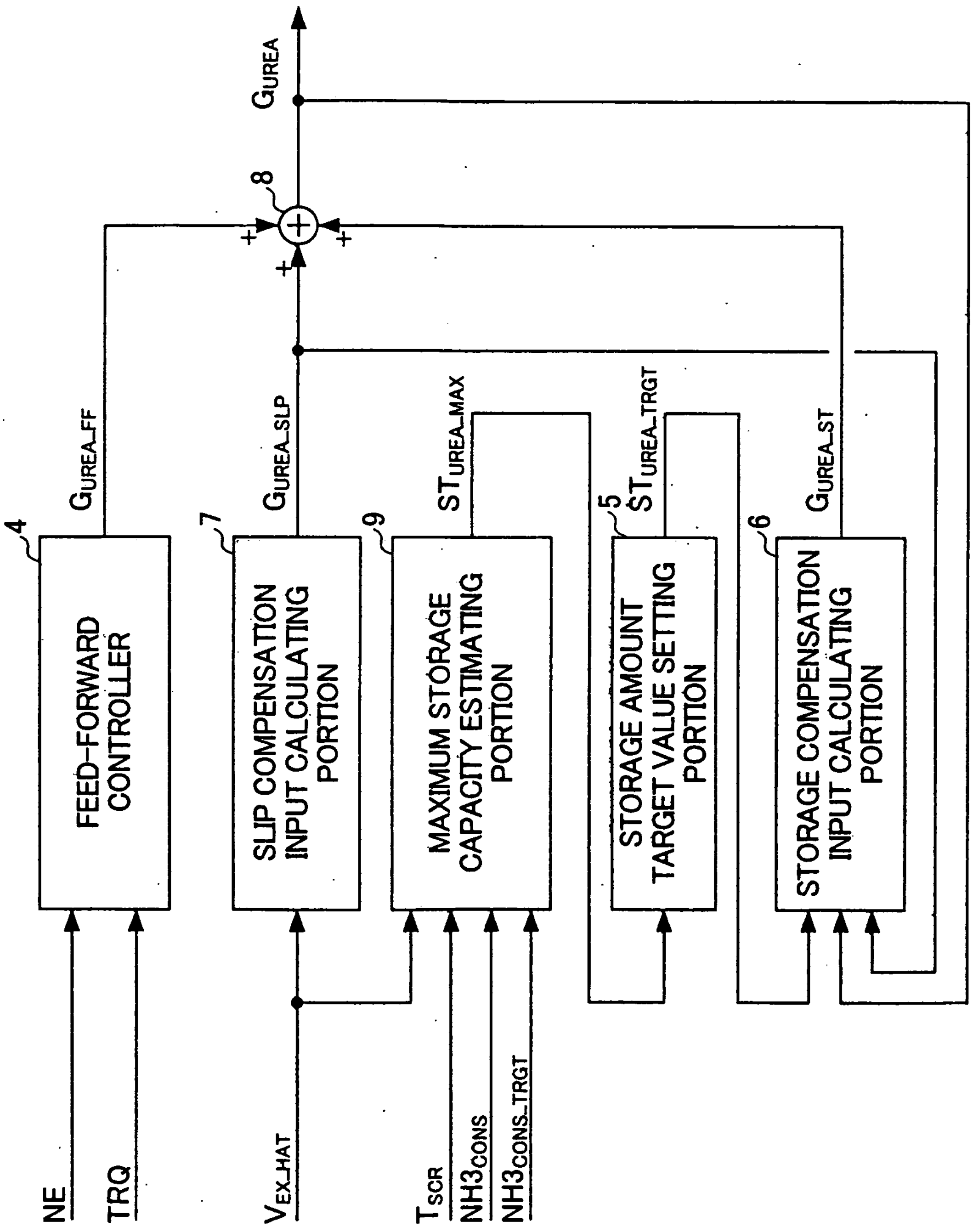
FEED-FORWARD CONTROLLER
SLIP COMPENSATION INPUT CALCULATING PORTION
MAXIMUM STORAGE CAPACITY ESTIMATING PORTION
STORAGE AMOUNT TARGET VALUE SETTING PORTION
STORAGE COMPENSATION INPUT CALCULATING PORTION
4
7
9
5
6
8
NE
TRQ
$V_{EX_HAT}$
$T_{SCR}$
$NH3_{CONS}$
$NH3_{CONS_TRGT}$
$G_{UREA_FF}$
$G_{UREA_SLP}$
$ST_{UREA_MAX}$
$ST_{UREA_TRGT}$
$G_{UREA_ST}$
$G_{UREA}$
+
+
+

FIG. 11

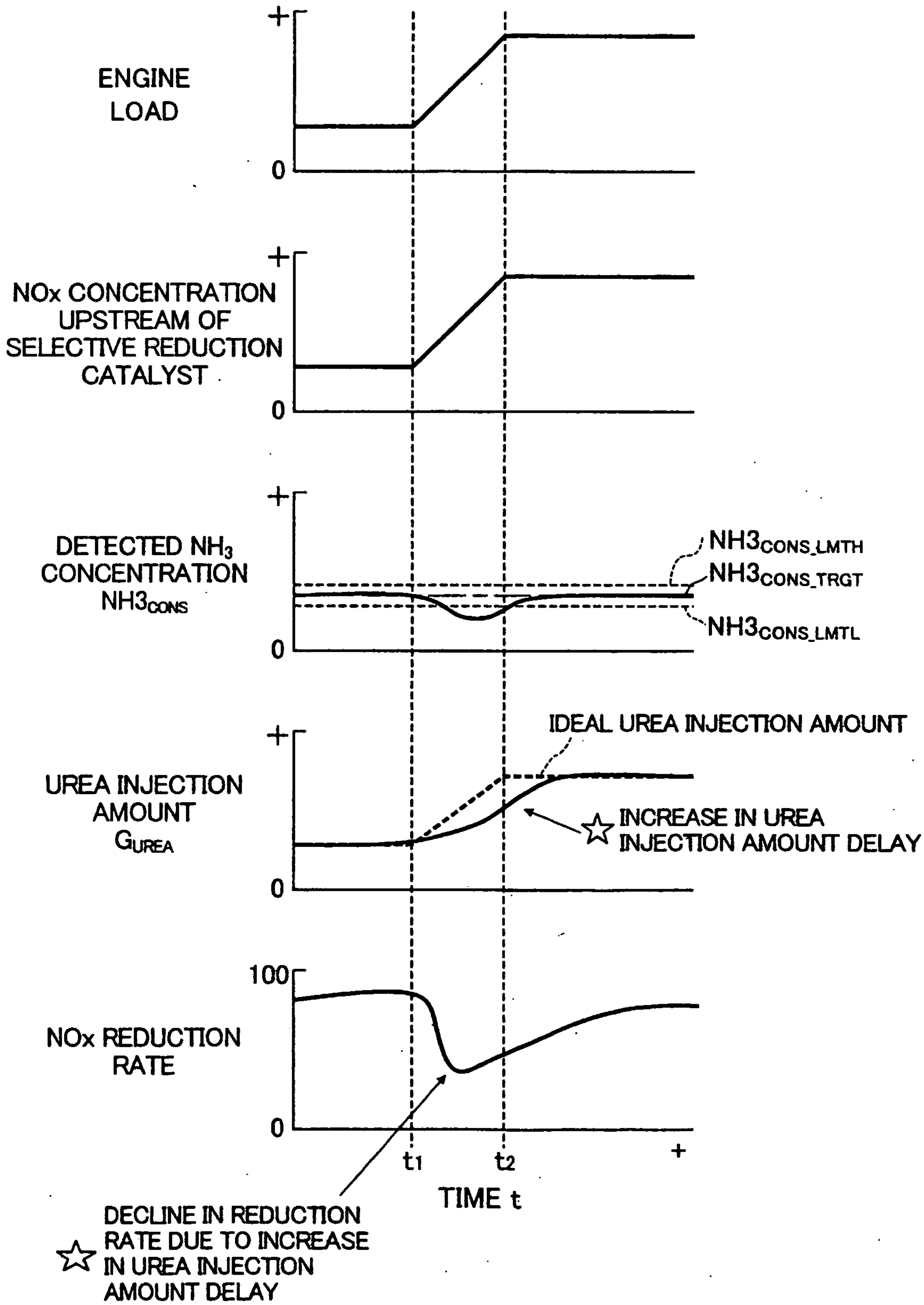
ENGINE LOAD
NOx CONCENTRATION UPSTREAM OF SELECTIVE REDUCTION CATALYST
DETECTED NH3 CONCENTRATION NH3CONS
NH3CONS_LMTH
NH3CONS_TRGT
NH3CONS_LMTL
UREA INJECTION AMOUNT GUREA
IDEAL UREA INJECTION AMOUNT
INCREASE IN UREA INJECTION AMOUNT DELAY
NOx REDUCTION RATE
100
0
+
t1
t2
TIME t
DECLINE IN REDUCTION RATE DUE TO INCREASE IN UREA INJECTION AMOUNT DELAY

FIG. 12

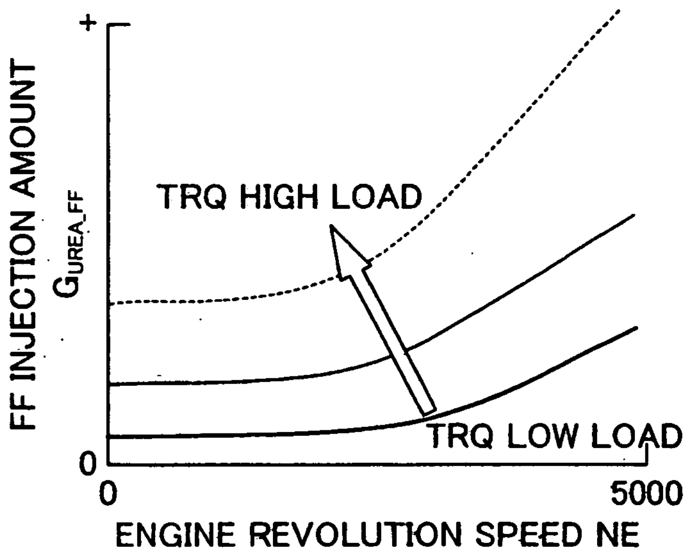
FF INJECTION AMOUNT
$G_{UREA_FF}$
+
0
TRQ HIGH LOAD
TRQ LOW LOAD
0
5000
ENGINE REVOLUTION SPEED NE

FIG. 13

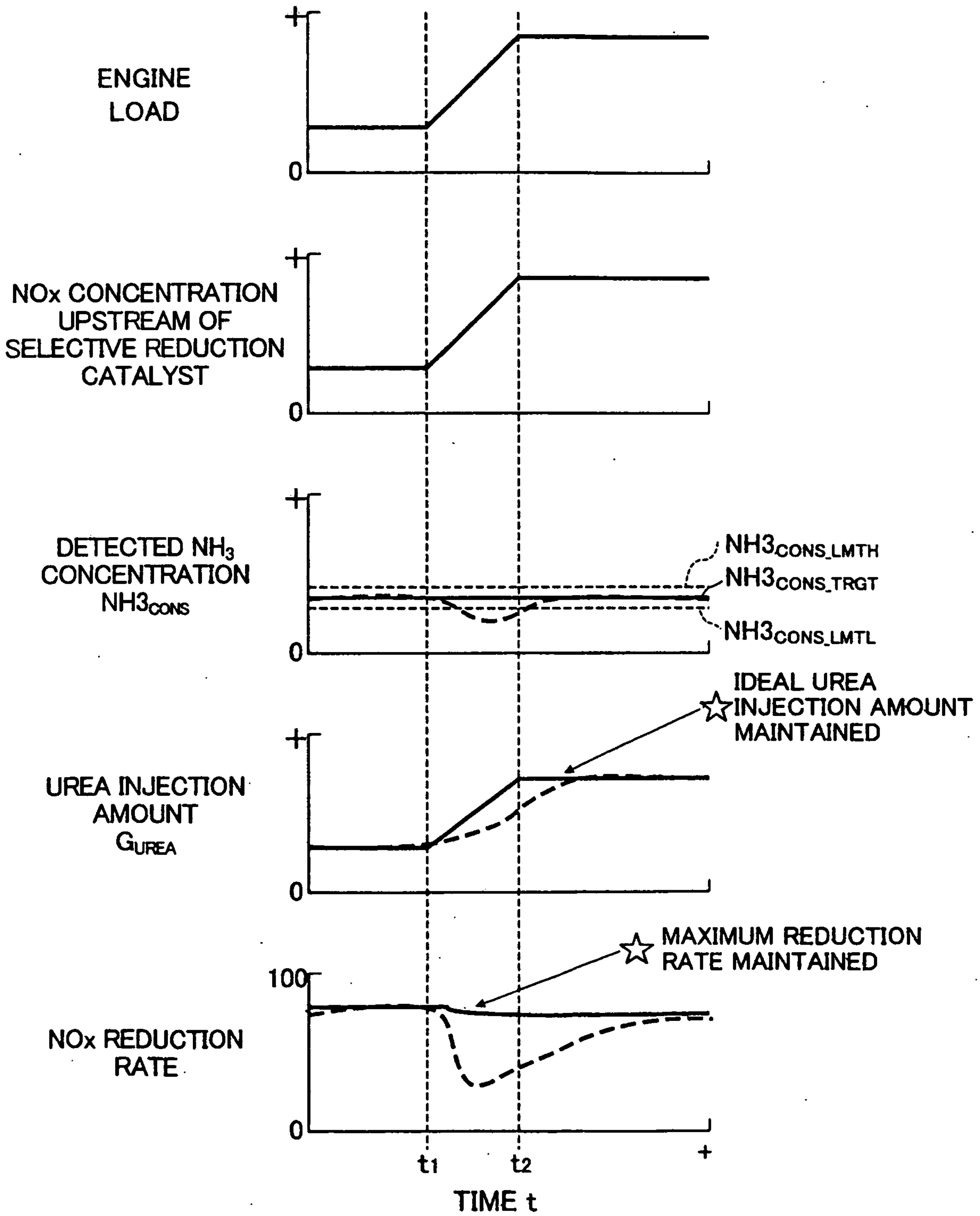
ENGINE LOAD
NOx CONCENTRATION UPSTREAM OF SELECTIVE REDUCTION CATALYST
DETECTED $NH_3$ CONCENTRATION $NH3_{CONS}$
$NH3_{CONS_LMTH}$
$NH3_{CONS_TRGT}$
$NH3_{CONS_LMTL}$
UREA INJECTION AMOUNT $G_{UREA}$
IDEAL UREA INJECTION AMOUNT MAINTAINED
NOx REDUCTION RATE
MAXIMUM REDUCTION RATE MAINTAINED
100
0
+
t1
t2
TIME t

FIG. 14

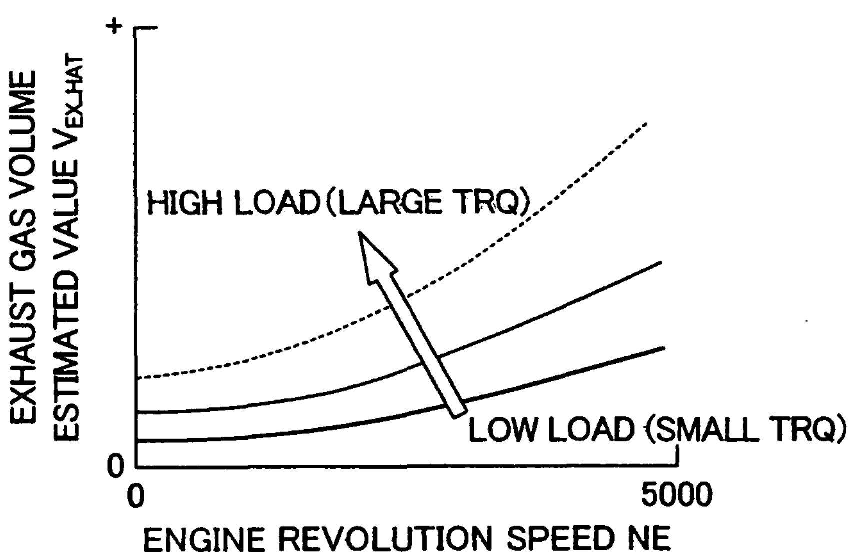
EXHAUST GAS VOLUME
ESTIMATED VALUE V EX_HAT
+
0
HIGH LOAD (LARGE TRQ)
LOW LOAD (SMALL TRQ)
0
5000
ENGINE REVOLUTION SPEED NE

FIG. 15

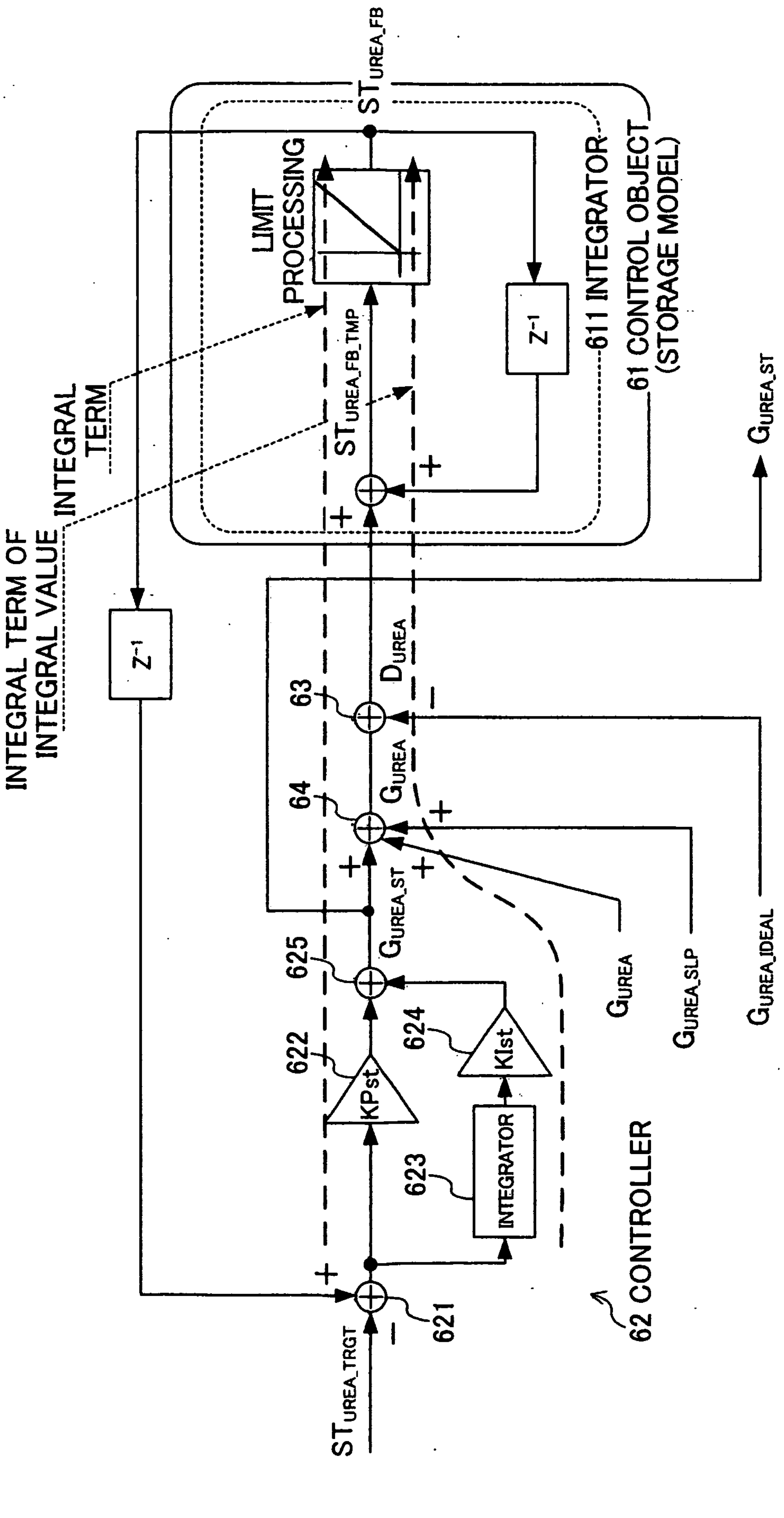
INTEGRAL TERM OF INTEGRAL VALUE
INTEGRAL TERM
$ST_{UREA_FB}$
LIMIT PROCESSING
$ST_{UREA_FB_TMP}$
$z^{-1}$
611 INTEGRATOR
61 CONTROL OBJECT (STORAGE MODEL)
$z^{-1}$
$G_{UREA_ST}$
$D_{UREA}$
63
64
$G_{UREA}$
625
$G_{UREA_ST}$
622
KPst
624
KIst
623
INTEGRATOR
621
$ST_{UREA_TRGT}$
62 CONTROLLER
$G_{UREA}$
$G_{UREA_SLP}$
$G_{UREA_IDEAL}$

FIG. 16

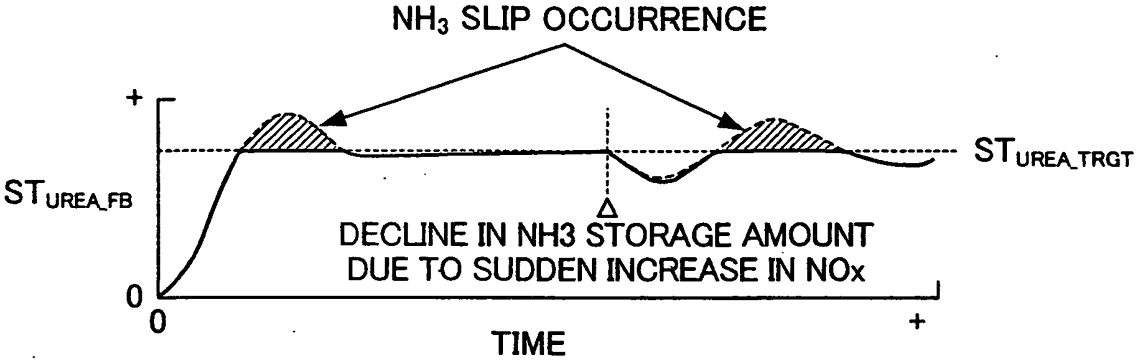
NH3 SLIP OCCURRENCE
+
$ST_{UREA_FB}$
$ST_{UREA_TRGT}$
0
DECLINE IN NH3 STORAGE AMOUNT
DUE TO SUDDEN INCREASE IN NOx
0
+
TIME

FIG. 17

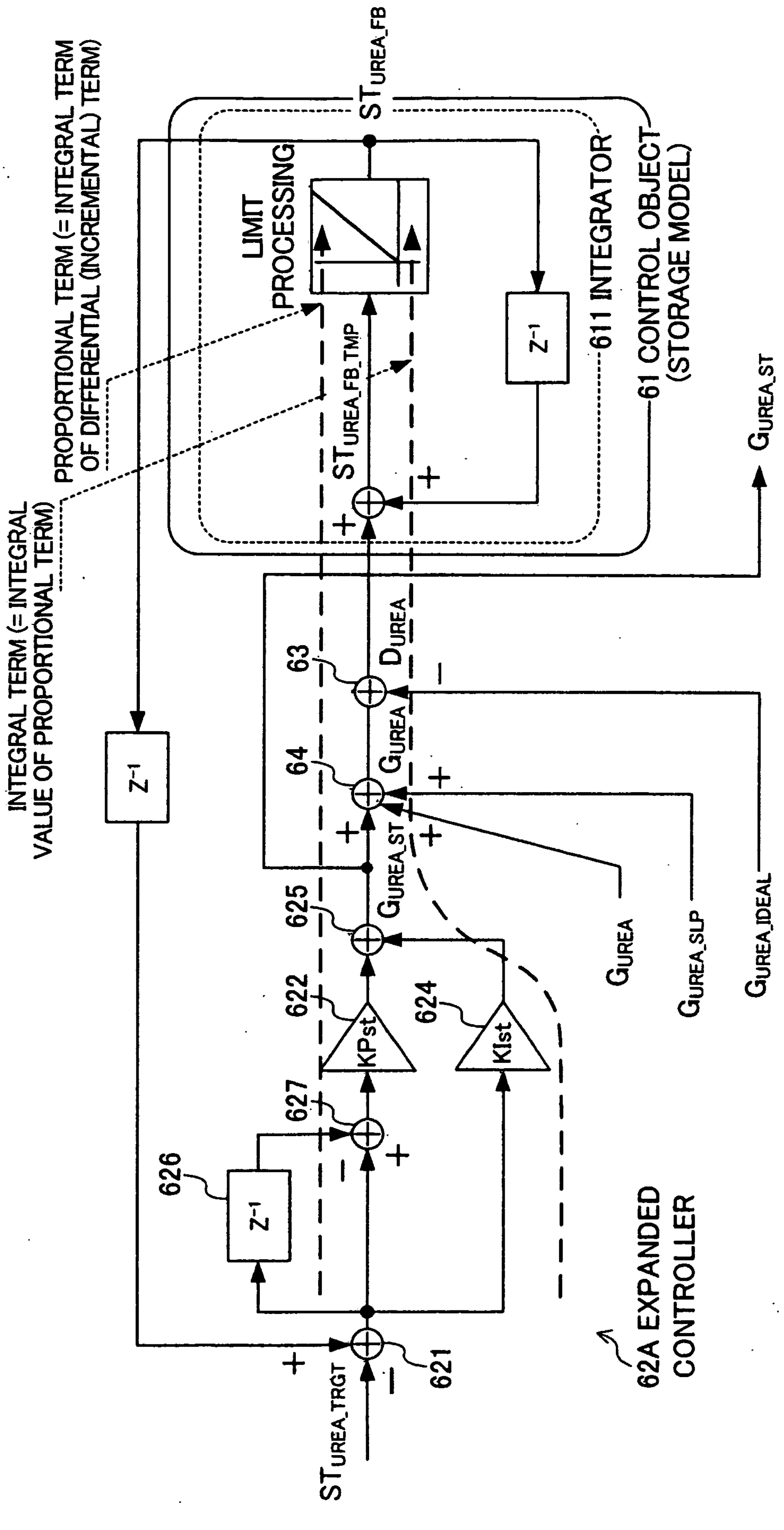

INTEGRAL TERM (= INTEGRAL VALUE OF PROPORTIONAL TERM)
PROPORTIONAL TERM (= INTEGRAL TERM OF DIFFERENTIAL (INCREMENTAL) TERM)
$ST_{UREA_FB}$
LIMIT PROCESSING
$Z^{-1}$
$ST_{UREA_FB_TMP}$
611 INTEGRATOR
61 CONTROL OBJECT (STORAGE MODEL)
$G_{UREA_ST}$
63
64
$D_{UREA}$
$G_{UREA}$
625
622
624
627
626
621
KPst
KIst
$ST_{UREA_TRGT}$
$G_{UREA}$
$G_{UREA_SLP}$
$G_{UREA_IDEAL}$
62A EXPANDED CONTROLLER

FIG. 18

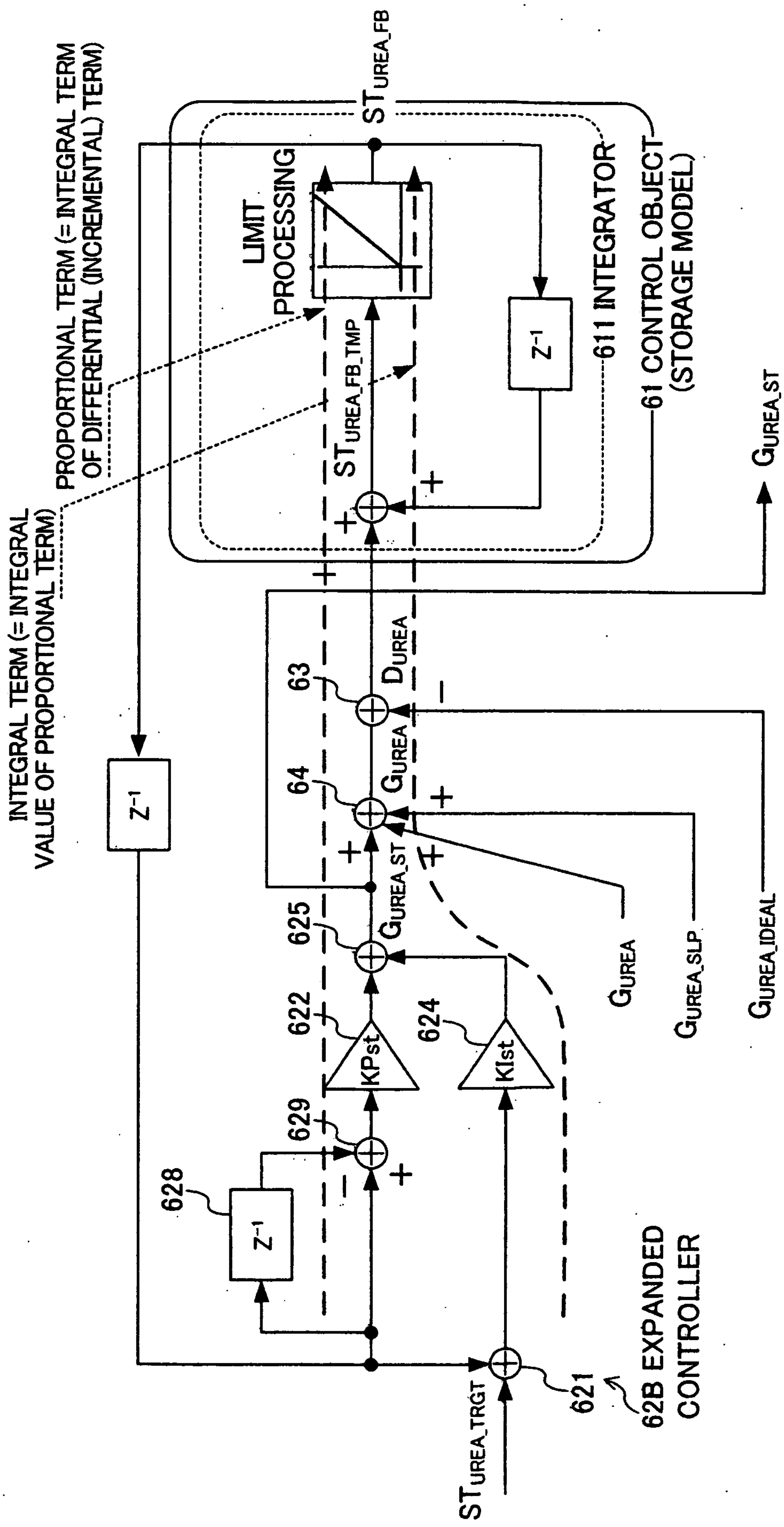
INTEGRAL TERM (= INTEGRAL VALUE OF PROPORTIONAL TERM)
PROPORTIONAL TERM (= INTEGRAL TERM OF DIFFERENTIAL (INCREMENTAL) TERM)
ST UREA_FB
LIMIT PROCESSING
ST UREA_FB_TMP
Z-1
611 INTEGRATOR
61 CONTROL OBJECT (STORAGE MODEL)
G UREA_ST
63
D UREA
64
G UREA
625
G UREA_ST
622
KPst
624
KIst
629
628
G UREA
G UREA_SLP
G UREA_IDEAL
ST UREA_TRGT
621
62B EXPANDED CONTROLLER

FIG. 19

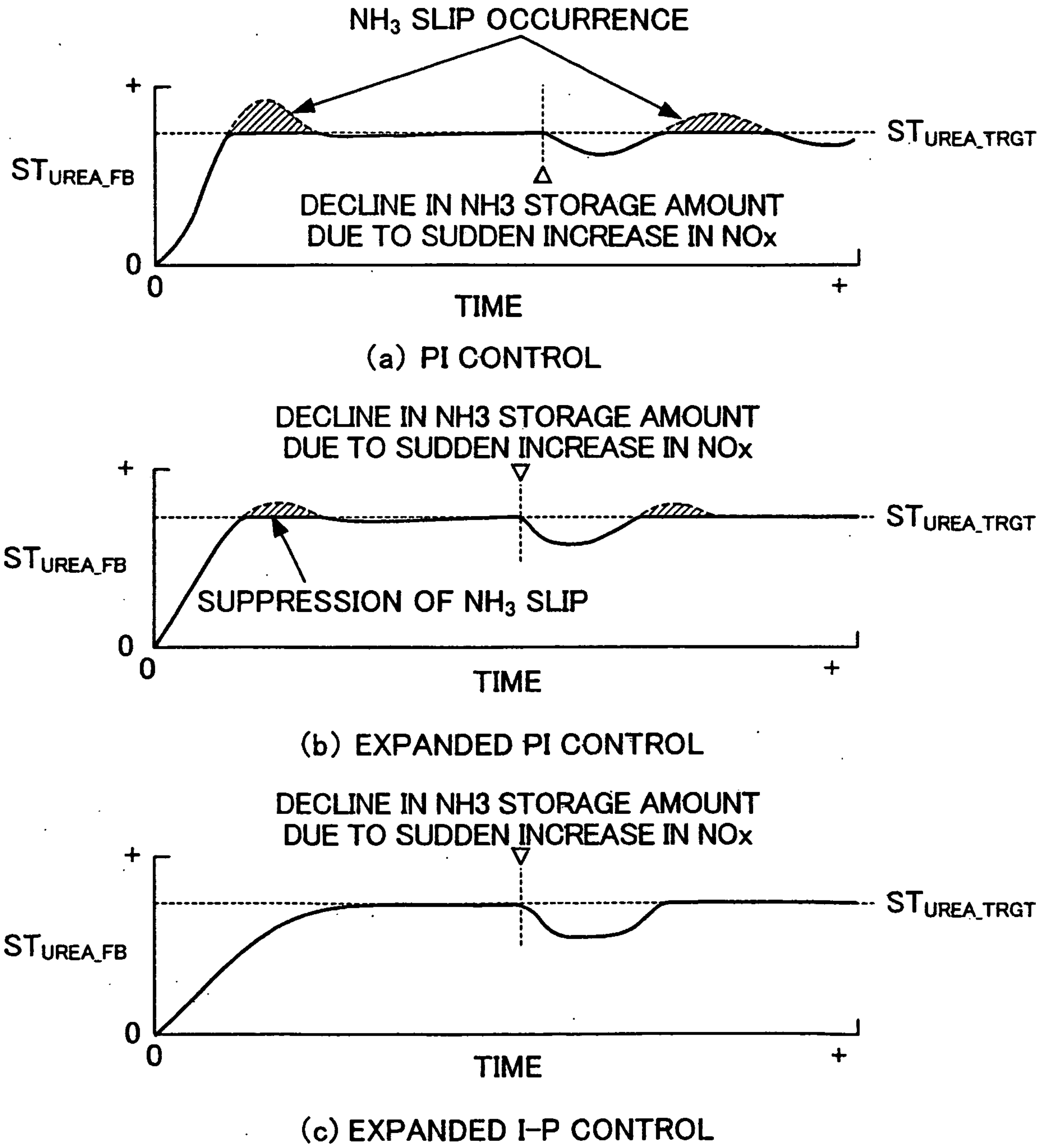


(c) EXPANDED I-P CONTROL

FIG. 20

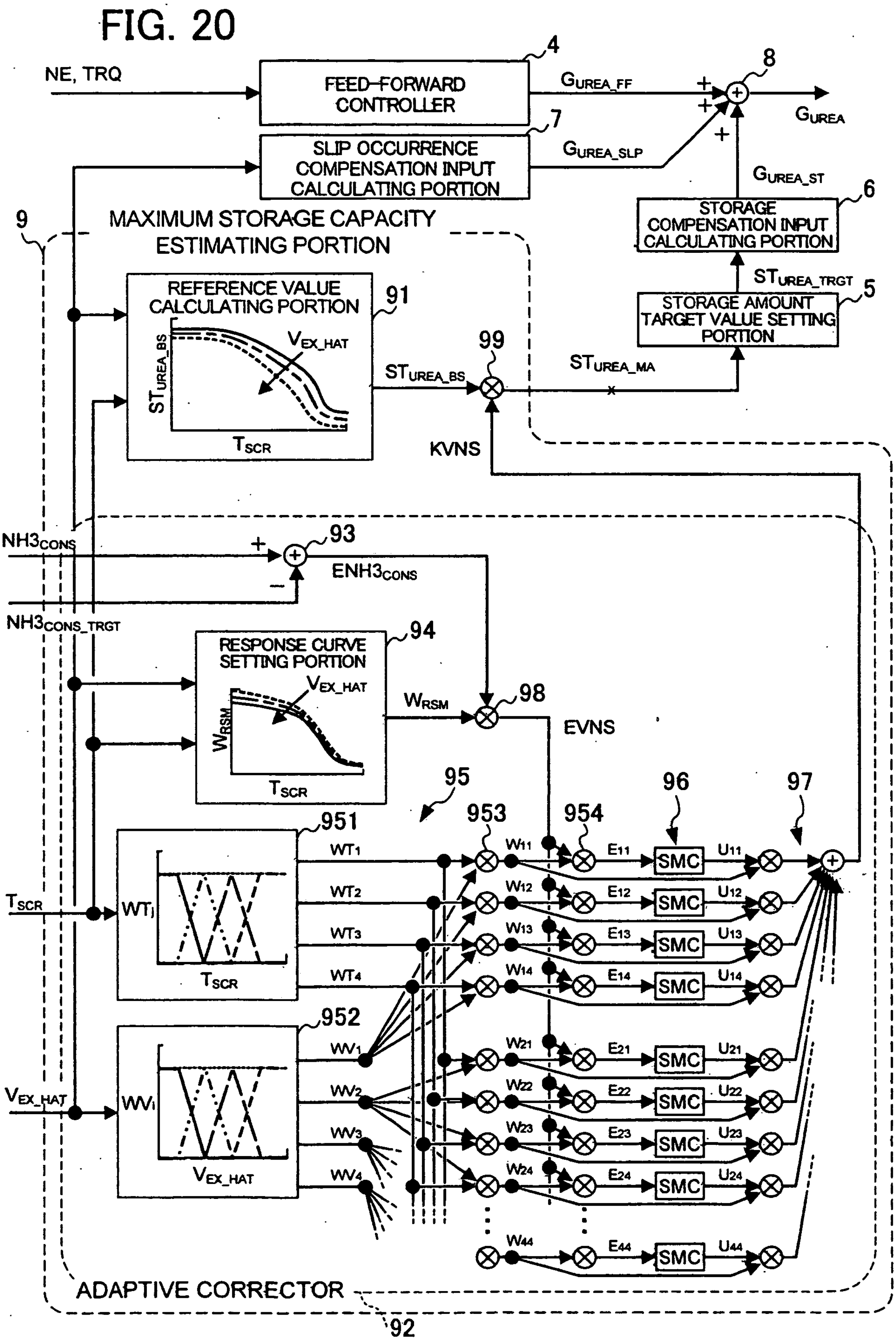

NE, TRQ
FEED-FORWARD CONTROLLER
4
G_UREA_FF
8
G_UREA
SLIP OCCURRENCE COMPENSATION INPUT CALCULATING PORTION
7
G_UREA_SLP
G_UREA_ST
STORAGE COMPENSATION INPUT CALCULATING PORTION
6
ST_UREA_TRGT
STORAGE AMOUNT TARGET VALUE SETTING PORTION
5
9
MAXIMUM STORAGE CAPACITY ESTIMATING PORTION
REFERENCE VALUE CALCULATING PORTION
91
ST_UREA_BS
V_EX_HAT
T_SCR
99
ST_UREA_MA
KVNS
NH3_CONS
93
ENH3_CONS
NH3_CONS_TRGT
RESPONSE CURVE SETTING PORTION
94
W_RSM
98
EVNS
95
96
97
951
953
954
WT_1
WT_2
WT_3
WT_4
WT_i
952
WV_1
WV_2
WV_3
WV_4
WV_i
SMC
ADAPTIVE CORRECTOR
92

FIG. 21

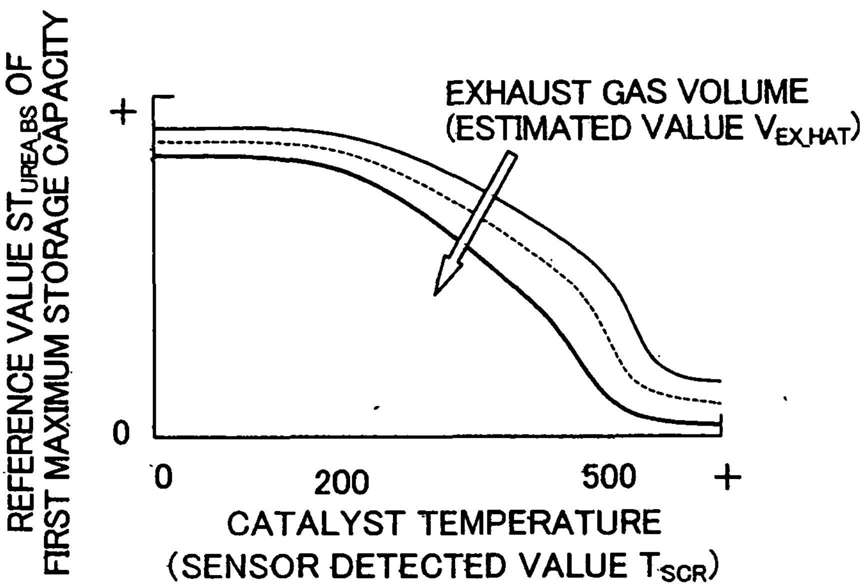
REFERENCE VALUE $ST_{UREA_BS}$ OF
FIRST MAXIMUM STORAGE CAPACITY
+
0
EXHAUST GAS VOLUME
(ESTIMATED VALUE $V_{EX_HAT}$)
0
200
500
+
CATALYST TEMPERATURE
(SENSOR DETECTED VALUE $T_{SCR}$)

FIG. 22

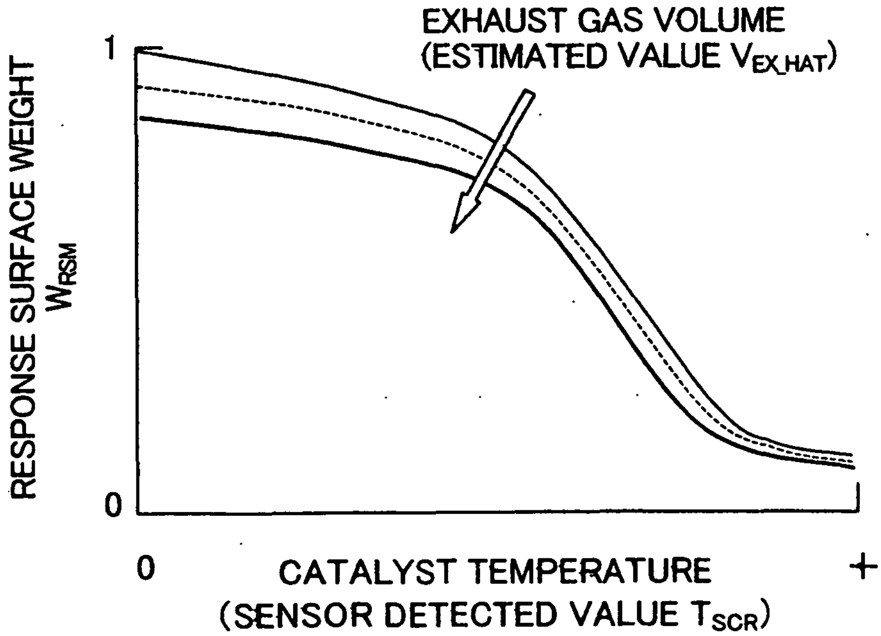
RESPONSE SURFACE WEIGHT
$W_{RSM}$
1
0
EXHAUST GAS VOLUME
(ESTIMATED VALUE $V_{EX_HAT}$)
0
CATALYST TEMPERATURE
+
(SENSOR DETECTED VALUE $T_{SCR}$)

FIG. 23

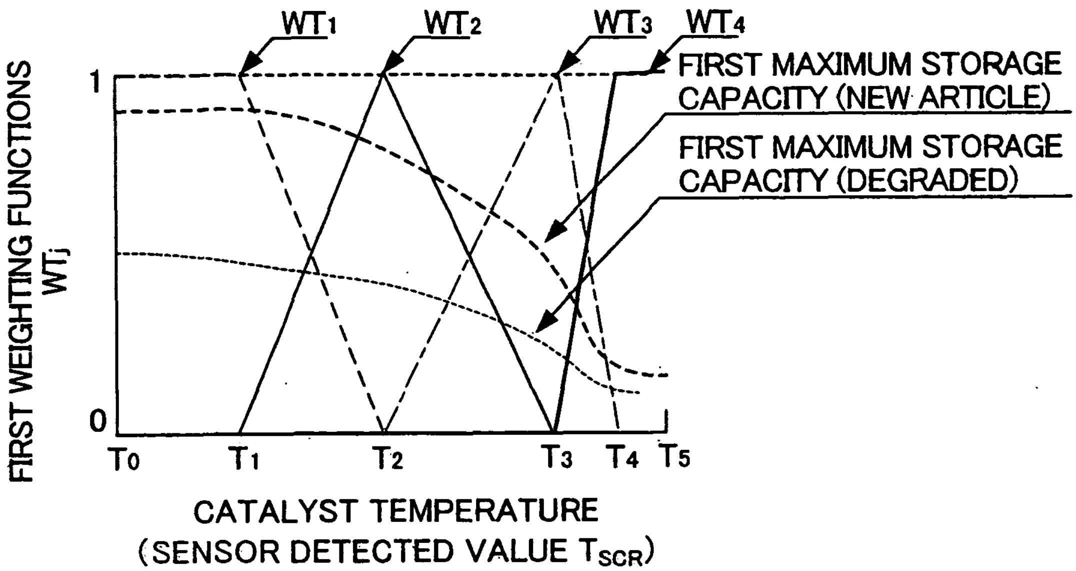
WT1
WT2
WT3
WT4
FIRST MAXIMUM STORAGE CAPACITY (NEW ARTICLE)
FIRST MAXIMUM STORAGE CAPACITY (DEGRADED)
FIRST WEIGHTING FUNCTIONS
WTj
1
0
T0
T1
T2
T3
T4
T5
CATALYST TEMPERATURE
(SENSOR DETECTED VALUE TSCR)

FIG. 24

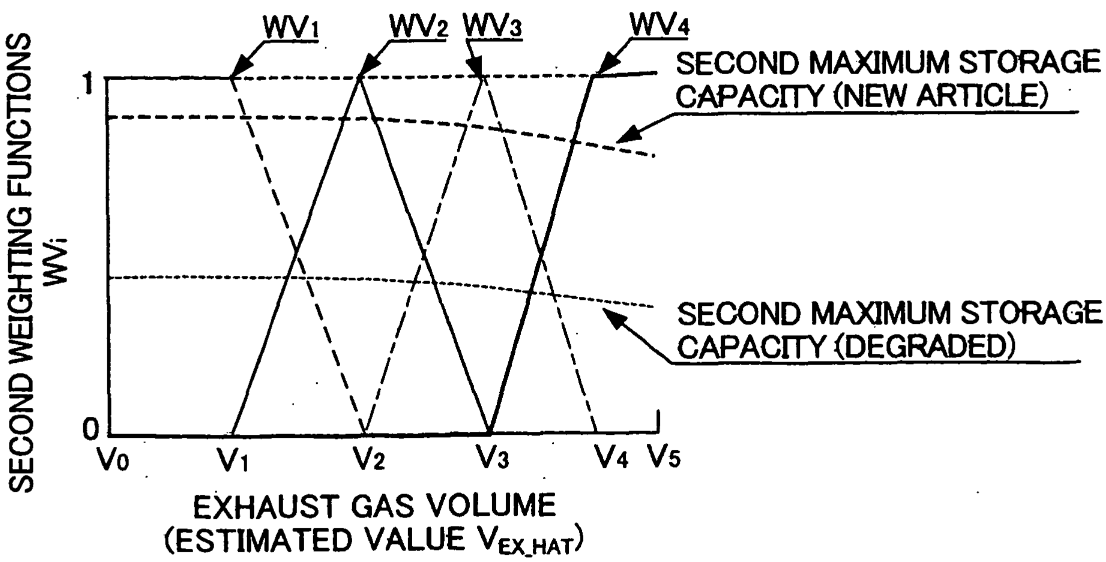
WV1
WV2
WV3
WV4
SECOND MAXIMUM STORAGE CAPACITY (NEW ARTICLE)
SECOND MAXIMUM STORAGE CAPACITY (DEGRADED)
SECOND WEIGHTING FUNCTIONS
WVi
1
0
V0
V1
V2
V3
V4
V5
EXHAUST GAS VOLUME
(ESTIMATED VALUE VEX_HAT)

FIG. 25

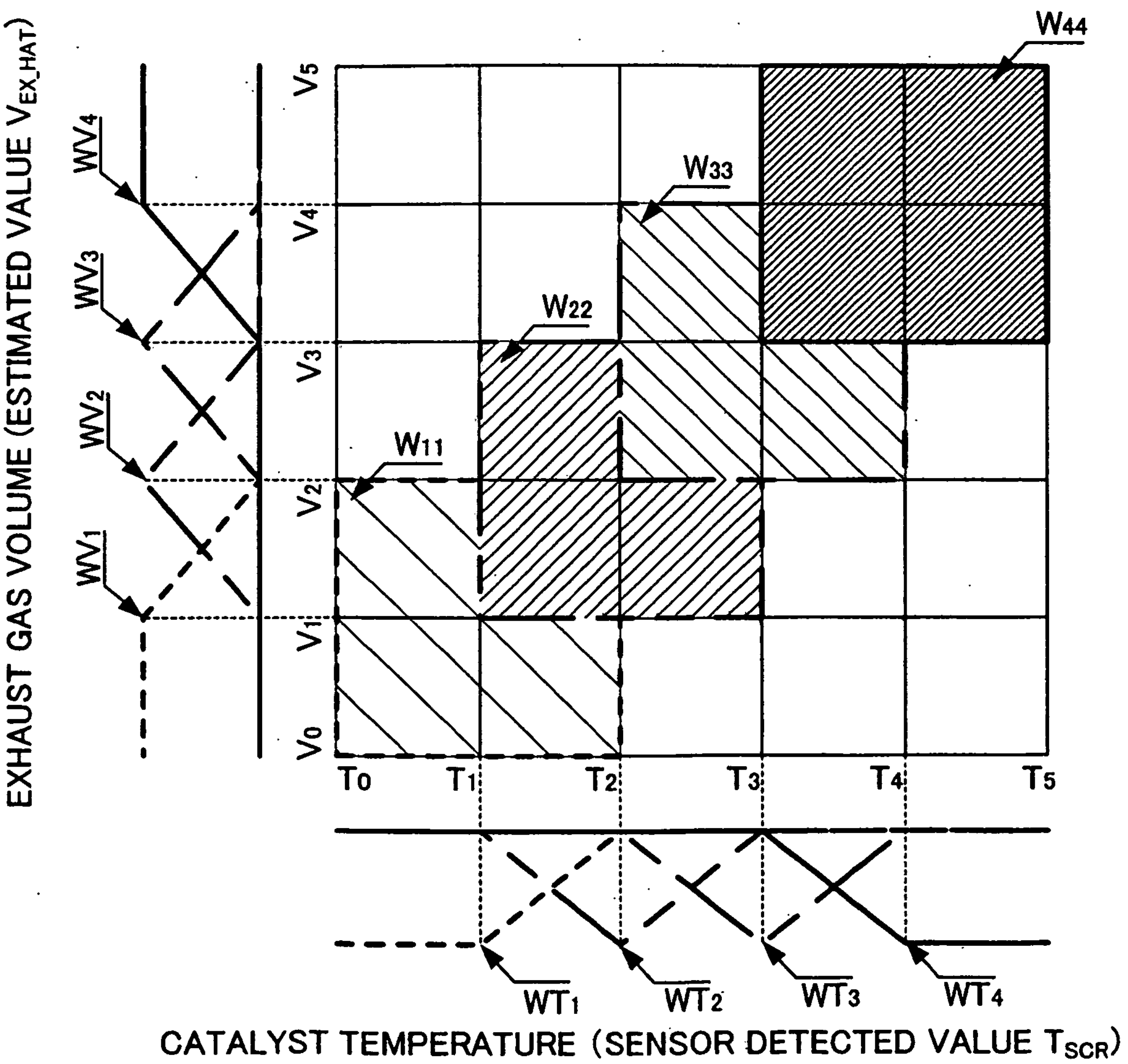
EXHAUST GAS VOLUME (ESTIMATED VALUE $V_{EX_HAT}$)
WV4
WV3
WV2
WV1
V5
V4
V3
V2
V1
V0
W44
W33
W22
W11
T0
T1
T2
T3
T4
T5
WT1
WT2
WT3
WT4
CATALYST TEMPERATURE (SENSOR DETECTED VALUE $T_{SCR}$)

FIG. 26

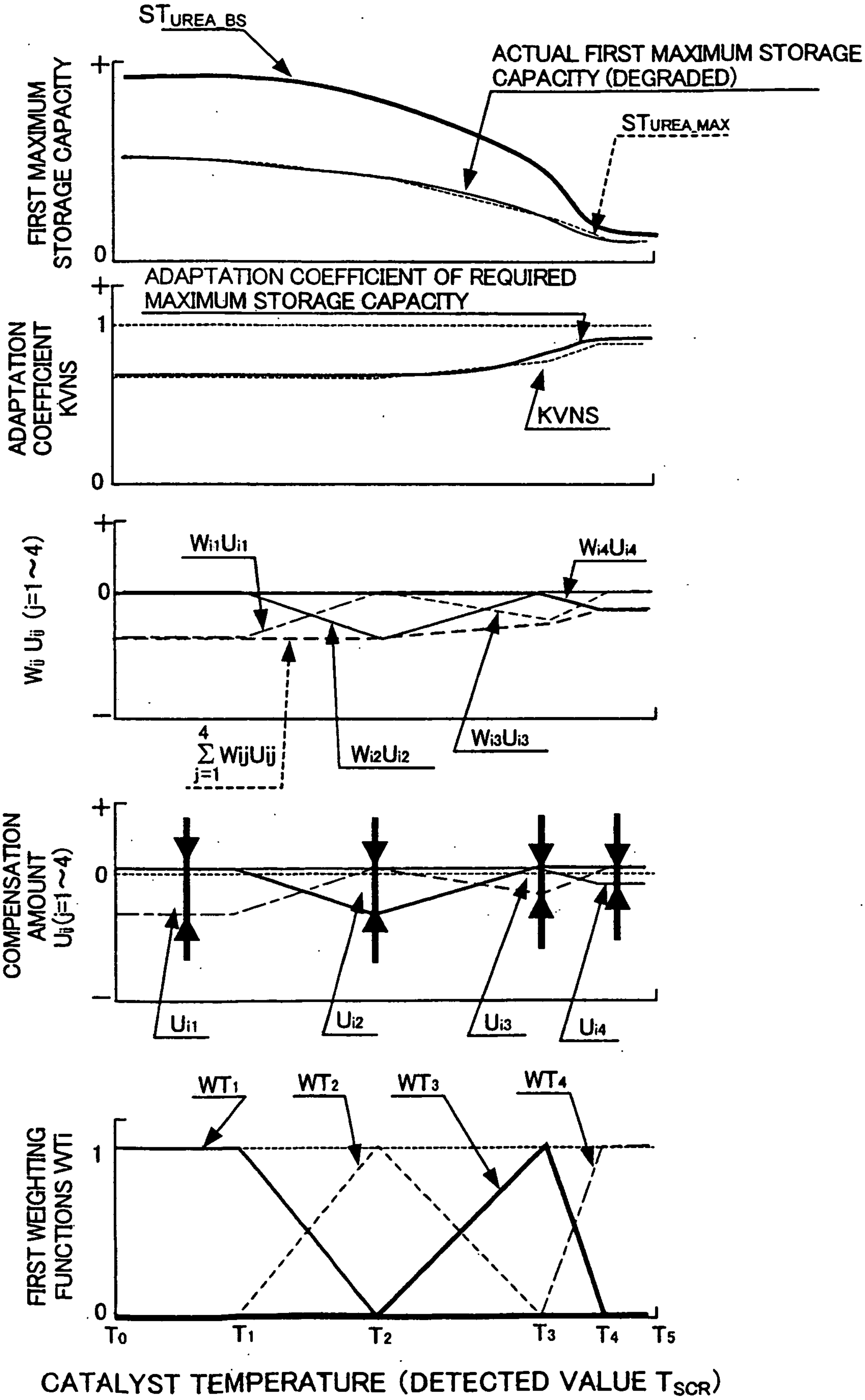
$ST_{UREA_BS}$
ACTUAL FIRST MAXIMUM STORAGE CAPACITY (DEGRADED)
$ST_{UREA_MAX}$
FIRST MAXIMUM STORAGE CAPACITY
+
0
ADAPTATION COEFFICIENT OF REQUIRED MAXIMUM STORAGE CAPACITY
ADAPTATION COEFFICIENT KVNS
1
KVNS
$W_{ij}\ U_{ij}\ (j=1\sim4)$
$W_{i1}U_{i1}$
$W_{i4}U_{i4}$
$\sum_{j=1}^{4} W_{ij}U_{ij}$
$W_{i2}U_{i2}$
$W_{i3}U_{i3}$
COMPENSATION AMOUNT $U_{ij}(j=1\sim4)$
$U_{i1}$
$U_{i2}$
$U_{i3}$
$U_{i4}$
$WT_1$
$WT_2$
$WT_3$
$WT_4$
FIRST WEIGHTING FUNCTIONS WTi
$T_0$
$T_1$
$T_2$
$T_3$
$T_4$
$T_5$
CATALYST TEMPERATURE (DETECTED VALUE $T_{SCR}$)

FIG. 27

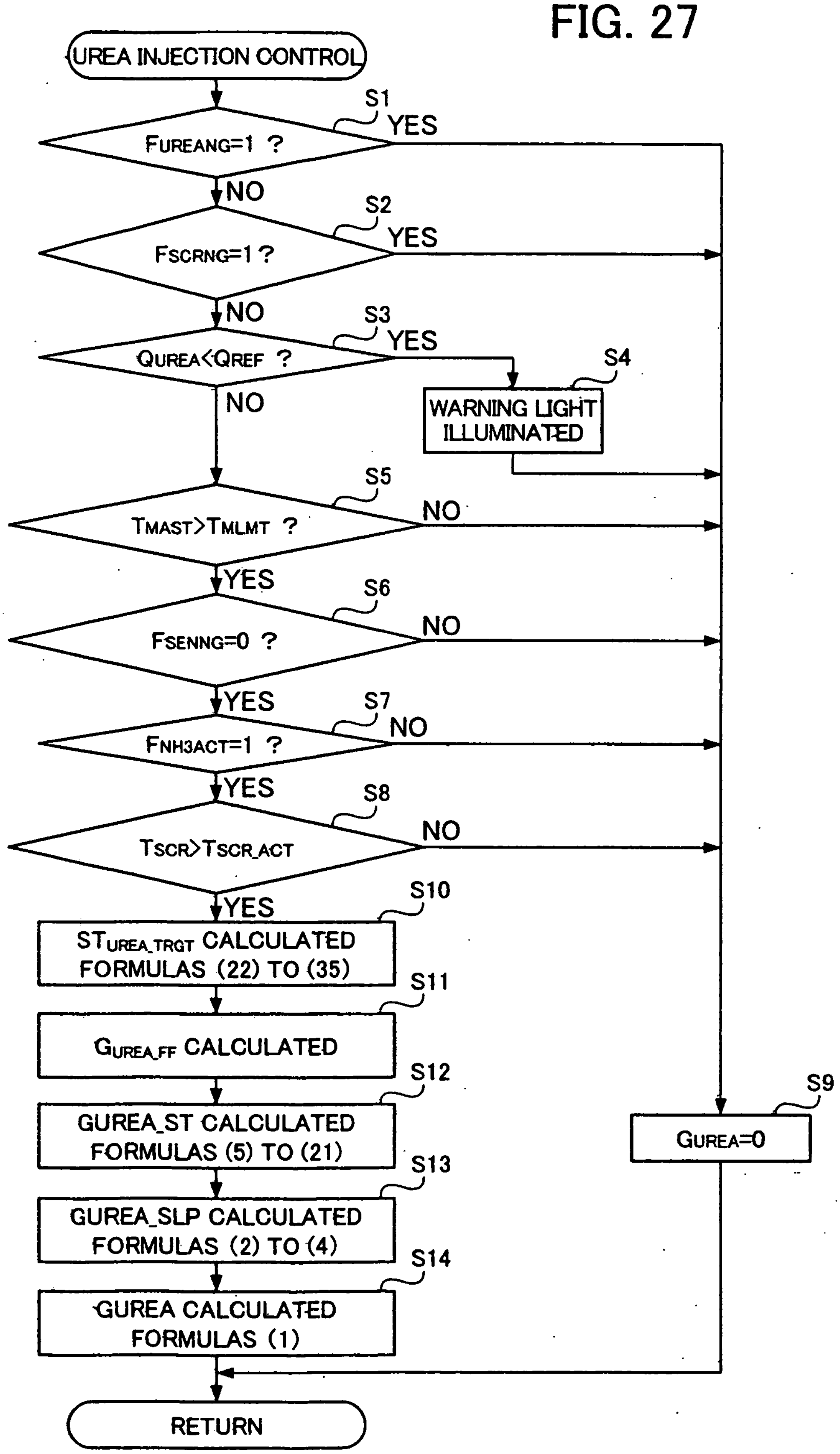

UREA INJECTION CONTROL
S1
FUREANG=1 ?
YES
NO
S2
FSCRNG=1 ?
YES
NO
S3
QUREA<QREF ?
YES
NO
S4
WARNING LIGHT ILLUMINATED
S5
TMAST>TMLMT ?
NO
YES
S6
FSENNG=0 ?
NO
YES
S7
FNH3ACT=1 ?
NO
YES
S8
TSCR>TSCR_ACT
NO
YES
S10
STUREA_TRGT CALCULATED FORMULAS (22) TO (35)
S11
GUREA_FF CALCULATED
S12
GUREA_ST CALCULATED FORMULAS (5) TO (21)
S13
GUREA_SLP CALCULATED FORMULAS (2) TO (4)
S14
GUREA CALCULATED FORMULAS (1)
S9
GUREA=0
RETURN

FIG. 28

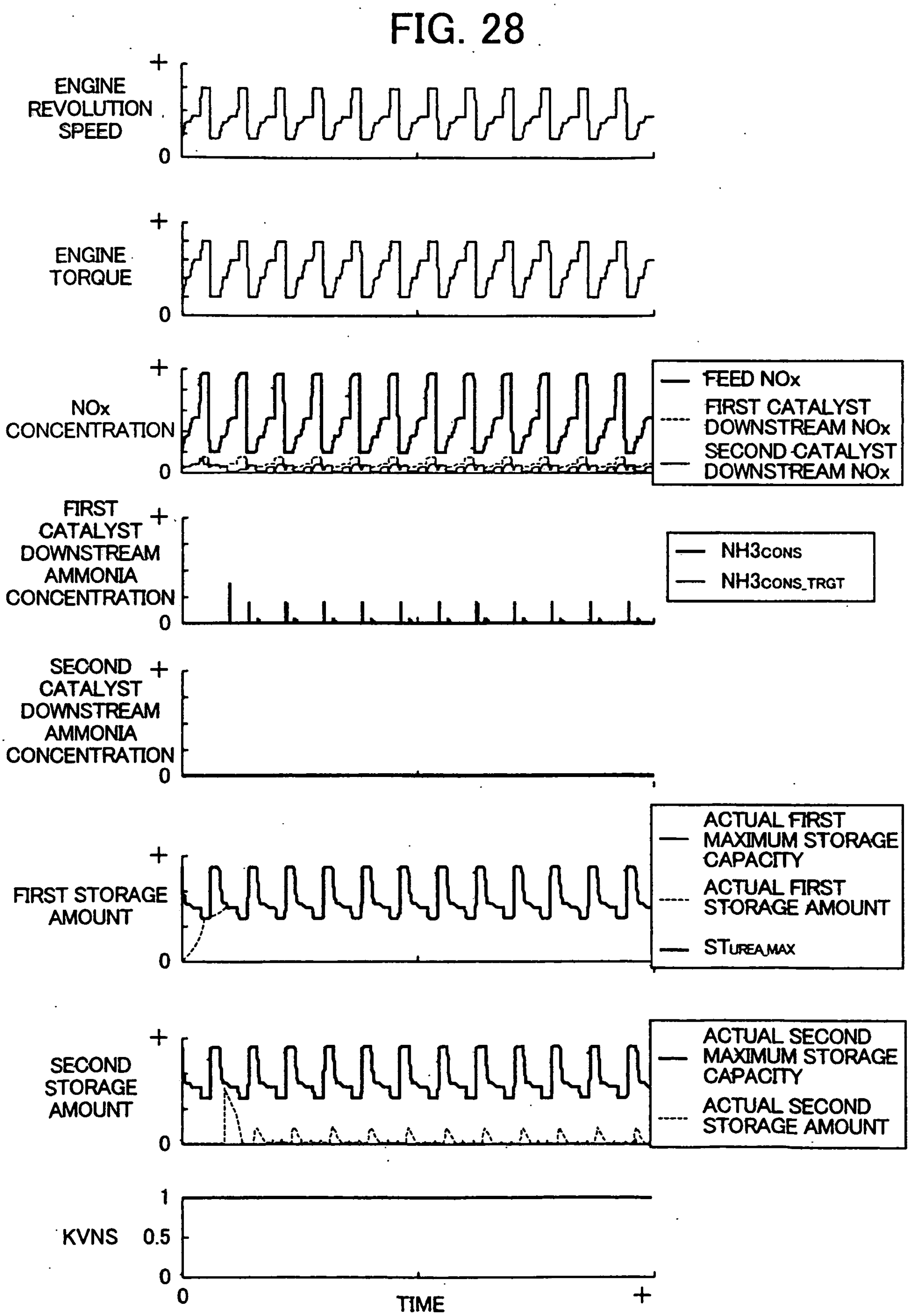
ENGINE REVOLUTION SPEED
ENGINE TORQUE
NOx CONCENTRATION
FEED NOx
FIRST CATALYST DOWNSTREAM NOx
SECOND CATALYST DOWNSTREAM NOx
FIRST CATALYST DOWNSTREAM AMMONIA CONCENTRATION
NH3CONS
NH3CONS_TRGT
SECOND CATALYST DOWNSTREAM AMMONIA CONCENTRATION
FIRST STORAGE AMOUNT
ACTUAL FIRST MAXIMUM STORAGE CAPACITY
ACTUAL FIRST STORAGE AMOUNT
STUREA_MAX
SECOND STORAGE AMOUNT
ACTUAL SECOND MAXIMUM STORAGE CAPACITY
ACTUAL SECOND STORAGE AMOUNT
KVNS
1
0.5
0
+
TIME

FIG. 29

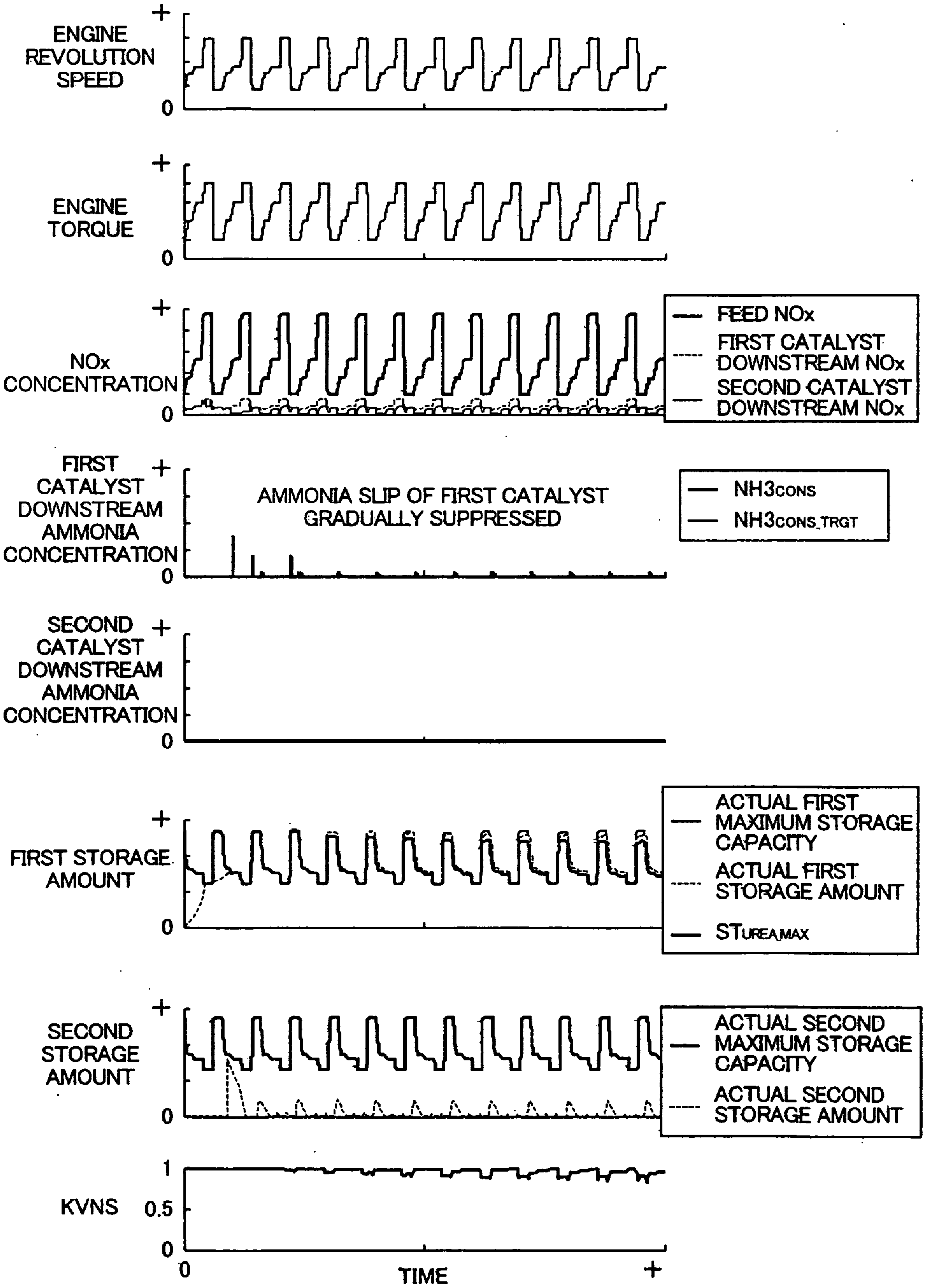
ENGINE REVOLUTION SPEED
ENGINE TORQUE
NOx CONCENTRATION
FEED NOx
FIRST CATALYST DOWNSTREAM NOx
SECOND CATALYST DOWNSTREAM NOx
FIRST CATALYST DOWNSTREAM AMMONIA CONCENTRATION
AMMONIA SLIP OF FIRST CATALYST GRADUALLY SUPPRESSED
NH3CONS
NH3CONS_TRGT
SECOND CATALYST DOWNSTREAM AMMONIA CONCENTRATION
FIRST STORAGE AMOUNT
ACTUAL FIRST MAXIMUM STORAGE CAPACITY
ACTUAL FIRST STORAGE AMOUNT
STUREA_MAX
SECOND STORAGE AMOUNT
ACTUAL SECOND MAXIMUM STORAGE CAPACITY
ACTUAL SECOND STORAGE AMOUNT
KVNS
1
0.5
0
TIME
+

FIG. 30

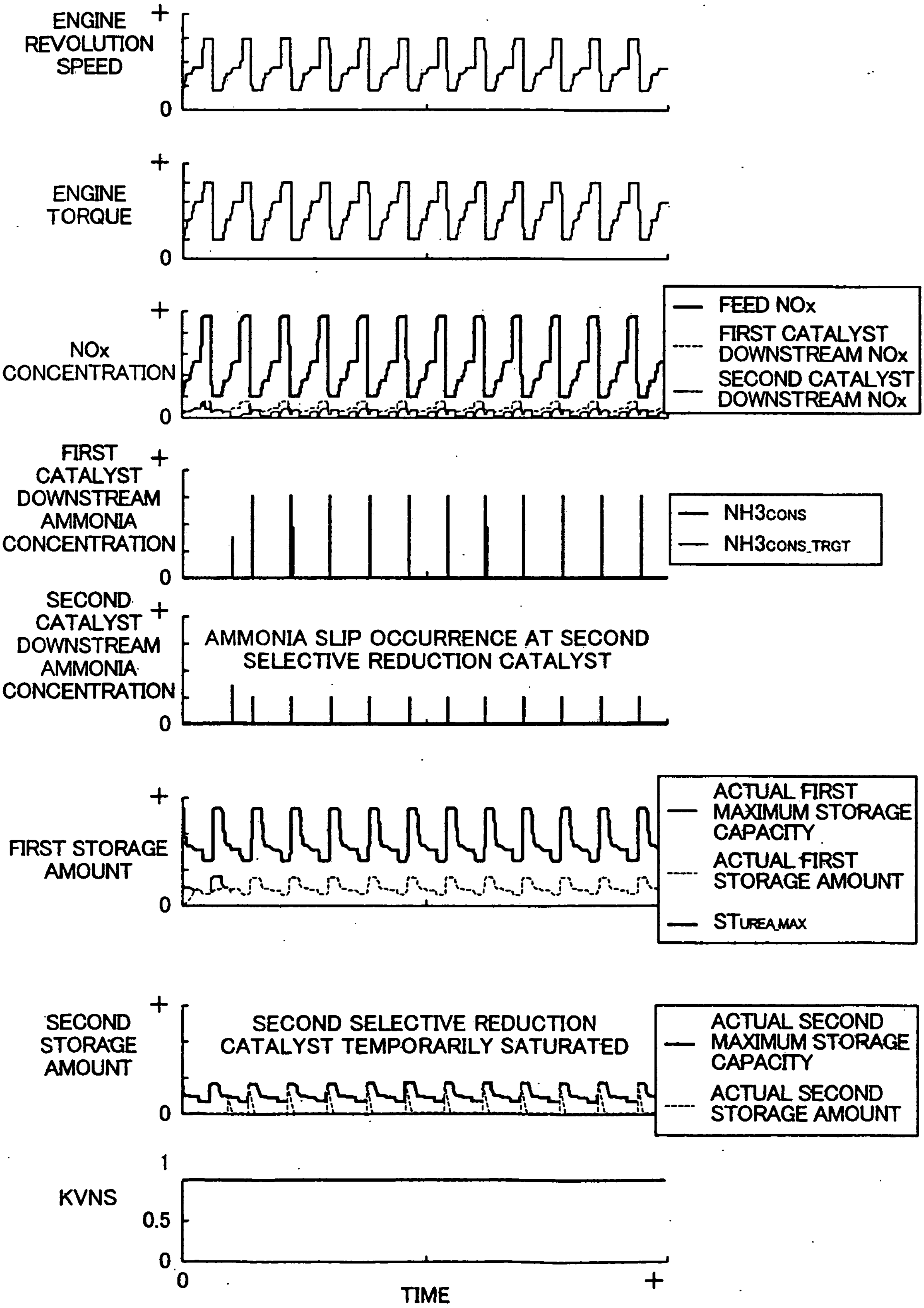
ENGINE REVOLUTION SPEED
ENGINE TORQUE
NOx CONCENTRATION
FEED NOx
FIRST CATALYST DOWNSTREAM NOx
SECOND CATALYST DOWNSTREAM NOx
FIRST CATALYST DOWNSTREAM AMMONIA CONCENTRATION
NH3CONS
NH3CONS_TRGT
SECOND CATALYST DOWNSTREAM AMMONIA CONCENTRATION
AMMONIA SLIP OCCURRENCE AT SECOND SELECTIVE REDUCTION CATALYST
FIRST STORAGE AMOUNT
ACTUAL FIRST MAXIMUM STORAGE CAPACITY
ACTUAL FIRST STORAGE AMOUNT
STUREA_MAX
SECOND STORAGE AMOUNT
SECOND SELECTIVE REDUCTION CATALYST TEMPORARILY SATURATED
ACTUAL SECOND MAXIMUM STORAGE CAPACITY
ACTUAL SECOND STORAGE AMOUNT
KVNS
1
0.5
0
+
TIME

FIG. 31

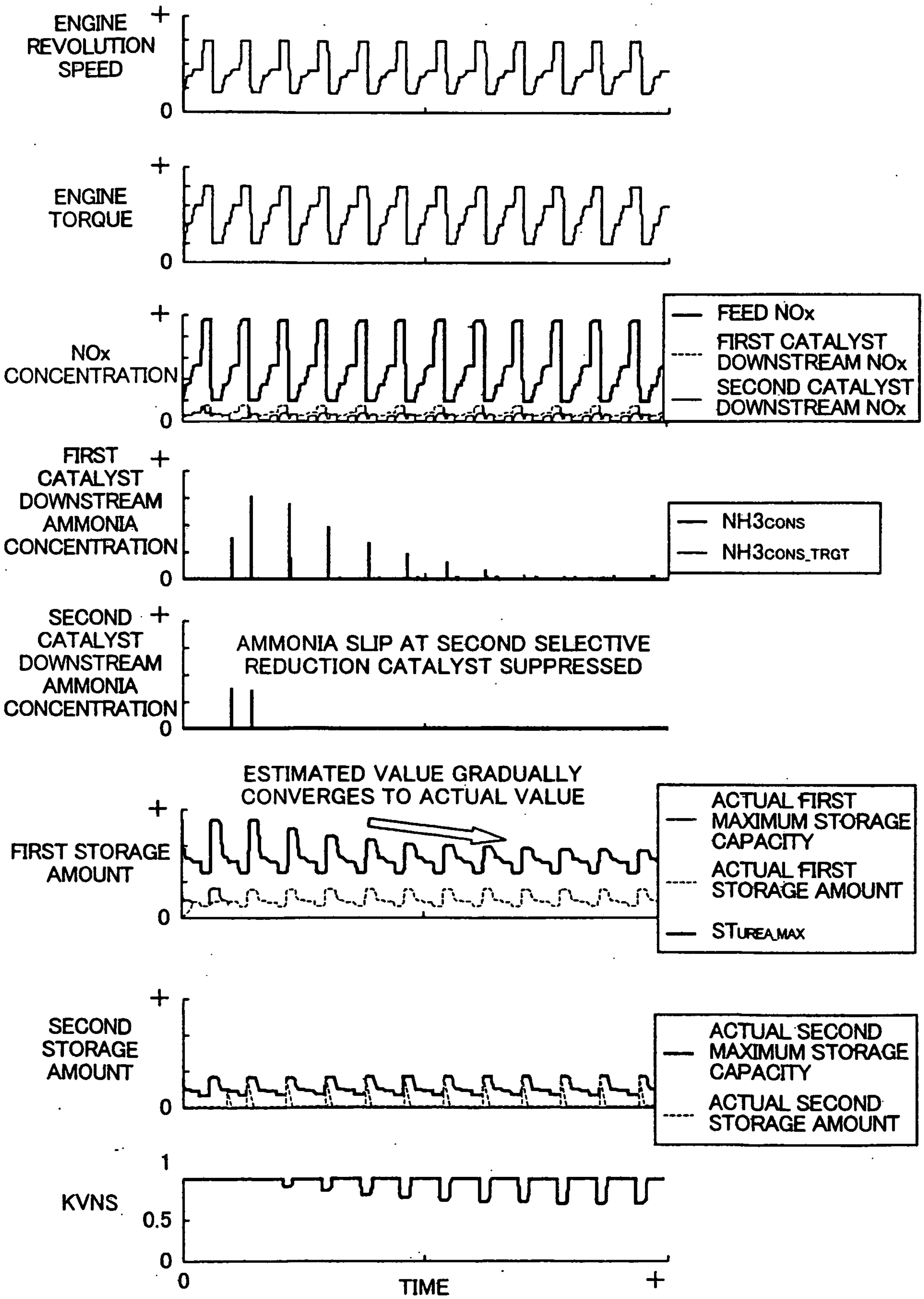
ENGINE REVOLUTION SPEED
ENGINE TORQUE
NOx CONCENTRATION
FEED NOx
FIRST CATALYST DOWNSTREAM NOx
SECOND CATALYST DOWNSTREAM NOx
FIRST CATALYST DOWNSTREAM AMMONIA CONCENTRATION
NH3CONS
NH3CONS_TRGT
SECOND CATALYST DOWNSTREAM AMMONIA CONCENTRATION
AMMONIA SLIP AT SECOND SELECTIVE REDUCTION CATALYST SUPPRESSED
ESTIMATED VALUE GRADUALLY CONVERGES TO ACTUAL VALUE
FIRST STORAGE AMOUNT
ACTUAL FIRST MAXIMUM STORAGE CAPACITY
ACTUAL FIRST STORAGE AMOUNT
STUREA_MAX
SECOND STORAGE AMOUNT
ACTUAL SECOND MAXIMUM STORAGE CAPACITY
ACTUAL SECOND STORAGE AMOUNT
KVNS
1
0.5
0
TIME
+

FIG. 32

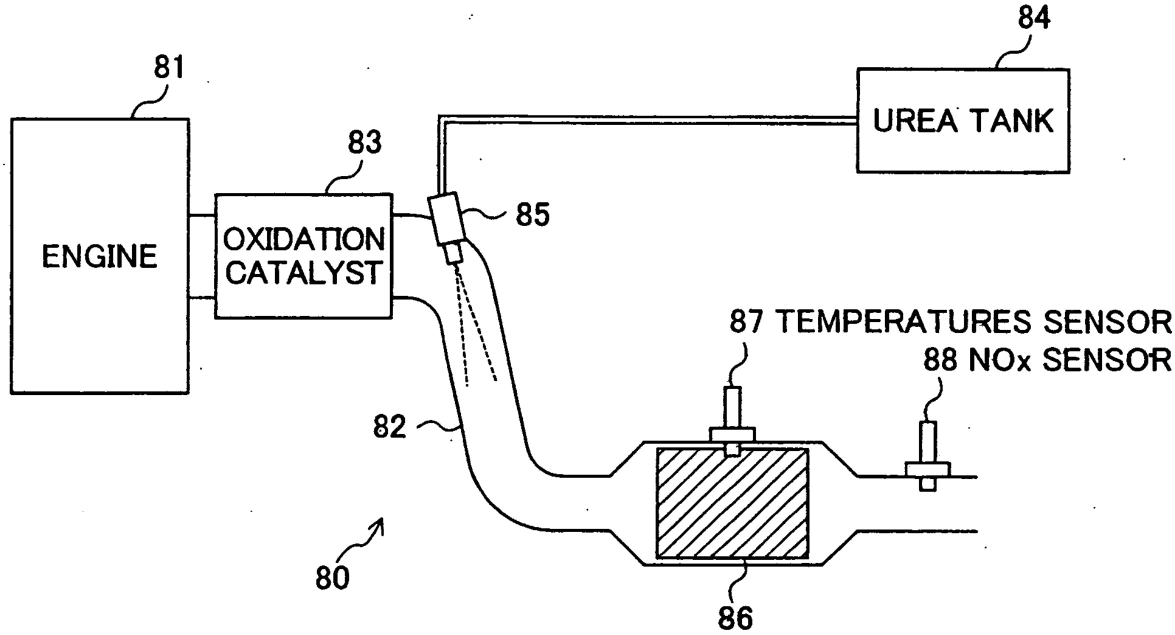
81
ENGINE
83
OXIDATION CATALYST
84
UREA TANK
85
87 TEMPERATURES SENSOR
88 NOx SENSOR
82
80
86

FIG. 33

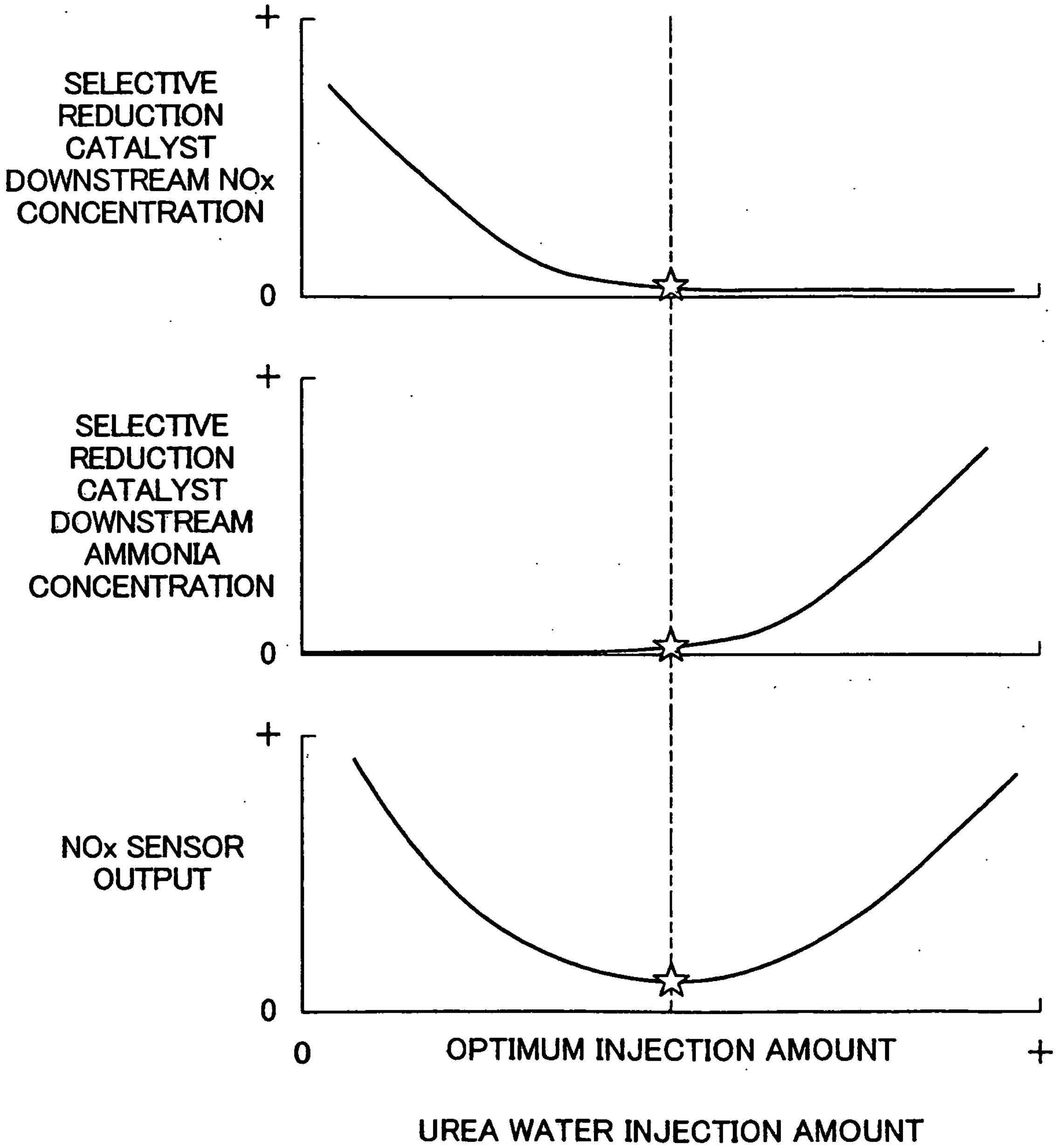
+
SELECTIVE REDUCTION CATALYST DOWNSTREAM NOx CONCENTRATION
0
+
SELECTIVE REDUCTION CATALYST DOWNSTREAM AMMONIA CONCENTRATION
0
+
NOx SENSOR OUTPUT
0
0
OPTIMUM INJECTION AMOUNT
+
UREA WATER INJECTION AMOUNT

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008240716 A
- WO 2009135021 A
- JP 2006274986 A
- JP 2004100700 A